# EUROPEAN PATENT SPECIFICATION

(11) **EP 1 093 268 B1**
(45) Date of publication and mention of the grant of the patent: **27.12.2006**
(21) Application number: 00308795.4
(22) Date of filing: 05.10.2000
(51) Int. Cl.: H04L 27/26, H04L 1/06

(54) **OFDM receiving apparatus**
OFDM Empfangsvorrichtung
Dispositif de réception OFDM

(30) Priority: 13.10.1999 JP 29169399; 20.12.1999 JP 36195499; 24.01.2000 JP 2000015057; 27.04.2000 JP 2000132858; 22.05.2000 JP 2000150665
(43) Date of publication of application: 18.04.2001
(73) Proprietor: ALPS ELECTRIC CO., LTD., Ota-ku Tokyo 145 (JP)
(72) Inventor: Otaki, Yukio, Alps Electric Co., Ltd., Ota-ku, Tokyo 145 (JP); Kitada, Kazutoshi, Alps Electric Co., Ltd., Ota-ku, Tokyo 145 (JP)
(74) Representative: Kensett, John Hinton

(56) References cited:
- EP-A- 0 876 031
- WO-A-96/08088
- US-A- 4 278 978
- PATENT ABSTRACTS OF JAPAN vol. 1998, no. 09, 31 July 1998 (1998-07-31) & JP 10 107777 A (JISEDAI DIGITAL TELEVISION HOSO SYST KENKYUSHO:KK), 24 April 1998 (1998-04-24)
- LEE S S ET AL: "TRELLIS-CODED OFDM SIGNAL DETECTION WITH MAXIMAL RATIO COMBINING AND COMBINED EQUALIZATION AND TRELLIS DECODING" IEICE TRANSACTIONS ON COMMUNICATIONS, INSTITUTE OF ELECTRONICS INFORMATION AND COMM. ENG. TOKYO, JP, vol. E80-B, no. 4, 1 April 1997 (1997-04-01), pages 632-638, XP000721839 ISSN: 0916-8516
- YAMAMURA T ET AL: "High mobility OFDM transmission system by a new channel estimation and ISI cancellation scheme using characteristics of pilot symbol inserted OFDM signal" VEHICULAR TECHNOLOGY CONFERENCE, 1999. VTC 1999 - FALL. IEEE VTS 50TH AMSTERDAM, NETHERLANDS 19-22 SEPT. 1999, PISCATAWAY, NJ, USA,IEEE, US, 19 September 1999 (1999-09-19), pages 319-323, XP010352958 ISBN: 0-7803-5435-4

## Description

### BACKGROUND OF THE INVENTION

### 1. Field of the Invention

The present invention relates to a receiving apparatus for receiving orthogonal frequency division multiplexing (OFDM)-modulated signals used in, for example, terrestrial digital television (TV) broadcasts in Japan or Europe.

### 2. Description of the Related Art

As a transmission (modulation) method for digital audio signals and digital video signals frequently used in terrestrial digital TV broadcasts, a multi-carrier modulation method by using OFDM is being put into practical use. In a broadcast system according to this modulation method, coded data is divided into a thousand to a few thousand carrier waves, which are then multiplexed and transmitted.

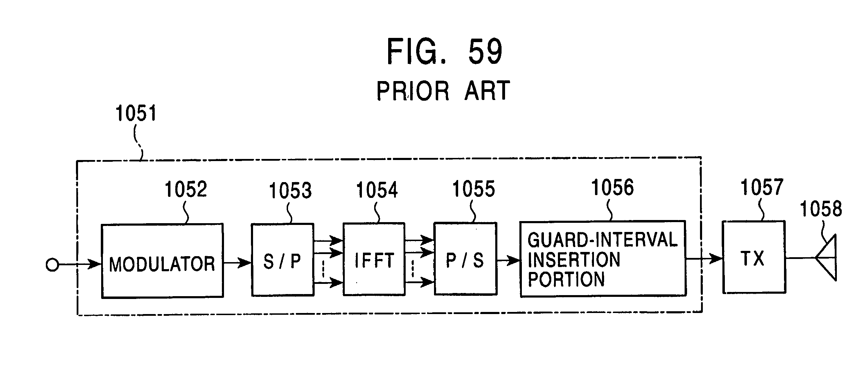

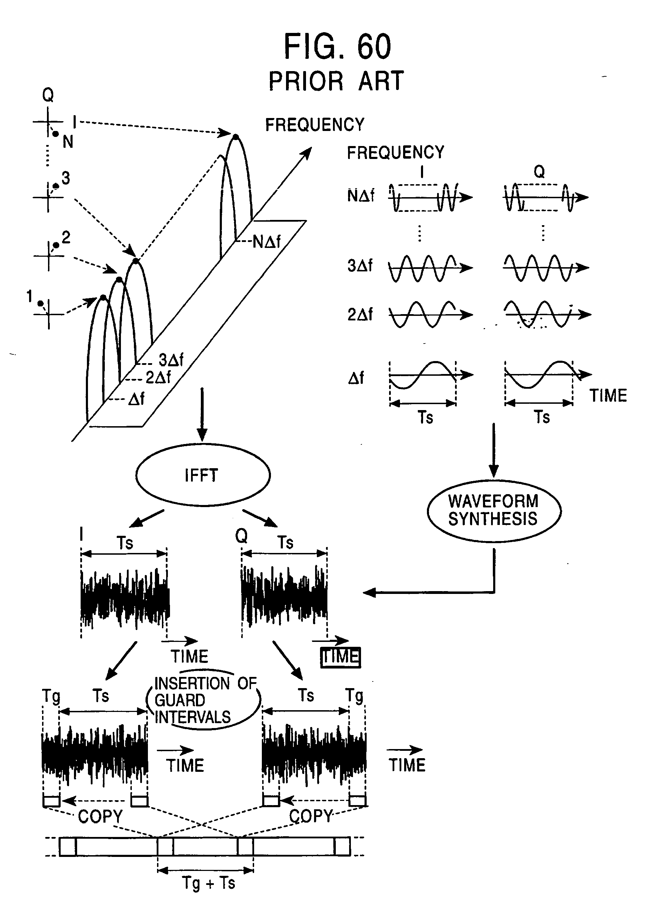

Fig. 59 is a block diagram illustrating the configuration of an OFDM transmitting apparatus. Fig. 60 illustrates the concept of an OFDM modulation process.

In Fig. 59, the OFDM transmitting apparatus is formed of an OFDM modulation unit 1051, a transmitter (TX) 1057, and an antenna 1058. The OFDM modulation unit 1051 includes a modulator 1052 for performing modulation, such as quadrature phase shift keying (QPSK), on an input digital signal, a serial-to-parallel (S/P) converter 1053 for converting a modulated serial signal into a parallel signal, an inverted fast Fourier transform (IFFT) processor 1054 for performing IFFT processing on the converted parallel signal, a parallel-to-serial (P/S) converter 1055 for converting the IFFT signal into a serial signal and for outputting it as a time-domain signal, and a guard-interval inserting portion 1056 for inserting guard intervals into the converted signal.

In the OFDM transmitter constructed as described above, the input digital signal is first modulated by the modulator 1052 according to a predetermined modulation method (for example, the QPSK modulation method). Resulting modulated symbols are then converted, as shown in Fig. 60, into a slower modulated symbol sequence, i.e., a modulated symbol sequence having N carrier waves which are located with a constant frequency interval (Δf) and are orthogonal to each other, by the S/P converter 1053. This modulated symbol sequence then undergoes IFFT processing by the IFFT processor 1054, and is further synthesized by the P/S converter 1055, thereby generating in-phase components (hereinafter sometimes referred to as "I") and quadrature components (hereinafter sometimes referred to as "Q") of an orthogonal time-domain signal.

Then, a predetermined period at the end of each effective symbol period Ts is copied and inserted into the head of the corresponding I component and the corresponding Q component of the time-domain signal as a guard interval time Tg by the guard-interval inserting portion 1056. This is a so-called guard interval. Thus, a time-domain signal with the guard intervals is generated from the guard-interval inserting portion 1056 as a baseband time-sequence signal.

The guard interval is inserted for taking precautions against delayed wave interference occurring during the reception of signals, and serves as a symbol which absorbs intersymbol interference caused by the relative delay of signals in multipath environments.

A time-domain signal having a (Tg + Ts) period is used as a unit of an OFDM symbol. The guard intervals inserted in the time-domain signal are removed when the signal is received, and only the signal having a Ts period is extracted as an effective symbol signal and is demodulated.

The baseband signal time-sequence signal generated by the guard-interval inserting portion 1056 is superposed on a predetermined carrier wave in the transmitter (TX) 1057 provided with a digital-to-analog (D/A) converter (not shown), and is amplified and then radiated into space from the antenna 1058.

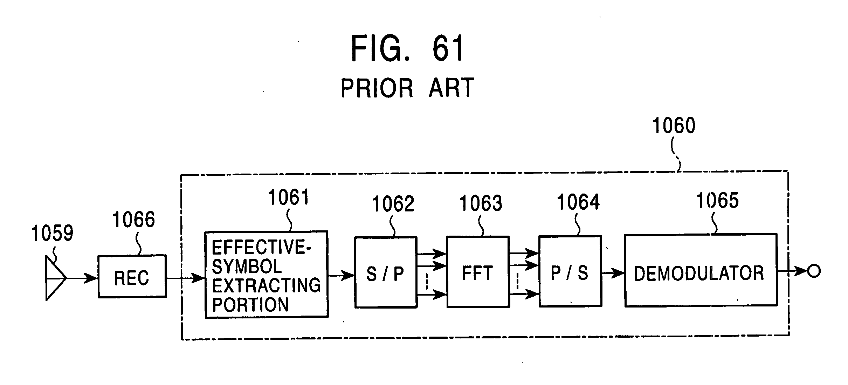

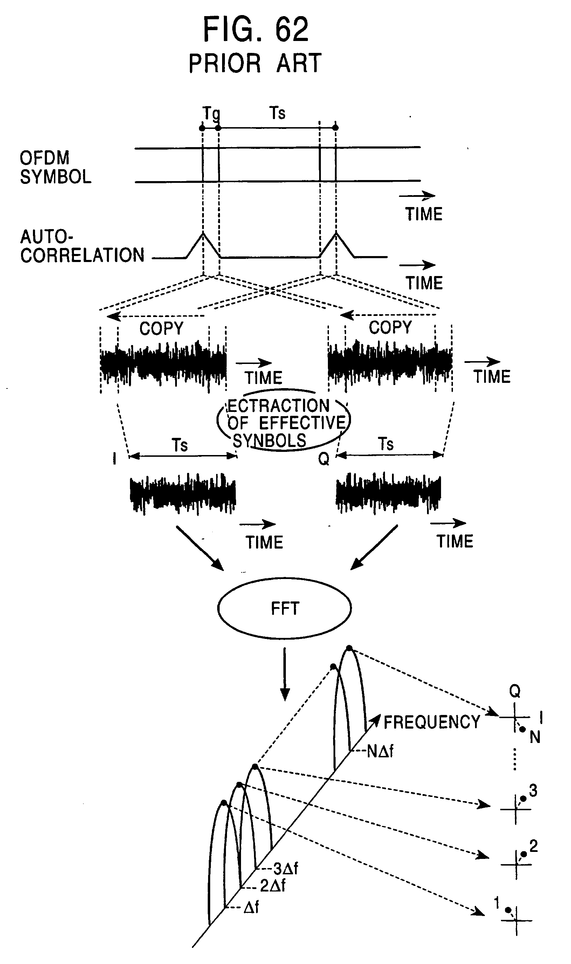

Fig. 61 is a block diagram illustrating the basic configuration of an OFDM receiving apparatus. Fig. 62 illustrates the concept of an OFDM demodulation process.

In Fig. 61, the OFDM receiving apparatus is formed of an antenna 1059, a receiver (REC) 1066, and an OFDM demodulation unit 1060. The OFDM demodulation unit 1060 includes an effective-symbol extracting portion 1061 for removing the guard intervals from the received signal and for extracting the effective symbol signal, a serial-to-parallel (S/P) converter 1062 for converting the effective symbol signal into a parallel signal, a fast Fourier transform (FFT) processor 1063 for performing FFT processing on the parallel signal, a parallel-to-serial (P/S) converter 1064 for converting the FFT signal into a serial signal, and a demodulator 1065.

In Fig. 61, a radio wave received by the antenna 1059 is amplified and is frequency-converted by the receiver (REC) 1066, and is further output from an A/D converter (not shown) as a digital baseband time-sequence signal. Then, the baseband time-sequence signal is demodulated into a digital signal by the OFDM demodulation unit 1060.

In the OFDM demodulation unit 1060, as shown in Figs. 61 and 62, the effective-symbol extracting portion 1061 refers to the received OFDM symbols and perform a calculation to obtain the sum of the products of the Tg periods of the two adjacent OFDM symbols which are displaced from each other by a Ts period so as to generate an auto-correlation signal. Then, the auto-correlation signal is set to be a reference signal. Subsequently, the peak (maximum value) of the reference signal (auto-correlation signal) of the OFDM symbol is detected, and the guard interval is removed based on the peak of the auto-correlation signal, thereby extracting effective symbols I and Q.

Then, the effective symbol signal is converted into a parallel signal by the S/P converter 1062, and the converted parallel signal undergoes FFT processing by the FFT processor 1063, thereby extracting the N modulated symbols which are located with a frequency interval Δf. The extracted modulated symbols are then converted into a serial time-sequence signal by the P/S converter 1064, which is then demodulated into a digital signal by the demodulator 1065 according to a predetermined demodulation method.

As described above, the peak (maximum value) of the reference signal (auto-correlation signal) of the received OFDM symbols is detected, and then, the effective symbols are extracted based on the peak of the auto-correlation signal. Thus, if the reference signal is not accurately detected, the extracted effective symbol disadvantageously contains the adjacent OFDM symbol data, resulting in the occurrence of bit errors.

When OFDM modulated broadcast signals are received in mobile communication environments, for example, in an automobile, the reference signal cannot be accurately generated due to the influence of fading, also resulting in the occurrence of bit errors. Accordingly, diversity reception is employed in mobile communication so as to inhibit drift of the signal level.

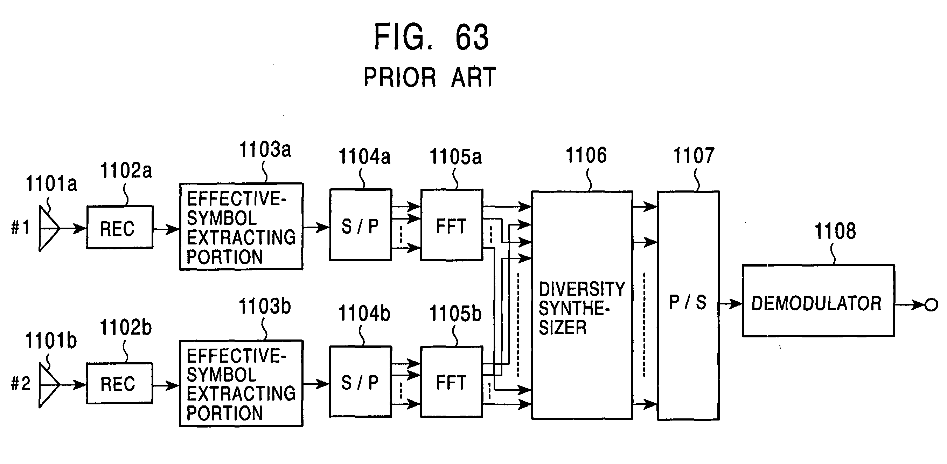

The configuration of a conventional OFDM receiving apparatus designed to avoid the above-described influence of fading in mobile communication environments is shown in Fig. 63. For simple representation, the OFDM receiving apparatus provided with two receiving systems having different types of antennas is shown in Fig. 63.

In the OFDM receiving apparatus shown in Fig. 63, an antenna 1101a (1101b), a receiver (REC) 1102a (1102b), an effective-symbol extracting portion 1103a (1103b), a S/P converter 1104a (1104b), and a FFT processor 1105a (1105b) are configured similarly to those of the OFDM receiving apparatus shown in Fig. 61.

However, in the OFDM receiving apparatus shown in Fig. 63, after the FFT processor 1105a (1105b), a diversity synthesizer 1106, a P/S converter 1107, and a demodulator 1108 are sequentially provided.

In the above-configured OFDM receiving apparatus, a signal received by the antenna 1101a is amplified in the receiver (REC) 1102a. Then, guard symbols are removed by detecting the peak of the auto-correlation signal in the effective-symbol extracting portion 1103a, thereby extracting an effective symbol signal. Then, the effective symbol signal is converted into a parallel signal in the S/P converter 1104a and undergoes FFT processing in the FFT processor 1105a. The modulated symbols are then output to the diversity synthesizer 1106.

Similarly, a signal received by the antenna 1101b is amplified in the receiver (REC) 1102b. Then, guard symbols are removed by detecting the peak of the auto-correlation signal in the effective-symbol extracting portion 1103b, thereby extracting an effective symbol signal. Then, the effective symbol signal is converted into a parallel signal in the S/P converter 1104b and undergoes FFT processing in the FFT processor 1105b. The modulated symbols (carrier waves) are then output to the diversity synthesizer 1106.

The diversity synthesizer 1106 compares the level of each carrier wave of one receiving system with that of the corresponding carrier wave of the other receiving system, and selects a carrier wave having a greater level. The modulated symbols of the selected carrier waves are then output to the P/S converter 1107. In the P/S converter 1107, the modulated symbols are converted into a serial signal, which is then demodulated into a digital signal by the demodulator 1108.

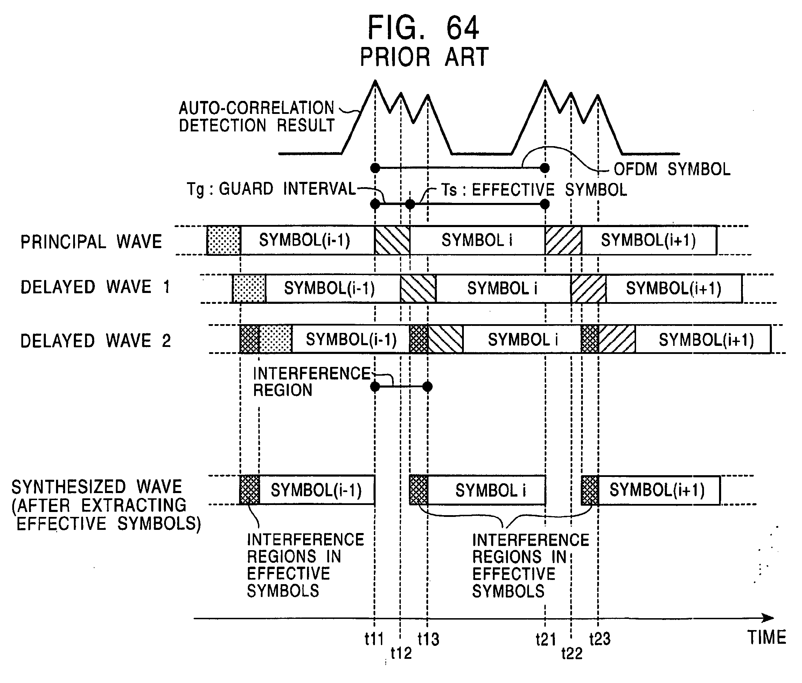

Fig. 64 illustrates intersymbol interference occurring in an OFDM modulated signal containing delay signals. In the example shown in Fig. 64, two delayed waves are input. Relative to a principal wave, for delayed wave 1 having a delay period shorter than the guard interval time, interference occurs in the guard interval symbols, but not in the effective symbols. On the other hand, for delayed wave 2 having a delay period longer than the guard interval time, interference occurs in the effective symbols, causing an incorrect demodulated result.

Particularly in vehicle-mounted OFDM receiving apparatuses, a signal having a longer delay period may be generated while moving in a vehicle depending on the surrounding environment (such as buildings, road conditions, etc.), thereby encouraging the occurrence of demodulation errors compared to fixed reception.

In the above-described OFDM receiving apparatus shown in Fig. 63, the effective-symbol extracting portion 1103a (1103b) is provided before the diversity synthesizer 1106. Accordingly, a reference signal (auto-correlation signal) is determined for each of the antennas, and based on the peak of each reference signal, the effective symbols are extracted. Thus, upon the occurrence of fading, the level of the received signal sharply fluctuates, thereby failing to accurately detect the reference signal. This further encourages the occurrence of noise, thereby making it difficult to precisely extract effective symbols. As a result, bit errors are increased.

Additionally, the FFT circuit is as large as the demodulation circuit. When a diversity reception system provided with many antennas is formed, the same number of FFT circuits as that of antennas is required, thereby enlarging the entire circuitry and making the overall receiving apparatus complicated.

In the aforementioned OFDM receiving apparatuses, if a delayed wave having a delay time longer than a guard interval time (Tg) of the OFDM symbols is contained in effective symbols, interference occurs between adjacent effective symbols upon performing diversity reception, thereby increasing bit errors after the effective symbol signal is demodulated.

Further prior art arrangements are known from JP10107777, XP000721839, XP010352958 and US4278978. JP10107777 discloses an OfDM receiving apparatus comprising: a plurality of separately disposed antennas for receiving OFDM modulated signals; a plurality of receiving means, each of said receiving means being connected to the corresponding antenna; diversity synthesizing means for combining output signals from said plurality of receiving means to a synthesized signal; and OFDM demodulation means.

### SUMMARY OF THE INVENTION

Accordingly, in view of the above background, it is an object of the present invention to provide a diversity-reception OFDM receiving apparatus used for receiving OFDM modulated broadcast signals in mobile environments, in which an effective symbol signal can be extracted from a signal having a high carrier-to-noise (C/N) ratio by disposing a diversity synthesizer before an effective-symbol extracting portion.

It is another object of the present invention to provide a diversity-reception OFDM receiving apparatus in which an effective symbol signal with a sufficient level of intensity and without a delayed wave having a delay period longer than a guard interval time can be extracted by disposing a diversity synthesizer and a delay equalizer before a FFT processor.

It is still another object of the present invention to provide an OFDM receiving apparatus in which a low-powered delay equalizer is implemented by delaying an OFDM modulated signal before demodulating it.

In order to achieve the above objects, according to the present invention, there is provided an OFDM receiving apparatus as detailed in the appended claims.

### BRIEF DESCRIPTION OF THE DRAWINGS

Fig. 1 is a block diagram illustrating a diversity-reception OFDM receiving apparatus according to a first embodiment of the present invention;
Fig. 2 is a block diagram illustrating a first example of the configuration of a diversity synthesizer used in the OFDM receiving apparatus shown in Fig. 1;
Fig. 3 is a block diagram illustrating a second example of the configuration of the diversity synthesizer used in the OFDM receiving apparatus shown in Fig. 1;
Fig. 4 is a block diagram illustrating a third example of the configuration of the diversity synthesizer used in the OFDM receiving apparatus shown in Fig. 1;
Fig. 5 is a block diagram illustrating a fourth example of the configuration of the diversity synthesizer used in the OFDM receiving apparatus shown in Fig. 1;
Fig. 6 is a block diagram illustrating a fifth example of the configuration of the diversity synthesizer used in the OFDM receiving apparatus shown in Fig. 1;
Fig. 7 is a block diagram illustrating an example of the configuration of an auto-correlation detector used in the diversity synthesizers shown in Figs. 3 through 6;
Fig. 8 is a block diagram illustrating an example of the configuration of a cross-correlation detector used in the diversity synthesizer shown in Figs. 2 through 6;
Fig. 9 illustrates the concept of the diversity synthesizing process in the OFDM receiving apparatus shown in Fig. 1;
Fig. 10 is a block diagram illustrating the configuration of an OFDM receiving apparatus according to a second embodiment of the present invention;
Fig. 11 is a block diagram illustrating the specific configuration of a signal synthesizer used in the OFDM receiving apparatus shown in Fig. 10;
Fig. 12 is a block diagram illustrating the specific configuration of a delay equalizer used in the OFDM receiving apparatus shown in Fig. 10;
Fig. 13 is a block diagram illustrating the specific configuration of a cross-correlation detector used in the OFDM receiving apparatus shown in Fig. 10;
Fig. 14 is a block diagram illustrating the specific configuration of an auto-correlation detector used in the OFDM receiving apparatus shown in Fig. 10;
Fig. 15 illustrates the relationship between the data configuration of an OFDM modulated signal and an auto-correlation detection signal;
Fig. 16 illustrates the influence of delayed waves contained in the OFDM modulated signal on effective symbols of the synthesized wave;
Fig. 17 is a block diagram illustrating the configuration of an OFDM receiving apparatus according to a third embodiment of the present invention;
Fig. 18 is a block diagram illustrating the specific configuration of a delay equalizer used in the OFDM receiving apparatus shown in Fig. 17;
Fig. 19 is a block diagram illustrating the configuration of an OFDM receiving apparatus according to a fourth embodiment of the present invention;
Fig. 20 is a block diagram illustrating the specific configuration of a signal synthesizer used in the OFDM receiving apparatus shown in Fig. 19;
Fig. 21 is a block diagram illustrating the configuration of an OFDM receiving apparatus according to a fifth embodiment of the present invention;
Fig. 22 is a block diagram illustrating the configuration of an OFDM receiving apparatus according to a sixth embodiment of the present invention;
Fig. 23 is a block diagram illustrating the specific configuration of a delay equalizer used in the OFDM receiving apparatus shown in Fig. 22;
Fig. 24 is a block diagram illustrating the specific configuration of a signal synthesizer used in the OFDM receiving apparatus shown in Fig. 22;
Fig. 25 is a block diagram illustrating the specific configuration of an auto-correlation detector used in the OFDM receiving apparatus shown in Fig. 22;
Fig. 26 is a block diagram illustrating the specific configuration of a cross-correlation detector used in the OFDM receiving apparatus shown in Fig. 22;
Fig. 27 illustrates the data configuration of an OFDM modulated signal and an auto-correlation detection signal;
Fig. 28 illustrates the influence of delayed waves of the OFDM modulated signal on effective symbols of the synthesized wave;
Fig. 29 is a block diagram illustrating the configuration of an OFDM receiving apparatus according to a seventh embodiment of the present invention;
Fig. 30 is a block diagram illustrating the configuration of an OFDM receiving apparatus according to an eighth embodiment of the present invention;
Fig. 31 is a block diagram illustrating the specific configuration of a signal synthesizer used in the OFDM receiving apparatuses shown in Figs. 29 and 30;
Fig. 32 is a block diagram illustrating the configuration of an OFDM receiving apparatus according to a ninth embodiment of the present invention;
Fig. 33 is a block diagram illustrating the configuration of an OFDM receiving apparatus according to a tenth embodiment of the present invention;
Fig. 34 is a block diagram illustrating the specific configuration of an auto-correlation detector used in the OFDM receiving apparatus shown in Fig. 33;
Fig. 35 is a block diagram illustrating the specific configuration of a delay equalizer used in the OFDM receiving apparatus shown in Fig. 33;
Fig. 36 is a block diagram illustrating the specific configuration of a power detector of a power comparator device used in the OFDM receiving apparatus shown in Fig. 33;
Fig. 37 is a block diagram illustrating the specific configuration of a comparator of the power comparator device used in the OFDM receiving apparatus shown in Fig. 33;
Fig. 38 illustrates the relationship between errors of the delay period in the delay equalizer shown in Fig. 33 and the input/output power difference;
Figs. 39A and 39B illustrate the phase locus of QPSK demodulated symbols obtained after performing OFDM demodulation in an OFDM demodulation unit shown in Fig. 33;
Fig. 40 illustrates examples of signal waveforms generated in the OFDM receiving apparatus shown in Fig. 33;
Fig. 41 illustrates examples of signal waveforms generated in the OFDM receiving apparatus shown in Fig. 33;
Fig. 42 is a block diagram illustrating the configuration of an OFDM receiving apparatus according to an eleventh embodiment of the present invention;
Fig. 43 is a block diagram illustrating the specific configuration of an auto-correlation detector used in the OFDM receiving apparatus shown in Fig. 42;
Fig. 44 is a block diagram illustrating the specific configuration of a delay equalizer used in the OFDM receiving apparatus shown in Fig. 42;
Fig. 45 is a block diagram illustrating the configuration of an OFDM receiving apparatus according to a twelfth embodiment of the present invention;
Fig. 46 is a block diagram illustrating the configuration of an OFDM receiving apparatus according to a thirteenth embodiment of the present invention;
Fig. 47 is a block diagram illustrating the configuration of an OFDM receiving apparatus according to a fourteenth embodiment of the present invention;
Fig. 48 is a block diagram illustrating the configuration of an OFDM receiving apparatus according to a fifteenth embodiment of the present invention;
Fig. 49 is a block diagram illustrating the configuration of an OFDM receiving apparatus according to a sixteenth embodiment of the present invention;
Fig. 50 is a block diagram illustrating the configuration of an OFDM receiving apparatus according to a seventeenth embodiment of the present invention;
Fig. 51 is a block diagram illustrating the configuration of an OFDM receiving apparatus according to an eighteenth embodiment of the present invention;
Fig. 52 is a waveform diagram illustrating an example of the auto-correlation detection signal output from the auto-correlation detector;
Figs. 53A and 53B are waveform diagrams illustrating output data from an OFDM demodulation unit obtained from a principal wave and a delayed wave, respectively, when the signals bypass the input/output terminals of a delay equalizer shown in Fig. 42;
Figs. 54A and 54B are waveform diagrams illustrating output data from the OFDM demodulation unit obtained from the OFDM modulated signal containing a principal wave and a delayed wave when the signals bypass the input/output terminals of the delay equalizer shown in Fig. 42;
Fig. 55 is a block diagram illustrating the specific configuration of a delay-signal level determining portion shown in Fig. 44;
Fig. 56 is a waveform diagram illustrating an example of an auto-correlation detection signal output from an auto-correlation detector shown in Fig. 42;
Fig. 57 is a diagram illustrating the relationship between the level difference of the auto-correlation value and the control signal C used in a comparator shown in Fig. 61;
Fig. 58 illustrates the relationship between the margin level used in Fig. 57 and the OFDM demodulated symbols;
Fig. 59 is a block diagram illustrating the configuration of a conventional OFDM transmitting apparatus;
Fig. 60 illustrates the concept of an OFDM modulation process;
Fig. 61 is a block diagram illustrating the configuration of a conventional OFDM receiving apparatus;
Fig. 62 illustrates the concept of a conventional OFDM demodulation process;
Fig. 63 is a block diagram illustrating the configuration of a conventional diversity-reception OFDM receiving apparatus; and
Fig. 64 illustrates intersymbol interference in an OFDM modulated signal containing delayed signals.

### DESCRIPTION OF THE PREFERRED EMBODIMENTS

The present invention is described in detail below with reference to the accompanying drawings through illustrations of preferred embodiments.

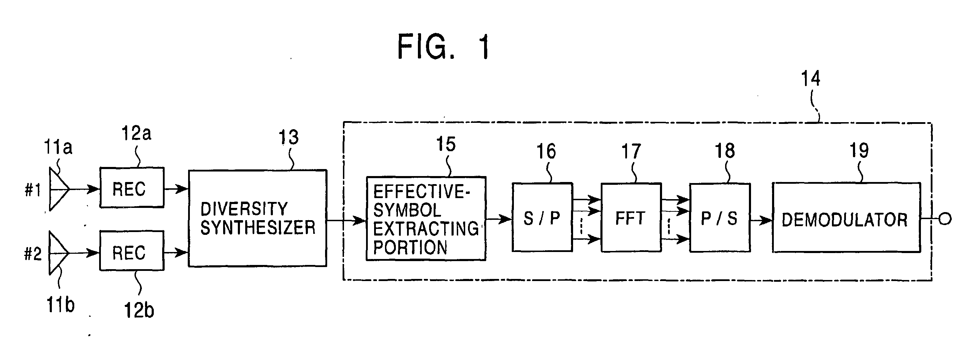

Fig. 1 illustrates the configuration of an OFDM receiving apparatus according to a first embodiment of the present invention. In this OFDM receiving apparatus, two antennas are provided. The OFDM receiving apparatus shown in Fig. 1 differs from the counterpart shown in Fig. 63 in that a diversity synthesizer is disposed before an effective-symbol extracting portion so that diversity synthesizing is performed prior to the extraction of effective symbols. That is, only one system consisting of the effective-symbol extracting portion, a S/P converter, and a FFT processor is provided. The other configurations of the OFDM receiving apparatus are similar to those of the conventional OFDM receiving apparatus shown in Fig. 63.

The OFDM receiving apparatus shown in Fig. 1 includes antennas 11a and 11b for receiving a #1-type OFDM modulated signal and a #2-type OFDM modulated signal, respectively, receivers 12a and 12b, a diversity synthesizer 13 for combining output signals of the receivers 12a and 12b according to a predetermined diversity method, and an OFDM demodulation unit 14.

The OFDM demodulation unit 14 is formed of an effective-symbol extracting portion 15, an S/P converter 16, an FFT processor 17, a P/S converter 18, and a demodulator 19.

In the above-configured OFDM receiving apparatus, signals received by the antennas 11a and 11b are amplified and frequency-converted by the receivers 12a and 12b, respectively, into baseband signals. The baseband signals are then input into the diversity synthesizer 13 as a #1-type signal and a #2-type signal, and are combined under diversity synthesizing.

In the OFDM demodulation unit 14, the effective-symbol extracting portion 15 extracts effective symbols from the diversity synthesized signal output from the diversity synthesizer 13 by detecting the peak of the auto-correlation signal (maximum auto-correlation value). Then, the effective symbol signal is converted into a parallel signal by the S/P converter 16. The parallel signal then undergoes FFT processing by the FFT processor 17, and the FFT signal is further converted into a serial signal by the P/S converter 18. Subsequently, the serial signal is demodulated into a digital signal by the demodulator 19.

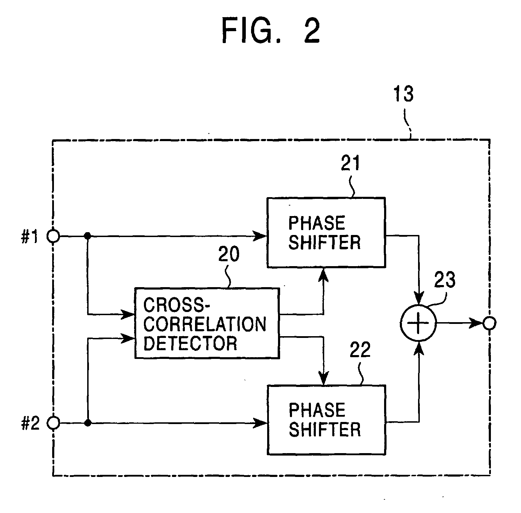

A first example of the configuration of the diversity synthesizer 13 illustrated in Fig. 1 is shown in Fig. 2. In this diversity synthesizer, an input #1-type signal and an input #2-type signal are adjusted to be in phase with each other based on the cross correlation value of the two signals before being combined.

The diversity synthesizer 13 shown in Fig. 2 includes a cross-correlation detector 20 for detecting a cross correlation value between the output signals from the receivers 12a and 12b, phase shifters 21 and 22, which are provided at the output terminals of the receivers 12a and 12b, respectively, phase-shifts the output signals from the receivers 12a and 12b by a predetermined amount of phase based on the detection result of the cross-correlation detector 20, and a signal synthesizing portion 23 for combining the signals of the phases shifted by the phase shifters 21 and 22.

In the diversity synthesizer 13 configured as described above, a cross-correlation value between the output signals from the receivers 12a and 12b is detected by the cross-correlation detector 20. Then, the output signals from the receivers 12a and 12b are adjusted by a predetermined amount of phase by the phase shifters 21 and 22 based on the detection result (cross-correlation value) of the cross-correlation detector 20 so that they are in phase with each other. The resulting signals are then combined to be a synthesized signal by the signal synthesizing portion 23. According to the first example of the diversity synthesizer 13, signal power can be maximized.

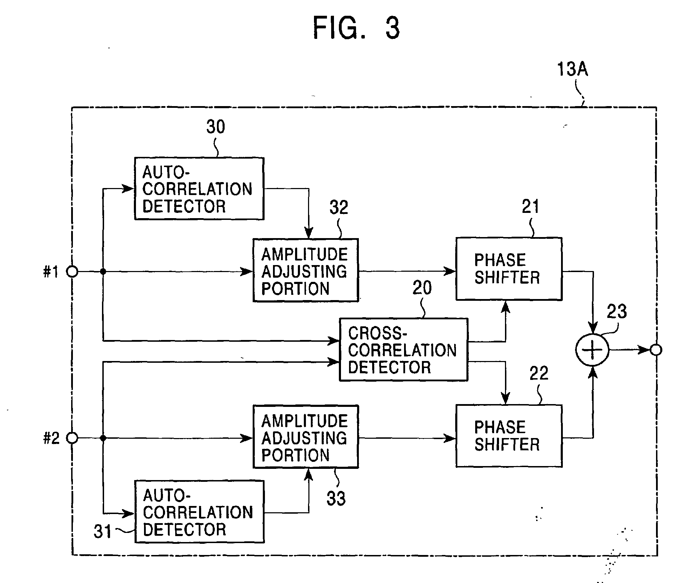

A second example of the configuration of the diversity synthesizer 13 illustrated in Fig. 1 is shown in Fig. 3. In this diversity synthesizer, the amplitudes of an input #1-type signal and an input #2-type signal are adjusted proportional to the corresponding auto-correlation values, and then, the resulting two signals are adjusted to be in phase with each other based on a cross correlation value between the two signals. Thereafter, the two signals are combined to be a synthesized signal.

More specifically, a diversity synthesizer 13A shown in Fig. 3 is formed of the following elements. Auto-correlation detectors 30 and 31, which are respectively connected to the output terminals of the receivers 12a and 12b, respectively detect the auto-correlation values of the output signals from the receivers 12a and 12b. Amplitude adjusting portions 32 and 33, which are respectively disposed at the output terminals of the receivers 12a and 12b, respectively adjust the amplitudes of the output signals from the receivers 12a and 12b to predetermined amplitudes based on the detection results (auto-correlation values) of the auto-correlation detectors 30 and 31. A cross-correlation detector 20 detects a cross-correlation value between the output signals from the receivers 12a and 12b. Phase shifters 21 and 22, which are respectively provided at the output terminals of the amplitude adjusting portions 32 and 33, respectively adjust the output signals from the amplitude adjusting portions 32 and 33 by a predetermined amount of phase based on the detection result (cross-correlation value) of the cross-correlation detector 20. A signal synthesizing portion 23 combines the output signals from the phase shifters 21 and 22 to generate a synthesized signal.

In the diversity synthesizer 13A constructed as described above, the auto-correlation detectors 30 and 31 respectively detect the auto-correlation values of the output signals from the receivers 12a and 12b, and then, the amplitude adjusting portions 32 and 33 respectively adjust the amplitudes of the output signals from the receivers 12a and 12b proportional to the corresponding auto-correlation values detected by the auto-correlation detectors 30 and 31.

Subsequently, the cross-correlation detector 20 detects a cross-correlation value between the output signals, and the phase shifters 21 and 22 respectively adjust the output signals from the amplitude adjusting portions 32 and 33 to be in phase with each other based on the detection result (cross-correlation value) of the cross-correlation detector 20. The resulting signals are then combined by the signal synthesizing portion 23 to be a synthesized signal.

According to the above-configured diversity synthesizer 13A, the C/N ratio can be maximized. Additionally, the signals from which the auto-correlation values are detected are the same as those from which the cross-correlation value is detected. Thus, in performing fixed-point arithmetic processing, the precision in calculating the coefficients used for amplitude adjustment and that for phase adjustment are almost the same.

Before the cross-correlation value is detected in the cross-correlation detector 20 and the signals are adjusted in the phase shifters 21 and 22, a signal delay occurs while the signals are processed in auto-correlation detectors 30 and 31 and the amplitude adjusting portions 32 and 33. Thus, the cross-correlation detector 20 and the phase shifters 21 and 22 should be designed by considering such a signal delay.

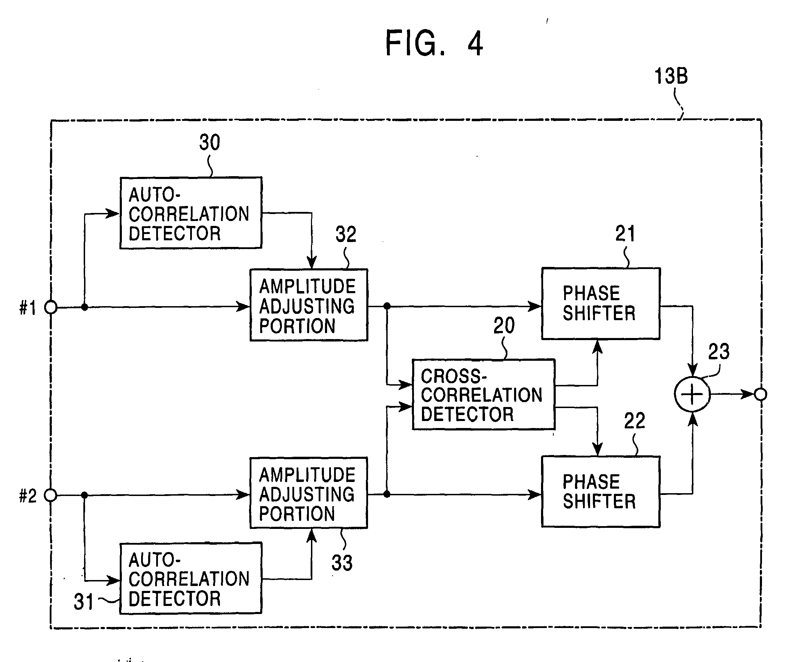

A third example of the configuration of the diversity synthesizer 13 illustrated in Fig. 1 is shown in Fig. 4. In this diversity synthesizer, the amplitudes of an input #1-type signal and an input #2-type signal are adjusted proportional to the corresponding auto-correlation values, and then, the signals are adjusted to be in phase with each other based on a cross-correlation value between the two signals. Subsequently, the resulting signals are combined to be a synthesized signal.

A diversity synthesizer 13B shown in Fig. 4 is formed of the following elements. Auto-correlation detectors 30 and 31, which are respectively connected to the output terminals of the receivers 12a and 12b, respectively detect the auto-correlation values of the output signals from the receivers 12a and 12b. Amplitude adjusting portions 32 and 33, which are respectively disposed at the output terminals of the receivers 12a and 12b, respectively adjust the output signals to predetermined amplitudes based on the detection results (auto-correlation values) of the auto-correlation detectors 30 and 31. A cross-correlation detector 20 detects a cross-correlation value between the output signals from the amplitude adjusting portions 32 and 33. Phase shifters 21 and 22, which are respectively provided at the output terminals of the amplitude adjusting portions 32 and 33, respectively adjust the output signals of the amplitude adjusting portions 32 and 33 by a predetermined amount of phase based on the detection result of the cross-correlation detector 20. A signal synthesizing portion 23 combines the output signals from the phase shifters 21 and 22 to generate a synthesized signal.

In the diversity synthesizer 13B configured as discussed above, the auto-correlation values of the output signals from the receivers 12a and 12b are respectively detected by the auto-correlation detectors 30 and 31, and then, the amplitudes of the output signals from the receivers 12a and 12b are respectively adjusted by the amplitude adjusting portions 32 and 33 proportional to the detection results (auto-correlation values) of the auto-correlation detectors 30 and 31. Meanwhile, a cross-correlation value between the output signals of the amplitude adjusting portions 32 and 33 is detected by the cross-correlation detector 20, and the output signals of the amplitude adjusting portions 32 and 33 are respectively adjusted to be in phase with each other by the phase shifters 21 and 22 based on the detection result (cross-correlation value) of the cross-correlation detector 20. Finally, the output signals of the phase shifters 21 and 22 are combined to be a synthesized signal by the signal synthesizing portion 23.

In the above-configured diversity synthesizer 13B, as well as in the previous diversity synthesizers 13 and 13A, the C/N ratio can be maximized. However, unlike the diversity synthesizer 13A shown in Fig. 3, before the cross-correlation value is detected in the cross-correlation detector 20 and the signals are shifted in the phase shifters 21 and 22, a signal delay does not occur while the signals are being processed in the auto-correlation detectors 30 and 31 and in the amplitude adjusting portions 32 and 33. Thus, the cross-correlation detector 20 and the phase shifters 21 and 22 can be designed independently without considering such a signal delay.

In adjusting the amplitudes of the signals in the amplitude adjusting portions 32 and 33, the significant digit is decreased, thereby lowering the precision of the cross-correlation value obtained in the cross-correlation detector 20. Accordingly, floating-point arithmetic processing should be performed in the amplitude adjusting portions 32 and 33, the cross-correlation detector 20, and the phase shifters 21 and 22 of the diversity synthesizer 13B shown in Fig. 4.

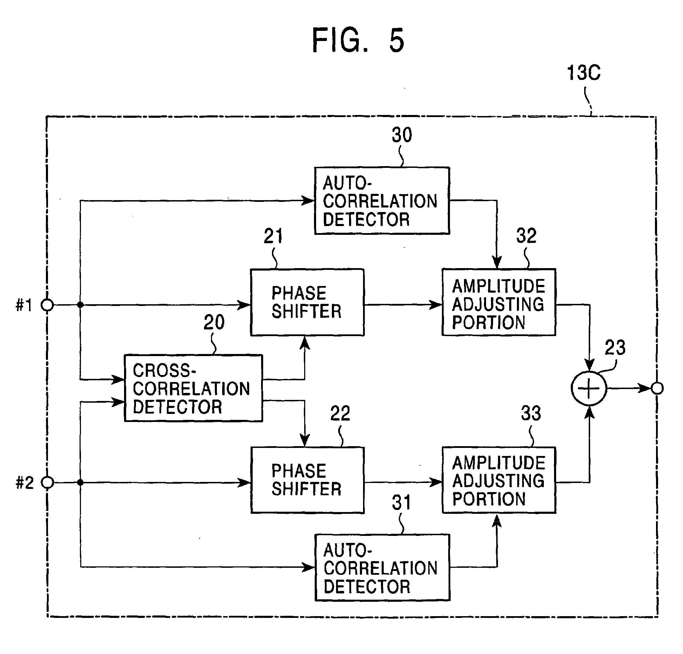

A fourth example of the configuration of the diversity synthesizer 13 illustrated in Fig. 1 is shown in Fig. 5. In this diversity synthesizer, an input #1-type signal and an input #2-type signal are adjusted to be in phase with each other based on a cross-correlation value between the two signals, and then, the amplitudes of the output signals are adjusted proportional to the auto-correlation values of the signals. Thereafter, the two signals are combined to be a synthesized signal. The basic configuration of this example is similar to the second example shown in Fig. 3, except that the positioning of the amplitude adjusting portions and the auto-correlation detectors is swapped with that of the phase shifters and the cross-correlation detector.

More specifically, a diversity synthesizer 13C shown in Fig. 5 includes the following elements. Auto-correlation detectors 30 and 31, which are respectively connected to the output terminals of the receivers 12a and 12b, respectively detect auto-correlation signals of the output signals from the receivers 12a and 12b. A cross-correlation detector 20 detects a cross-correlation value between the output signals of the receivers 12a and 12b. Phase shifters 21 and 22, which are respectively disposed at the output terminals of the receivers 12a and 12b, respectively adjust the output signals of the receivers 12a and 12b by a predetermined amount of phase based on the detection result of the cross-correlation detector 20. Amplitude adjusting portions 32 and 33, which are respectively provided at the output terminals of the phase shifters 21 and 22, respectively adjust the output signals of the phase shifters 21 and 22 to predetermined amplitudes based on the detection results of the auto-correlation detectors 30 and 31. A signal synthesizing portion 23 combines the output signals of the amplitude adjusting portions 32 and 33 to generate a synthesized signal.

In the diversity synthesizer 13C constructed as described above, the auto-correlation values of the output signals of the receivers 12a and 12b are respectively detected by the auto-correlation detectors 30 and 31, and the cross-correlation value between the output signals of the receivers 12a and 12b is detected by the cross-correlation detector 20. Then, the phase shifters 21 and 22 respectively adjust the output signals of the receivers 12a and 12b to be in phase with each other based on the detection result (cross-correlation value) of the cross-correlation detector 20, and then, the amplitude adjusting portions 32 and 33 respectively adjust the amplitudes of the output signals of the phase shifters 21 and 22 proportional to the detection results (auto-correlation values) of the auto-correlation detectors 30 and 31.

Thereafter, the output signals of the amplitude adjusting portions 32 and 33 are combined by the signal synthesizing portion 23 to be a synthesized signal.

It is also possible to maximize the C/N ratio by the above-configured diversity synthesizer 13C. Additionally, the signals from which the auto-correlation values are detected are the same as those from which the cross-correlation value is detected. Accordingly, in performing fixed-point arithmetic processing, the precision in calculating the coefficients used for amplitude adjustment and that for phase adjustment are almost the same.

As discussed above, when fixed-point arithmetic processing is performed in the amplitude adjusting portions 32 and 33, the significant digit is decreased. Thus, in the second example shown in Fig. 3, the precision of the output signals of the phase shifters 21 and 22 is lowered in accordance with a decreased precision of the calculation results of the amplitude adjusting portions 32 and 33. In the fourth example shown in Fig 5, however, the amplitudes of the signals are adjusted after performing phase shifting, and thus, the precision of the output signals of the phase shifters 21 and 22 is not influenced by the precision of the output signals of the amplitude adjusting portions 32 and 33.

Before the auto-correlation values are detected in the auto-correlation detectors 30 and 31 and the signals are adjusted in the amplitude adjusting portions 32 and 33, a signal delay occurs while the signals are being processed in the cross-correlation detector 20 and in the phase shifters 21 and 22. It is thus necessary to design the auto-correlation detectors 30 and 31 and the amplitude adjusting portions 32 and 33 by considering such a signal delay.

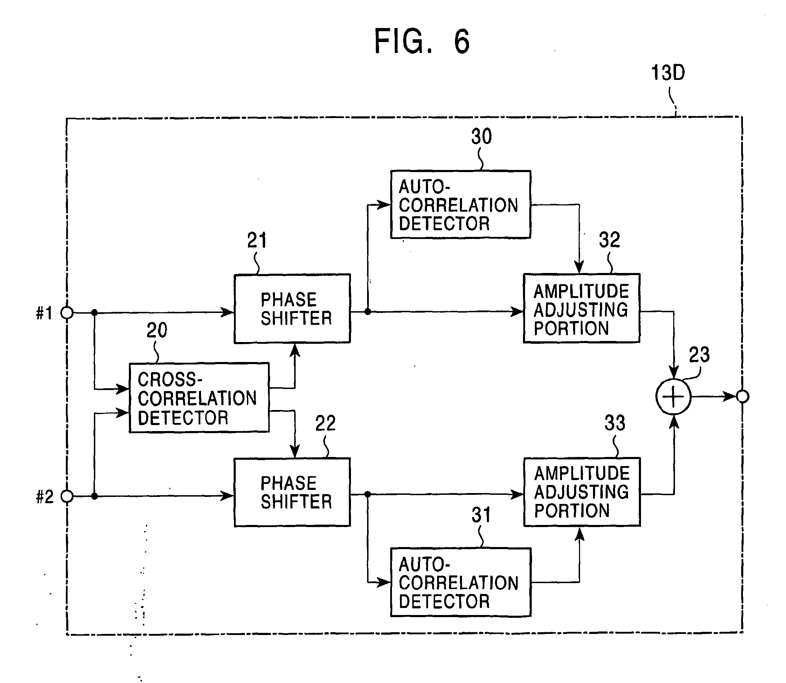

A fifth example of the configuration of the diversity synthesizer 13 illustrated in Fig. 1 is shown in Fig. 6. In this diversity synthesizer, an input #1-type signal and an input #2-type signal are adjusted to be in phase with each other based on a cross-correlation value between the two signals, and then, the amplitudes of the signals are adjusted proportional to the corresponding auto-correlation values. Thereafter, the resulting signals are combined to be a synthesized signal. The configuration of the diversity synthesizer of this example is basically similar to that of the third example shown in Fig. 4, except that the positioning of the amplitude adjusting portions and the auto-correlation detectors is swapped with that of the phase shifters and the cross-correlation detector.

More specifically, a diversity synthesizer 13D shown in Fig. 6 is provided with the following elements. A cross-correlation detector 20 detects a cross-correlation value between the output signals of the receivers 12a and 12b. Phase shifters 21 and 22, which are respectively disposed at the output terminals of the receivers 12a and 12b, respectively adjust the output signals of the receivers 12a and 12b by a predetermined amount of phase based on the detection result of the cross-correlation detector 20. Auto-correlation detectors 30 and 31, which are respectively provided at the output terminals of the phase shifters 21 and 22, respectively detect the auto-correlation values of the output signals from the phase shifters 21 and 22. Amplitude adjusting portions 32 and 33, which are respectively disposed at the output terminals of the phase shifters 21 and 22, respectively adjust the output signals of the phase shifters 21 and 22 to predetermined amplitudes based on the detection results of the auto-correlation detectors 30 and 31. A signal synthesizing portion 23 combines the output signals of the amplitude adjusting portions 32 and 33 to generate a synthesized signal.

In the diversity synthesizer 13D configured as discussed above, a cross-correlation value between the output signals of the receivers 12a and 12b is detected by the cross-correlation detector 20, and the output signals of the receivers 12a and 12b are respectively adjusted to be in phase with each other by the phase shifters 21 and 22 based on the detection result (cross-correlation value) of the cross-correlation detector 20. Then, the auto-correlation values of the output signals of the phase shifters 21 and 22 are respectively detected by the auto-correlation detectors 30 and 31.

Meanwhile, the amplitudes of the output signals from the phase shifters 21 and 22 are respectively adjusted by the amplitude adjusting portions 32 and 33 proportional to the auto-correlation values detected by the auto-correlation detectors 30 and 31. Thereafter, the output signals of the amplitude adjusting portions 32 and 33 are combined by the signal synthesizing portion 23 to be a synthesized signal.

According to the above-constructed diversity synthesizer 13D, the maximized C/N ratio can be obtained. Moreover, before the auto-correlation values are detected and the amplitudes of the signals are adjusted, a signal delay does not occur while the signals are being processed in the cross-correlation detector 20 and in the phase shifters 21 and 22. Thus, unlike the fourth example shown in Fig. 5, the auto-correlation detectors 30 and 31 and the amplitude adjusting portions 32 and 33 can be independently designed.

In the third example shown in Fig. 4, floating-point arithmetic processing is required in the amplitude adjusting portions 32 and 33, the cross-correlation detector 20, and the phase shifters 21 and 22. In the fifth example shown in Fig. 6, since amplitude adjustment is performed after conducting phase adjustment, fixed-point arithmetic processing can be safely performed without lowering the precision.

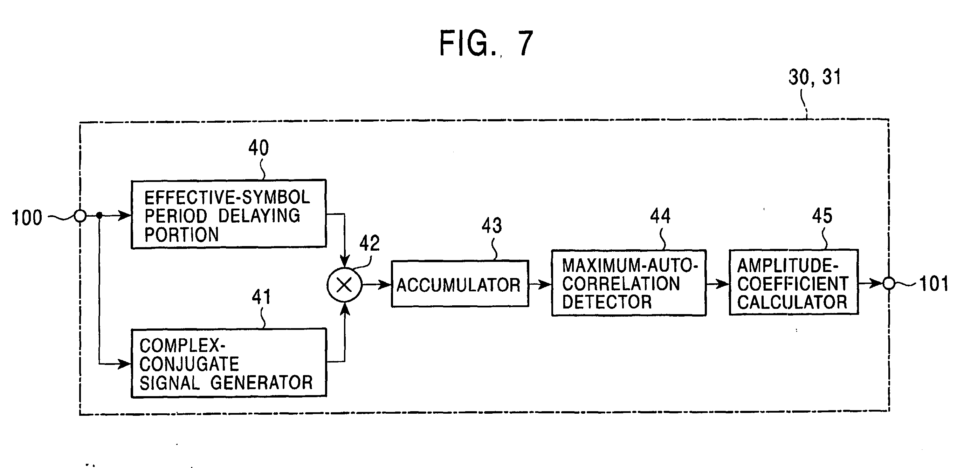

The specific configuration of the auto-correlation detector 30 (31) illustrated in Figs. 3 through 6 is shown in Fig. 7. In Fig. 7, the auto-correlation detector 30 (31) is formed of an effective-symbol period delaying portion 40 for outputting a delay signal which is delayed later than a signal supplied to the auto-correlation detector 30 (31) by an effective symbol period, a complex-conjugate signal generator 41 for generating a complex-conjugate signal from the signal supplied to the auto-correlation detector 30 (31) and outputting it, a multiplier 42 for multiplying the delay signal with the complex-conjugate signal, an accumulator 43 for accumulating the multiplication results of the multiplier 42 for a predetermined period, a maximum auto-correlation detector 44 for searching the maximum auto-correlation value from the accumulated result of the accumulator 43, and an amplitude-coefficient calculator 45 for calculating an amplitude coefficient of the amplitude adjusting portion 32 (33) based on the maximum auto-correlation value.

In the auto-correlation detector 30 (31) constructed as described above, the effective-symbol period delaying portion 40 outputs a delay signal which is delayed by an effective symbol period later than a signal supplied to the auto-correlation detector 30 (31) through an input terminal 101. Meanwhile, the complex-conjugate signal generator 41 generates a complex-conjugate signal from the signal supplied to the auto-correlation detector 30 (31) through the input terminal 100 and outputs it. The delay signal is multiplied with the complex-conjugate signal in the multiplier 42, and the multiplication results of the multiplier 42 are accumulated for a predetermined period by the accumulator 43. The maximum auto-correlation value is then detected from the accumulated result of the accumulator 43 by the maximum auto-correlation detector 44, and the amplitude coefficient of the amplitude adjusting portion 32 (33) is obtained based on the maximum auto-correlation value.

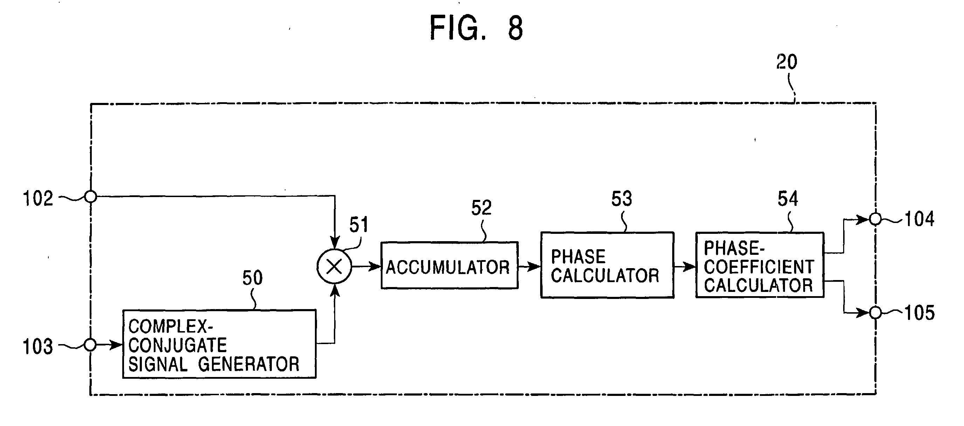

The specific configuration of the cross-correlation detector 20 illustrated in Figs. 2 through 6 is shown in Fig. 8. The cross-correlation detector 20 is provided with a complex-conjugate signal generator 50 for generating a complex-conjugate signal from one of the signals supplied to the cross-correlation detector 20 and outputting it, a multiplier 51 for multiplying the complex-conjugate signal generated by the complex-conjugate signal generator 50 with the other signal supplied to the cross-correlation detector 20, an accumulator 52 for accumulating the multiplication results of the multiplier 51 for a predetermined period, a phase calculator 53 for conducting a phase calculation from the accumulated result of the accumulator 52, and a phase-coefficient calculator 54 for making calculation to obtain phase coefficients from the calculated result from the phase calculator 53.

In the cross-correlation detector 20 constructed as described above, one of the two signals supplied to the cross-correlation detector 20 via input terminals 102 and 103 (in this case, the signal supplied from the terminal 103) is input into the complex-conjugate signal generator 50, and a complex-conjugate signal is generated from the input signal and is output. Then, the complex-conjugate signal is multiplied with the other signal input from the terminal 102 in the multiplier 51.

Subsequently, the multiplication results obtained from the multiplier 51 are accumulated for a predetermined period in the accumulator 52, and based on the accumulated result of the accumulator 52, the amount of phase to be shifted is obtained by the phase calculator 53. Then, based on the calculated amount of phase to be shifted, the phase coefficients are obtained by the calculation of the phase-coefficient calculator 54 and are output to the phase shifters 21 and 22 via output terminals 104 and 105, respectively.

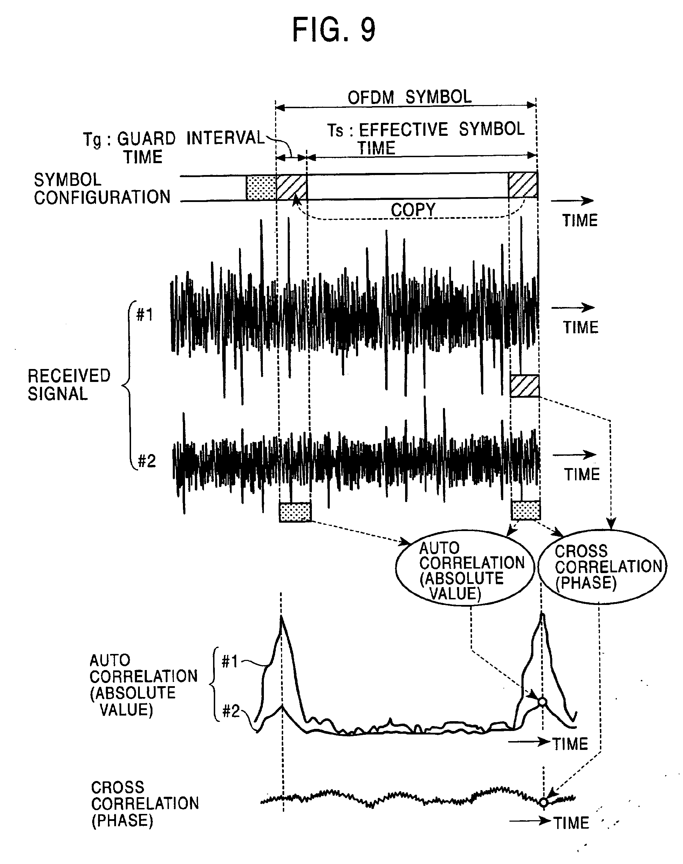

Fig. 9 illustrates the concept of an OFDM demodulation process of a signal waveform while diversity synthesizing is performed. In Fig. 9, the auto-correlation value is obtained by calculating the sum of the product of an OFDM symbol signal at a certain time and the OFDM symbol signal at a Ts time before for a Tg period. If the temporally preceding signal is a guard symbol, the auto-correlation value (absolute value) becomes maximum, as shown in Fig. 9. Since the #1-type signal and the #2-type signal simultaneously arrive, the auto-correlation values (absolute values) of the corresponding signals become maximum at the same time. However, the #1-type signal has greater power than the #2-type signal, thereby exhibiting a greater auto-correlation value.

Thus, in performing amplitude adjustment in the second through fifth examples shown in Figs. 3 through 6, respectively, the amplitude coefficients proportional to the maximum auto-correlation values (absolute values) of the #1-type signal and the #-2 type signal are respectively calculated in the auto-correlation detectors 30 and 31, and then, the amplitudes are respectively adjusted in the amplitude adjusting portions 32 and 33 based on the calculated amplitude coefficients.

Concerning cross correlation (phase), when the auto correlation having a greater maximum value is detected, the corresponding cross-correlation value is checked. For example, in Fig. 9, the auto-correlation value of the #-1 signal is used as a reference. In performing phase adjustment in the first through fifth examples shown in Figs. 2 through 6, respectively, calculations are made to obtain the phase coefficients in the cross-correlation detector 20 as discussed above, and phase shifting is performed in the phase shifters 21 and 22 based on the obtained phase coefficients.

When the diversity synthesizer 13 includes the auto-correlation detectors 30 and 31 as shown in Figs. 3 through 6, the effective-symbol extracting portion 15 of the OFDM demodulation unit 14 shown in Fig. 1 compares the auto-correlation values detected by the auto-correlation detectors 30 and 31, and then extracts effective symbols by using an auto-correlation signal having a greater maximum value. For example, if the auto correlation values (absolute values) are obtained as shown in Fig. 9, the effective-symbol extracting portion 15 removes guard symbols from the synthesized OFDM signal output from the diversity synthesizer 13 by using the detecting point of the maximum auto-correlation value of the #1-type signal as a reference, thereby extracting effective symbols.

The configuration and operation of the OFDM receiving apparatus according to the first embodiment of the present invention have been discussed in detail. However, the present invention is not restricted to this embodiment, and various modifications and equivalent arrangements may be made within the scope of the appended claims.

For example, the number of antennas is not limited to two, and may be three or more.

A detailed description is given below of second through fifth embodiments of the present invention with reference to the drawings. According to OFDM receiving apparatuses of the second through fifth embodiments, at the stage prior to an FFT processor for performing FFT processing on effective symbols of an OFDM modulated signal, a diversity synthesizer for performing diversity synthesizing and a delay equalizer for removing signal components (delayed waves) which are delayed longer than a predetermined period are provided. With this arrangement, it is possible to extract effective symbols of an OFDM modulated signal with a sufficient level of intensity and without signal components having a considerable long delay period. In the OFDM receiving apparatuses of the second through fifth embodiments, two antennas are provided by way of example.

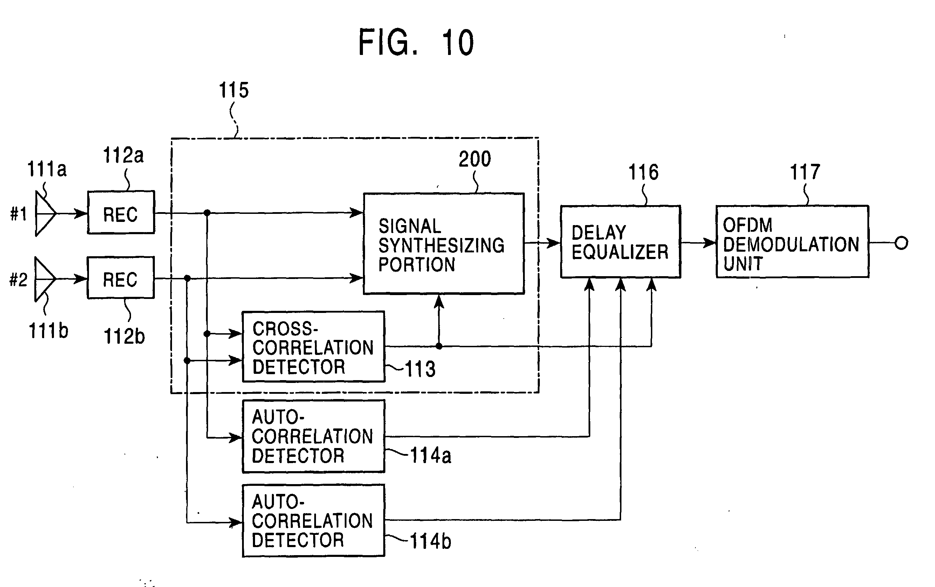

Fig. 10 illustrates the configuration of an OFDM receiving apparatus according to the second embodiment of the present invention. The OFDM receiving apparatus shown in Fig. 10 is formed of the following elements. Antennas 111a and 111b, which are disposed to separate from each other, receive a #1-type OFDM modulated signal and a #2-type OFDM modulated signal, respectively. Receivers 112a and 112b receive the #1-type OFDM modulated signal and the #2-type OFDM modulated signal from the antennas 111a and 111b, respectively. A signal synthesizing portion 200 adjusts the phases of the output signals of the receivers 112a and 112b and then combines the output signals so as to form a synthesized signal. A cross-correlation detector 113 detects a cross-correlation value between the output signals of the receivers 112a and 112b. Auto-correlation detectors 114a and 114b detect auto-correlation values from the output signals of the receivers 112a and 112b, respectively. A delay equalizer 116 removes signal components delayed later than a predetermined period from the synthesized signal output from the signal synthesizing portion 200, based on the detection results of the auto-correlation detectors 114a and 114b and the detection result of the cross-correlation detector 113. An OFDM demodulation unit 117 demodulates the resulting OFDM modulated signal.

The cross-correlation detector 113 and the signal synthesizing portion 200 form the diversity synthesizer 115, and perform diversity synthesizing after adjusting the phases of the output signals of the receivers 112a and 112b based on the detection result of the cross-correlation detector 113. The auto-correlation detectors 114a and 114b constitute a first auto-correlation detector of this embodiment. The specific configuration of the OFDM demodulation unit 117 is similar to that of a known OFDM demodulation unit.

In the OFDM receiving apparatus constructed as described above, signals received by the antennas 111a and 111b are respectively amplified and frequency-converted in the receivers 112a and 112b so as to be converted into baseband signals. The baseband signals are then input into the diversity synthesizer 115 as the #1-type signal and the #2-type signal. In the diversity synthesizer 115, the signal synthesizing portion 200 adjusts the output signals of the receivers 112a and 112b to be in phase with each other based on the detection result of the cross-correlation detector 113, and then combines the signals to form a synthesized signal.

Subsequently, based on the detection results of the auto-correlation detectors 114a and 114b and the detection result of the cross-correlation detector 113, the delay equalizer 116 removes signal components which are delayed later than a predetermined period from the synthesized signal output from the signal synthesizing portion 200, i.e., signal components delayed later than a guard interval time of the OFDM modulated signal. Then, the OFDM demodulation unit 117 performs FFT processing on the output signal from the delay equalizer 116 so as to remove the guard intervals which were inserted when the signal was modulated. Thus, the effective symbols are extracted.

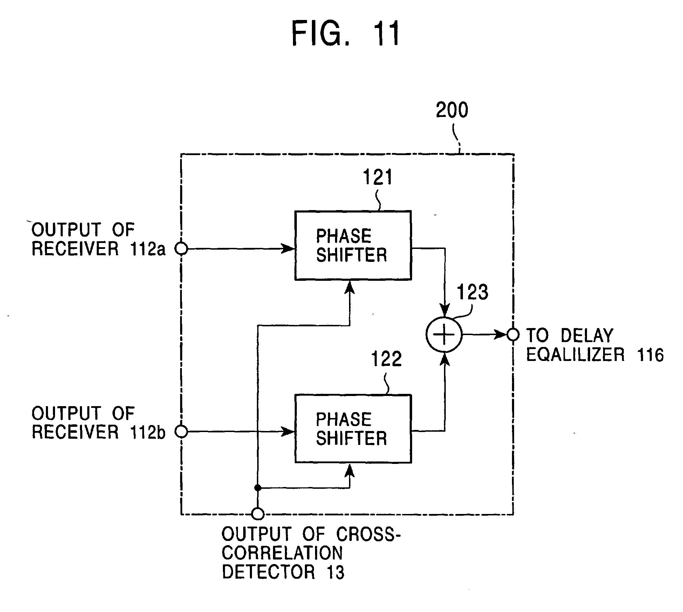

The specific configuration of the signal synthesizing portion 200 illustrated in Fig. 10 is shown in Fig. 11. In Fig. 11, the signal synthesizing portion 200 includes phase shifters 121 and 122, and an adder 123. In the signal synthesizing portion 200, the phase shifters 121 and 122 respectively adjust the output signals from the receivers 112a and 112b to be in phase with each other by referring to the detection result (cross-correlation value) of the cross-correlation detector 113. Then, the resulting signals are added in the adder 123, and the synthesized signal is output to the delay equalizer 116. In this manner, the signals output from the antennas 112a and 112b are combined after being adjusted to be in phase with each other, thereby making it possible to maximize power of the synthesized signal.

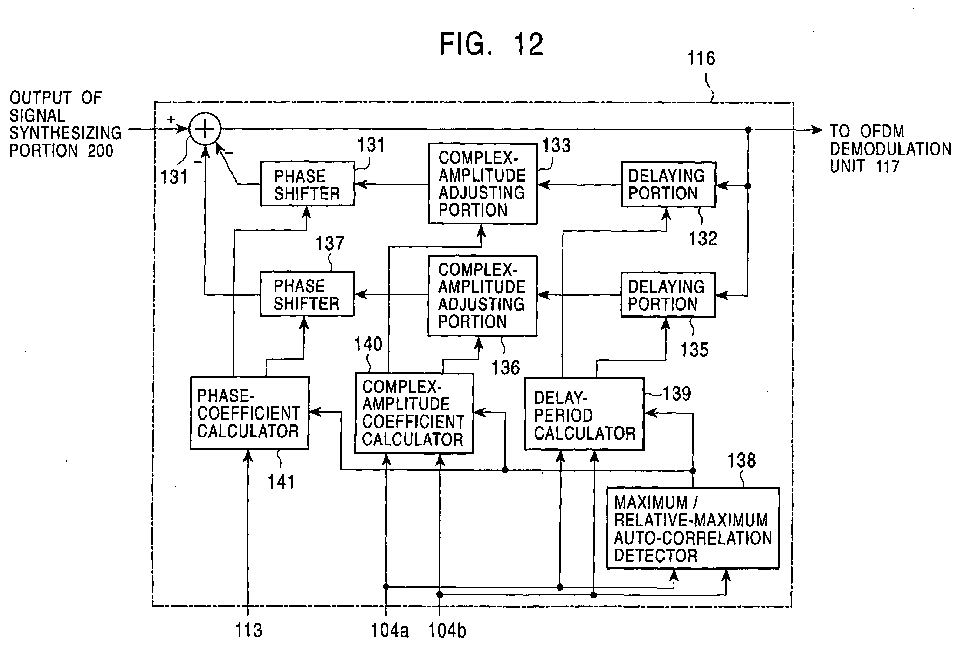

The specific configuration of the delay equalizer 116 illustrated in Fig. 10 is shown in Fig. 12. The delay equalizer 116 shown in Fig. 12 is adapted to delay up to two signals. The delay equalizer 116 is formed of an adder 131, delaying portions 132 and 135 for delaying the output of the adder 131 for a predetermined period, complex-amplitude adjusting portions 133 and 136 for respectively adjusting the complex amplitudes of the output signals from the delaying portions 132 and 135, phase shifters 134 and 137 for respectively adjusting the phases of the complex-amplitude adjusting portions 133 and 136, a delay-period calculator 139 for determining a delay period to be set in the delaying portions 132 and 135, a complex-amplitude coefficient calculator 140 for determining complex-amplitude coefficients, i.e., the amounts of amplitudes to be adjusted, in the complex-amplitude adjusting portions 133 and 136, a phase-coefficient calculator 141 for determining the amount of phase to be shifted in the phase shifters 134 and 137, and a maximum/relative-maximum auto-correlation detector 138 for detecting the maximum value and the relative-maximum value from the supplied auto-correlation values.

The delay equalizer 116 shown in Fig. 12 is adapted to delay up to two signals. In this delay equalizer 116, a negative feedback device formed of the delaying portion 132, the complex-amplitude adjusting portion 133, and the phase shifter 134 removes delay signal components of one signal, while another negative feedback device formed of the delaying portion 135, the complex-amplitude adjusting portion 136, and the phase shifter 137 removes delay signal components of the other signal.

Upon receiving the auto-correlation values from the auto-correlation detectors 114a and 114b, the maximum/relative-maximum auto-correlation detector 138 detects the maximum value and the relative-maximum value from the auto-correlation values, and sends a control signal indicating the maximum/relative-maximum auto-correlation values to the delay-period calculator 139, the complex-amplitude coefficient calculator 140, and the phase-coefficient calculator 141. For example, if the output of the signal synthesizing portion 200 contains three OFDM modulated signals, one maximum auto-correlation value and two relative-maximum auto-correlation values are detected, and the corresponding control signal is sent to remove delay signals which cause the generation of the relative-maximum auto-correlation values.

In response to the control signal from the maximum/relative-maximum auto-correlation detector 138, the delay-period calculator 139 determines a period from when the maximum auto-correlation value is detected to when each of the relative-maximum auto-correlation values corresponding to the two delay signals to be removed is detected, and sends the calculated delay periods to the delaying portions 132 and 135. In this case, if the calculated delay period is shorter than a predetermined period, i.e., a guard interval time contained in the OFDM modulated signal, the delay period is set to be zero.

In response to the control signal from the maximum/relative-maximum auto-correlation detector 138, the complex-amplitude coefficient calculator 140 makes calculation to determine the ratio of each of the relative-maximum auto-correlation values corresponding to the two delay signals to be removed to the maximum auto-correlation value, and sends the calculated ratios to the complex-amplitude adjusting portions 133 and 136 as complex-amplitude coefficients.

The delay-period calculator 139 and the complex-amplitude coefficient calculator 140 determine the delay periods and the complex-amplitude coefficients, respectively, by referring to the auto-correlation values supplied from the auto-correlation detectors 114a and 114b.

Upon receiving the control signal from the maximum/relative-maximum auto-correlation detector 138, the phase-coefficient calculator 141 determines the phase coefficients associated with the two delay signals to be removed by referring to the cross-correlation value supplied from the cross-correlation detector 113, and sends the calculated phase coefficients to the phase shifters 134 and 137. In this case, the phase-coefficient calculator 141 determines the phase coefficients so that the phase rotation becomes zero when the relative maximum auto-correlation values corresponding to the delay signals to be removed are detected in the same auto-correlation detector 114a (114b) in which the maximum auto-correlation value is detected. In other cases, the phase-coefficient calculator 141 determines the phase coefficients so that the phase of the cross-correlation value is canceled.

The delaying portions 132 and 135 delay the input signals based on the delay periods supplied from the delay-period calculator 139. In this case, if the delay periods are zero, that is, if the delay periods of the delay signals are shorter than the guard interval time of the OFDM modulated signal, it is not necessary to remove the delay signals, and the input signals are output without being delayed.

The complex-amplitude adjusting portions 133 and 136 perform amplitude adjustment based on the complex-amplitude coefficients supplied from the complex-amplitude coefficient calculator 140.

The phase shifters 134 and 137 adjust the phases of the input signals based on the phase coefficients supplied from the phase-coefficient calculator 141. In this manner, the output of the adder 131 is fed back to the input of the adder 131 via a negative feedback device formed of the delaying portion 132 (135), the complex-amplitude adjusting portion 133 (136), and the phase shifter 134 (137).

Accordingly, in the OFDM receiving apparatus shown in Fig. 10, the diversity-synthesized signal of the signal synthesizer 200 is supplied to the adder 131 of the delay equalizer 116. Then, the output of the adder 131 is supplied to the delaying portions 132 and 135 in which the signals are delayed based on the delay periods supplied from the delay-period calculator 139, and are further sent to the complex-amplitude adjusting portions 133 and 136, respectively, in which the amplitudes of the signals are adjusted based on the complex-amplitude coefficients supplied from the complex-amplitude coefficient calculator 140. The resulting signals are then supplied to the phase shifters 134 and 137.

In the phase shifters 134 and 137, the phases of the signals are corrected based on the phase coefficients supplied from the phase-coefficient calculator 141. Consequently, the signals which have undergone delay-period adjustment, amplitude adjustment, and phase adjustment are added in the adder 131 with opposite signs. As a result, the signal components delayed later than a guard interval time of the OFDM modulated signal are removed from the diversity-synthesized signal of the signal synthesizing portion 200, and the resulting signal without delayed waves (unwanted waves) is output to the OFDM demodulation unit 117.

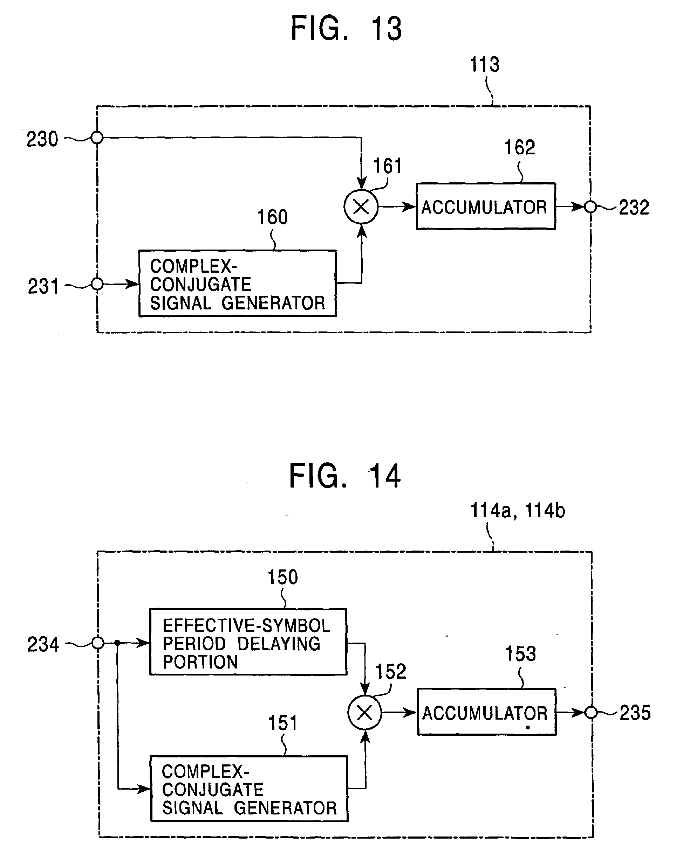

The specific configuration of the cross-correlation detector 113 illustrated in Fig. 10 is shown in Fig. 13. In Fig. 13, the cross-correlation detector 113 includes a complex-conjugate signal generator 160 for generating a complex-conjugate signal from one of the signals supplied to the cross-correlation detector 13 and for outputting it, a multiplier 161 for multiplying the complex-conjugate signal with the other signal supplied to the cross-correlation detector 113, and an accumulator 162 for accumulating the multiplication results of the multiplier 161 for a predetermined period.

In the cross-correlation detector 113 configured as discussed above, one of the signals supplied to the cross-correlation detector 113 via input terminals 230 and 231 (in this example, the signal input via the input terminal 231) is input into the complex-conjugate signal generator 160. The complex-conjugate signal generator 160 then generates a complex-conjugate signal and outputs it to the multiplier 161. Then, the complex-conjugate signal is multiplied with the other signal supplied to the cross-correlation detector 113 via the input terminal 230 in the multiplier 161.

Further, the multiplication results obtained by the multiplier 161 are accumulated for a predetermined period in the accumulator 162. Then, the accumulated result of the accumulator 162 is output to the signal synthesizing portion 200 and the delay equalizer 116 via an output terminal 232 as the cross-correlation value.

The specific configuration of the auto-correlation detector 114a (114b) illustrated in Fig. 10 is shown in Fig. 14. In Fig. 14, the auto-correlation detector 114a (114b) is formed of an effective-symbol period delaying portion 150 for outputting a delay signal which is delayed later than a signal supplied to the auto-correlation detector 114a (114b) by an effective symbol period, a complex-conjugate signal generator 151 for generating a complex-conjugate signal from the signal supplied to the auto-correlation detector 114a (114b) and for outputting it, a multiplier 152 for multiplying the delay signal output from the effective-symbol period delaying portion 150 with the complex-conjugate signal, and an accumulator 153 for accumulating the multiplication results of the multiplier 152 for a predetermined period.

In the above-configured auto-correlation detector 114a (114b), the effective-symbol period delaying portion 150 outputs a delay signal which is delayed by an effective symbol period later than the signal supplied to the auto-correlation detector 114a (114b) via an input terminal 234. Meanwhile, the complex-conjugate signal generator 151 generates a complex-conjugate signal from the signal supplied via the input terminal 234 and outputs it. Then, the multiplier 152 multiplies the delay signal with the complex-conjugate signal, and the multiplication result of the multiplier 152 is accumulated in the accumulator 153 for a predetermined period. Thus, the accumulated result of the accumulator 153 is output to the delay equalizer 116 as the auto-correlation value via an output terminal 235.

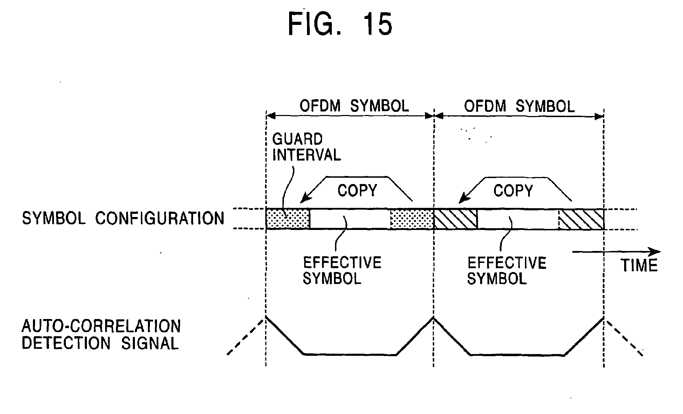

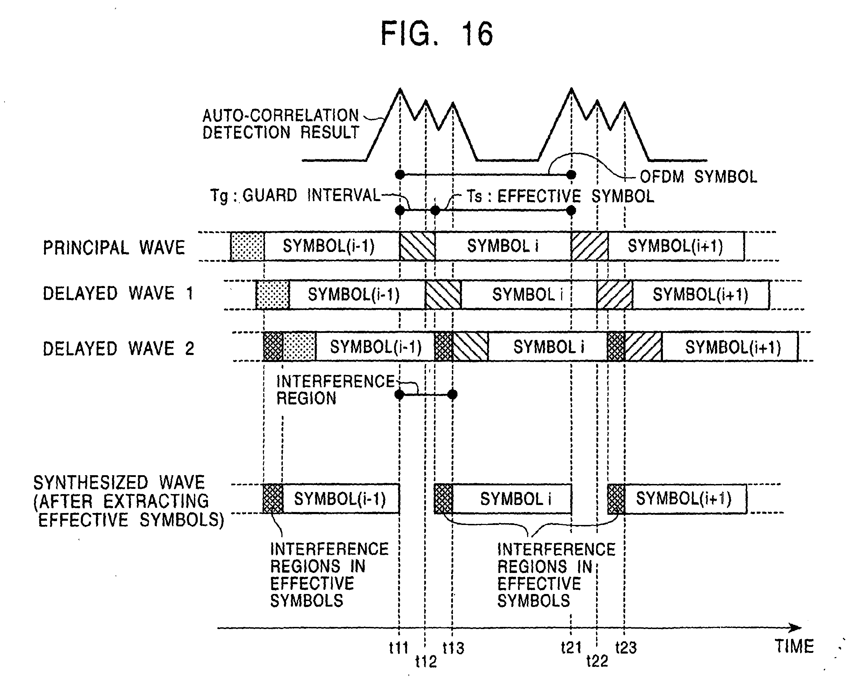

A description is now given, with reference to Figs. 15 and 16, of the data configuration of the OFDM modulated signal and the removing operation of the delayed waves in the above-constructed OFDM receiving apparatus. Fig. 15 illustrates the relationship between the data configuration of the OFDM modulated signal and the auto-correlation detection signal. In performing OFDM modulation, the end of an effective symbol for a predetermined period is copied to the head of the effective symbol as a guard interval. Then, the signal indicating the sum of the guard interval and the effective symbol is sent as an OFDM symbol.

Accordingly, in demodulating the OFDM modulated signal, it is necessary to remove the guard intervals to extract the effective symbol signal. In this case, the auto-correlation value of the received signal is detected by the auto-correlation detector, and the auto-correlation value becomes maximum at the start of the guard interval signal. Accordingly, by monitoring the auto-correlation value of the received signal, the output timing of the OFDM symbols can be identified in the OFDM receiving apparatus.

Fig. 16 illustrates the influence of delayed waves of an OFDM modulated signal on effective symbols of a synthesized wave. It is now assumed that a principal wave, delayed wave 1, and delayed wave 2 are received by the OFDM receiving apparatus of this embodiment. By detecting the maximum auto-correlation value, it is seen that the principal wave forms an OFDM symbol i from time t11 to t21 as an OFDM symbol unit. The output period of the OFDM symbol i includes the output period of the effective symbol and the guard interval period copied from the end of the effective symbol.

Similarly, by detecting the relative-maximum auto-correlation value, which is the second greatest value next to the maximum auto-correlation value, it is revealed that delayed wave 1 forms an OFDM symbol i from time t12 to t22 as an OFDM symbol unit. By detecting the second greatest relative-maximum auto-correlation value, it is revealed that that delayed wave 2 forms an OFDM symbol i from time t13 to t23 as an OFDM symbol unit.

Since the OFDM symbol of delayed wave 1 starts at time t12, which is within the guard interval of the principal wave, the occurrence of direct interference can be prevented. However, the OFDM symbol of delayed wave 2, which has a longer delay period than delayed wave 1, starts at time t13, which is outside the guard interval of the principal wave. As a result, the symbol i of the synthesized wave obtained after detecting the effective symbol disadvantageously contains the end of the symbol (i-1) of delayed wave 2, resulting in interference regions.

It is thus necessary to eliminate delayed waves having a delay period longer than a guard interval period of the principal wave. According to the OFDM receiving apparatus shown in Fig. 10 provided with the delay equalizer 116 shown in Fig. 12, after delayed waves are eliminated by the feedback devices of the delay equalizer 116, the resulting signal is input into the OFDM demodulation unit 117, thereby obtaining a high-level demodulated signal.

In the OFDM receiving apparatus constructed in accordance with the second embodiment of the present invention, the cross-correlation value and the auto-correlation values of the output signals from the receivers 112a and 112b are detected before the output signals undergo diversity-synthesizing. Then, diversity synthesizing is performed based on the cross-correlation value, and unwanted waves are removed from the synthesized signal by the delay equalizer 116 based on the auto-correlation detection values and the cross-correlation value. It is thus possible to extract an effective symbol signal with a sufficient signal intensity and without delayed waves (unwanted waves) having a delay period longer than the guard interval time of the OFDM modulated signal.

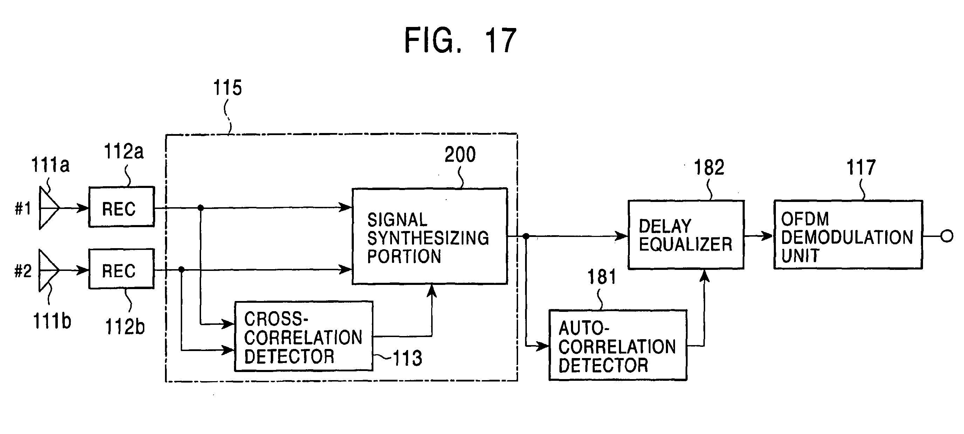

The configuration of an OFDM receiving apparatus according to the third embodiment of the present invention is shown in Fig. 17. The configuration of the OFDM receiving apparatus of the third embodiment differs from that of the second embodiment in the following point. Auto-correlation values of a synthesized signal obtained by a diversity synthesizer 115 are detected by an auto-correlation detector 181, and based on the detected auto-correlation values, unwanted signal components are removed from the received signal by a delay equalizer 182. The other configurations of the third embodiment are similar to those of the second embodiment, and thus, the same elements as those of the second embodiment are designated with like reference numerals and a detailed explanation thereof will be omitted.

The OFDM receiving apparatus shown in Fig. 17 has the following elements. Antennas 111a and 111b receive a #1-type OFDM modulated signal and a #2-type OFDM modulated signal, respectively. Receivers 112a and 112b receive the #1-type OFDM modulated signal and the #2-type OFDM modulated signal from the antennas 111a and 11b, respectively. A signal synthesizing portion 200 adjusts the phases of the output signals of the receivers 112a and 112b and then combines the output signals so as to form a synthesized signal. A cross-correlation detector 113 detects a cross-correlation value between the output signals of the receivers 112a and 112b. The auto-correlation detector 181 detects an auto-correlation value from the output signal of the signal synthesizing portion 200. The delay equalizer 182 removes signal components delayed later than a predetermined period from the synthesized signal output from the signal synthesizing portion 200, based on the detection result of the auto-correlation detector 181. An OFDM demodulation unit 117 demodulates the resulting OFDM modulated signal. The configuration of the auto-correlation detector 181 is similar to that of the auto-correlation detector 114a (114b), and forms a second auto-correlation detector of this embodiment.

In the OFDM receiving apparatus constructed as described above, signals received by the antennas 111a and 111b are respectively amplified and frequency-converted in the receivers 112a and 112b so as to be converted into baseband signals. The baseband signals are then input into the diversity synthesizer 115 as the #1-type signal and the #2-type signal. In the diversity synthesizer 115, the signal synthesizing portion 200 adjusts the output signals of the receivers 112a and 112b to be in phase with each other based on the detection result of the cross-correlation detector 113, and then combines the signals to form a synthesized signal.

Subsequently, based on the detection result of the auto-correlation detector 181, the delay equalizer 182 removes signal components which are delayed later than a predetermined period from the synthesized signal output from the signal synthesizing portion 200, i.e., signal components delayed later than the guard interval time of the OFDM modulated signal. Then, the OFDM demodulation unit 117 performs FFT processing on the output signal from the delay equalizer 182 so as to remove the guard intervals which were inserted when the signal was modulated. Thus, the effective symbols are extracted.

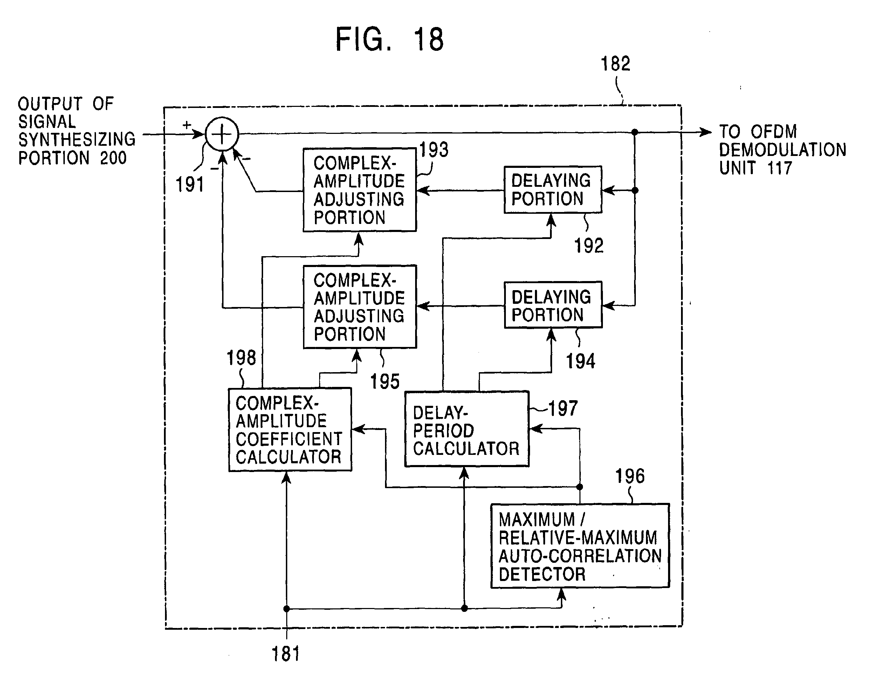

The specific configuration of the delay equalizer 182 illustrated in Fig. 17 is shown in Fig. 18. The delay equalizer 182 shown in Fig. 18, as well as the counterpart 116 shown in Fig. 12, is adapted to delay up to two signals. The delay equalizer 182 is formed of an adder 191, delaying portions 192 and 194 for delaying the output of the adder 191 for a predetermined period, complex-amplitude adjusting portions 193 and 195 for respectively adjusting the complex amplitudes of the output signals from the delaying portions 192 and 194, a delay-period calculator 197 for determining a delay period to be set in the delaying portions 192 and 194, a complex-amplitude coefficient calculator 198 for determining complex-amplitude coefficients, i.e., the amounts of amplitudes to be adjusted, in the complex-amplitude adjusting portions 193 and 195, and a maximum/relative-maximum auto-correlation detector 196 for detecting the maximum value and the relative-maximum value from the supplied auto-correlation value.

Upon comparison with the delay equalizer 116 shown in Fig. 12, in the delay equalizer 182, phase adjustment is not performed on the output signals, and only one auto-correlation value is supplied. However, the other configurations of the delay equalizer 182 are similar to those of the delay equalizer 116.

In this delay equalizer 182, a negative feedback device formed of the delaying portion 192 and the complex-amplitude adjusting portion 193 removes delay signal components of one signal, while another negative feedback device formed of the delaying portion 194 and the complex-amplitude adjusting portion 195 removes delay signal components of the other signal.

Upon receiving the auto-correlation value from the auto-correlation detector 181, the maximum/relative-maximum auto-correlation detector 196 detects the maximum value and the relative-maximum value from the auto-correlation value, and sends a control signal indicating the maximum/relative-maximum auto-correlation values to the delay-period calculator 197 and the complex-amplitude coefficient calculator 198.

In response to the control signal from the maximum/relative-maximum auto-correlation detector 196, the delay-period calculator 197 determines a period from when the maximum auto-correlation value is detected to when each of the relative-maximum auto-correlation values corresponding to the two delay signals to be removed is detected, and sends the calculated delay periods to the delaying portions 192 and 194. In this case, if the calculated delay period is shorter than a predetermined period, i.e., the guard interval time contained in the OFDM modulated signal, the delay period is set to be zero.

In response to the control signal from the maximum/relative-maximum auto-correlation detector 196, the complex-amplitude coefficient calculator 198 makes a calculation to determine the ratio of each of the relative-maximum auto-correlation values corresponding to the two delay signals to be removed to the maximum auto-correlation value, and sends the calculated ratios to the complex-amplitude adjusting portions 193 and 195 as complex-amplitude coefficients.

The delay-period calculator 197 and the complex-amplitude coefficient calculator 198 determine the delay periods and the complex-amplitude coefficients, respectively, by referring to the auto-correlation value supplied from the auto-correlation detector 181.

The delaying portions 192 and 194 delay the input signals based on the delay periods supplied from the delay-period calculator 197. In this case, if the delay periods are zero, that is, if the delay periods of the delay signals are shorter than the guard interval time of the OFDM modulated signal, it is not necessary to remove the delay signals, and the input signals are output without being delayed.

The complex-amplitude adjusting portions 193 and 195 perform amplitude adjustment based on the complex-amplitude coefficients supplied from the complex-amplitude coefficient calculator 198.

In this manner, the output of the adder 191 is negatively fed back to the input of the adder 191 from the negative feedback device consisting of the delaying portion 192 (194) and the amplitude adjusting portion 193 (195).

Accordingly, in the OFDM receiving apparatus shown in Fig. 17, the diversity-synthesized signal of the signal synthesizing portion 200 is supplied to the adder 191 of the delay equalizer 182. Then, the output of the adder 191 is supplied to the delaying portions 192 and 194 in which the signals are delayed based on the delay periods supplied from the delay-period calculator 197, and are further sent to the complex-amplitude adjusting portions 193 and 195, respectively, in which the amplitudes of the signals are adjusted based on the complex-amplitude coefficients supplied from the complex-amplitude coefficient calculator 198. Thus, the signals having adjusted delay periods and adjusted amplitudes are added in the adder 191 with opposite signs. As a result, signal components which are delayed later than the guard interval time of the OFDM modulated signal are eliminated, and the signals without unwanted waves are output to the OFDM demodulation unit 117.

According to the foregoing description, in the OFDM receiving apparatus constructed in accordance with the third embodiment of the present invention, the cross-correlation value of the output signals from the receivers 112a and 112b is detected before the output signals undergo diversity synthesizing. Then, diversity synthesizing is performed based on the cross-correlation value, and an auto-correlation value is detected for the diversity-synthesized signal by the auto-correlation detector 181. Subsequently, unwanted waves are removed from the synthesized signal by the delay equalizer 182 based on the auto-correlation detection value. It is thus possible to extract an effective symbol signal with a sufficient signal intensity and without delayed waves (unwanted waves) having a delay period longer than the guard interval time of the OFDM modulated signal.

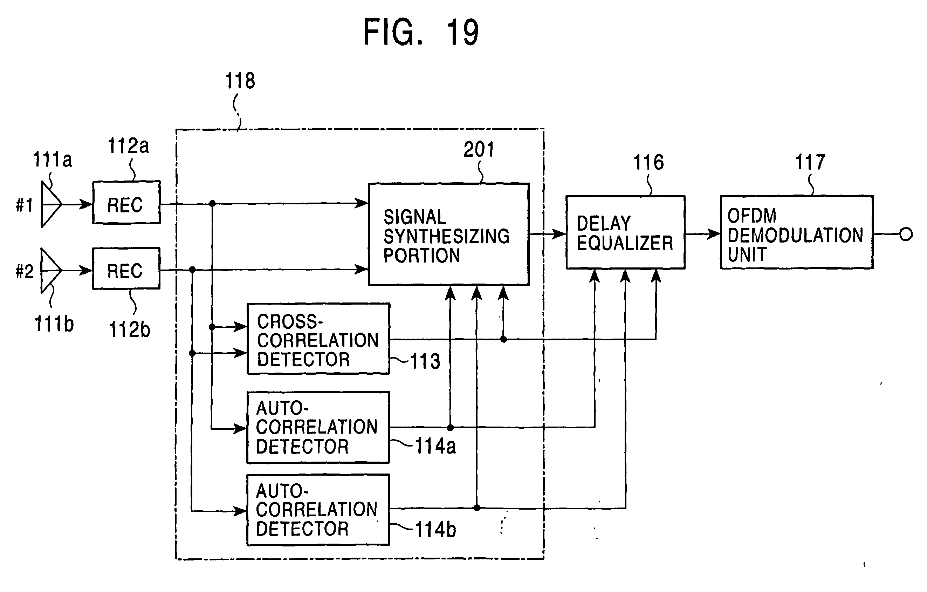

The configuration of the OFDM receiving apparatus according to the fourth embodiment of the present invention is shown in Fig. 19. The configuration of the OFDM receiving apparatus of this embodiment differs from that of the counterpart of the second embodiment in that a signal synthesizing portion 201 performs not only phase adjustment, but also amplitude adjustment by referring to not only a detection result of the cross-correlation detector 113, but also detection results of auto-correlation detectors 114a and 114b. The other configurations of this embodiment are similar to those of the second embodiment.

The OFDM receiving apparatus shown in Fig. 19 is formed of the following elements. Antennas 111a and 111b receive a #1-type OFDM modulated signal and a #2-type OFDM modulated signal, respectively. Receivers 112a and 112b receive the #1-type OFDM modulated signal and the #2-type OFDM modulated signal from the antennas 111a and 111b, respectively. A cross-correlation detector 113 detects a cross-correlation value between the output signals of the receivers 112a and 112b. Auto-correlation detectors 114a and 114b detect auto-correlation values from the output signals of the receivers 112a and 112b, respectively. The signal synthesizing portion 201 adjusts the phases and amplitudes of the output signals of the receivers 112a and 112b based on the detection results of the auto-correlation detectors 114a and 114b and the detection result of the cross-correlation detector 113, and then combines the output signals so as to form a synthesized signal. A delay equalizer 116 removes signal components delayed later than a predetermined period from the synthesized signal output from the signal synthesizing portion 201, based on the detection results of the auto-correlation detectors 114a and 114b and the detection result of the cross-correlation detector 113. An OFDM demodulation unit 117 demodulates the resulting OFDM modulated signal.

The cross-correlation detector 113, the auto-correlation detectors 114a and 114b, and the signal synthesizing portion 201 form the diversity synthesizer 118. The diversity synthesizer 118 performs diversity synthesizing after adjusting the phases of the output signals of the receivers 112a and 112b based on the detection result of the cross-correlation detector 113 and after adjusting the amplitudes of the signals based on the detection results of the auto-correlation detector 114a and 114b. The auto-correlation detectors 114a and 114b constitute a first auto-correlation detector of this embodiment.

In the OFDM receiving apparatus constructed as described above, signals received by the antennas 111a and 111b are respectively amplified and frequency-converted in the receivers 112a and 112b so as to be converted into baseband signals. The baseband signals are then input into the diversity synthesizer 118 as the #1-type signal and the #2-type signal. In the diversity synthesizer 118, the signal synthesizing portion 201 adjusts the output signals of the receivers 112a and 112b to be in phase with each other based on the detection result of the cross-correlation detector 113 and also adjusts the output signals to predetermined amplitudes based on the detection results of the auto-correlation detectors 114a and 114b, and then combines the signals to form a synthesized signal.

Subsequently, based on the detection results of the auto-correlation detectors 114a and 114b and the detection result of the cross-correlation detector 113, the delay equalizer 116 removes signal components which are delayed later than a predetermined period from the synthesized signal output from the signal synthesizing portion 201, i.e., signal components delayed later than the guard interval time of the OFDM modulated signal. Then, the OFDM demodulation unit 117 performs FFT processing on the output signal from the delay equalizer 116 so as to remove the guard intervals which were inserted when the signal was modulated. Thus, the effective symbols are extracted and demodulated.

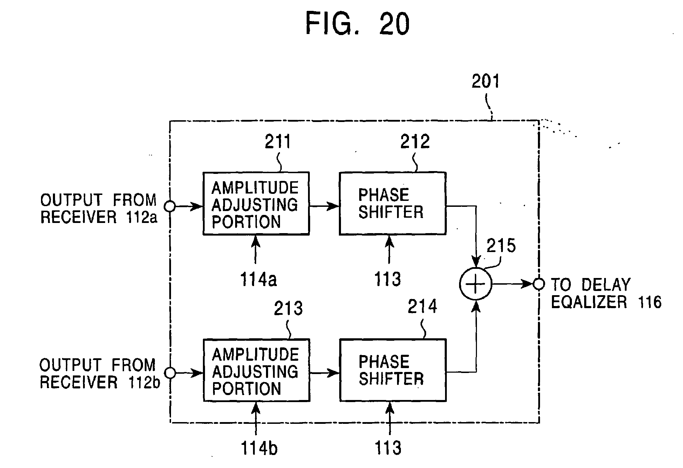

The specific configuration of the signal synthesizing portion 201 illustrated in Fig. 19 is shown in Fig. 20. In Fig. 20, the signal synthesizing portion 201 includes amplitude adjusting portions 211 and 213, phase shifters 212 and 214, and an adder 215. In the signal synthesizing portion 201, the amplitude adjusting portions 211 and 213 respectively adjust the amplitudes of the output signals of the receivers 112a and 112b based on the detection results of the auto-correlation detectors 114a and 114b, and the phase shifters 212 and 214 respectively adjust the amplitude-adjusted signals to be in phase with each other by referring to the detection result (cross-correlation value) of the cross-correlation detector 113. Then, the resulting signals are added in the adder 215, and the synthesized signal is output to the delay equalizer 216. In this case, in the amplitude adjusting portions 211 and 213, the amplitudes of the signals are adjusted proportional to the maximum values of the auto-correlation values detected by the auto-correlation detectors 114a and 114b, respectively, thereby making it possible to maximize the C/N ratio of the synthesized signal output from the adder 215.

In the OFDM receiving apparatus constructed in accordance with the fourth embodiment of the present invention, the cross-correlation value and the auto-correlation values of the output signals from the receivers 112a and 112b are detected before the output signals undergo diversity synthesizing. Then, diversity synthesizing is performed based on the cross-correlation value and the auto-correlation values, and unwanted waves are removed from the synthesized signal by the delay equalizer 116 based on the auto-correlation detection values and the cross-correlation value. It is thus possible to extract an effective symbol signal with a sufficient signal intensity and without delayed waves (unwanted waves) having a delay period longer than the guard interval time of the OFDM modulated signal.

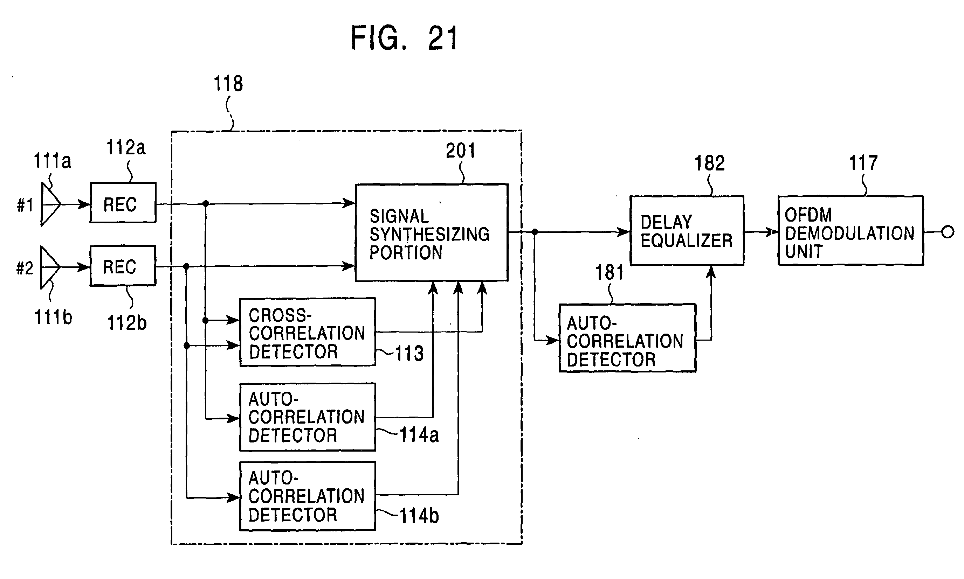

The configuration of the OFDM receiving apparatus according to the fifth embodiment of the present invention is shown in Fig. 21. The configuration of this OFDM receiving apparatus is different from that of the counterpart of the fourth embodiment in the following point. A delay equalizer 182 refers to an auto-correlation value detected by an auto-correlation detector 181 rather than the detection results of a cross-correlation detector 113 and auto-correlation detectors 114a and 114b, and eliminates unwanted signal components from a diversity-synthesized signal by using the auto-correlation value detected by the auto-correlation detector 181. The other configurations of the fifth embodiment are similar to those of the fourth embodiment.

The OFDM receiving apparatus shown in Fig. 21 includes the following elements. Antennas 111a and 111b receive a #1-type OFDM modulated signal and a #2-type OFDM modulated signal, respectively. Receivers 112a and 112b receive the #1-type OFDM modulated signal and the #2-type OFDM modulated signal from the antennas 111a and 111b, respectively. A cross-correlation detector 113 detects a cross-correlation value between the output signals of the receivers 112a and 112b. Auto-correlation detectors 114a and 114b detect auto-correlation values from the output signals of the receivers 112a and 112b, respectively. A signal synthesizing portion 201 adjusts the phases and amplitudes of the output signals of the receivers 112a and 11-2b based on the detection results of the auto-correlation detectors 114a and 114b and the detection result of the cross-correlation detector 113, and then combines the output signals so as to form a synthesized signal. The auto-correlation detector 181 detects an auto-correlation value of the output signal from the signal synthesizing portion 201. The delay equalizer 182 removes signal components delayed later than a predetermined period from the synthesized signal output from the signal synthesizing portion 201, based on the detection result of the auto-correlation detector 181. An OFDM demodulation unit 117 demodulates the resulting OFDM modulated signal.

The cross-correlation detector 113, the auto-correlation detectors 114a and 114b, and the signal synthesizing portion 201 form the diversity synthesizer 118. The diversity synthesizer 118 performs diversity synthesizing after adjusting the phases of the output signals of the receivers 112a and 112b based on the detection result of the cross-correlation detector 113 and after adjusting the amplitudes of the signals based on the detection results of the auto-correlation detector 114a and 114b. The auto-correlation detectors 114a and 114b constitute a first auto-correlation detector of this embodiment, while the auto-correlation detector 181 forms a second auto-correlation detector of this embodiment.

In the OFDM receiving apparatus constructed as described above, signals received by the antennas 111a and 111b are respectively amplified and frequency-converted in the receivers 112a and 112b so as to be converted into baseband signals. The baseband signals are then input into the diversity synthesizer 118 as the #1-type signal and the #2-type signal. In the diversity synthesizer 118, the signal synthesizing portion 201 adjusts the output signals of the receivers 112a and 112b to be in phase with each other based on the detection result of the cross-correlation detector 113 and also adjusts the output signals to predetermined amplitudes based on the detection results of the auto-correlation detectors 114a and 114b, and then combines the signals to form a synthesized signal.

Subsequently, based on the detection result of the auto-correlation detector 181, the delay equalizer 182 removes signal components which are delayed later than a predetermined period from the synthesized signal output from the signal synthesizing portion 201, i.e., signal components delayed later than the guard interval time of the OFDM modulated signal. Then, the OFDM demodulation unit 117 performs FFT processing on the output signal from the delay equalizer 182 so as to remove the guard intervals which were inserted when the signal was modulated. Thus, the effective symbols are extracted and demodulated.

In the OFDM receiving apparatus constructed in accordance with the fifth embodiment of the present invention, the cross-correlation value and the auto-correlation values of the output signals from the receivers 112a and 112b are detected before the output signals undergo diversity synthesizing. Then, diversity synthesizing is performed based on the cross-correlation value and the auto-correlation values, and an auto-correlation value is again detected for the synthesized signal. Then, the delay equalizer 182 removes unwanted waves from the synthesized signal based on the auto-correlation detection value detected by the auto-correlation detector 181. It is thus possible to extract an effective symbol signal with a sufficient signal intensity and without delayed waves (unwanted waves) having a delay period longer than the guard interval time of the OFDM modulated signal.

According to the OFDM receiving apparatuses of the second through fifth embodiments of the present invention, diversity synthesizing is performed on a plurality of received signals, and then, unwanted waves are removed from the synthesized signal by the delay equalizer.

The configuration and the operation of the OFDM receiving apparatuses according to the second through fifth embodiments of the present invention have been discussed in detail. However, the present invention is not restricted to these embodiments, and various modifications and equivalent arrangements may be made within the scope of the appended claims.

For example, the number of antennas is not limited to two, and may be three or more. Additionally, although two feedback devices are provided to eliminate two delay signals, more than two feedback devices may be provided to eliminate a corresponding number of delay signals.

A detailed description is now given of OFDM receiving apparatuses according to sixth through ninth embodiments of the present invention with reference to the drawings. In the OFDM receiving apparatuses of the sixth through ninth embodiments, a diversity synthesizer for performing diversity synthesizing and a delay equalizer for removing signal components (delayed waves) delayed later than a predetermined period from an OFDM modulated signal are disposed before a FFT processor for performing FFT processing on effective symbols of the OFDM modulated signal. More particularly, the delay equalizer is disposed before the diversity synthesizer. It is thus possible to extract an effective-symbol signal having a sufficient signal intensity and without signal components having a considerably long delay period. It is now assumed that the number of antennas provided for each of the OFDM receiving apparatuses is two.

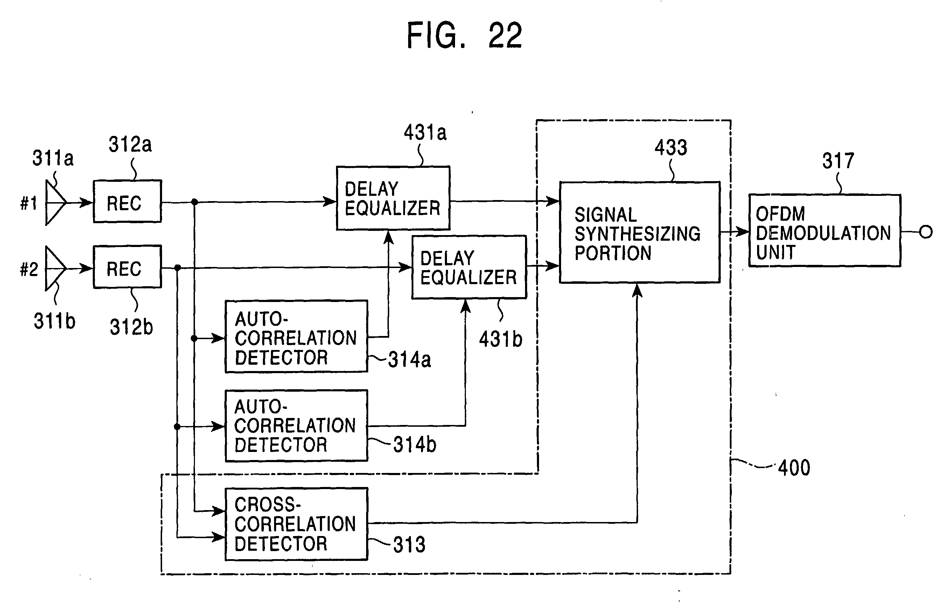

Fig. 22 illustrates the configuration of an OFDM receiving apparatus according to the sixth embodiment of the present invention. In this embodiment, unwanted delayed waves are removed by a delay equalizer provided for each of the receivers, and then, diversity synthesizing is performed.

The OFDM receiving apparatus shown in Fig. 22 is formed of the following elements. Antennas 311a and 311b, which are disposed to separate from each other, receive a #1-type OFDM modulated signal and a #2-type OFDM modulated signal, respectively. Receivers 312a and 312b respectively receive the #1-type OFDM modulated signal and the #2-type OFDM modulated signal from the antennas 311a and 311b. A cross-correlation detector 313 detects a cross-correlation value between the output signals from the receivers 312a and 312b. Auto-correlation detectors 314a and 314b respectively detect auto-correlation values of the output signals from the receivers 312a and 312b. Delay equalizers 431a and 431b respectively eliminate signal components which are delayed later than a predetermined period from the output signals of the receivers 312a and 312b based on the detection results of the auto-correlation detectors 314a and 314b. A signal synthesizing portion 433 combines the output signals of the delay equalizers 431a and 431b based on the detection result of the cross-correlation detector 313 so as to generate a synthesized signal according to a predetermined diversity synthesizing method. An OFDM demodulation unit 317 demodulates the output signal of the signal synthesizing portion 433. The cross-correlation detector 313 and the signal synthesizing portion 433 form a diversity synthesizer 400. The cross-correlation detector 313 constitutes a first cross-correlation detector of this embodiment. The specific configuration of the OFDM demodulation unit 117 is similar to that of a known OFDM demodulation unit.

In the OFDM receiving apparatus constructed as described above, signals received by the antennas 311a and 311b are respectively amplified and frequency-converted in the receivers 312a and 312b so as to be converted into baseband signals. The baseband signals are then respectively input into the delay equalizers 431a and 431b as the #1-type signal and the #2-type signal. Based on the detection results of the auto-correlation detectors 314a and 314b, the delay equalizers 431a and 431b respectively remove signal components which are delayed later than a predetermined period, i.e., signal components delayed later than the guard interval period of the OFDM modulated signal, from the output signals of the receivers 312a and 312b.

The output signals of the delay equalizers 431a and 431b are then adjusted to be in phase with each other in the signal synthesizing portion 433 based on the detection result of the cross-correlation detector 313, and are combined to be a diversity-synthesized signal.

Subsequently, the OFDM demodulation unit 317 removes the guard interval symbols which were inserted when the signal was modulated from the synthesized signal output from the signal synthesizing portion 433, thereby extracting effective symbols.

As discussed above, in the OFDM receiving apparatus according to the sixth embodiment of the present invention, the cross-correlation value and the auto-correlation values of the output signals from the receivers 312a and 312b are detected before the output signals undergo diversity synthesizing. Then, based on the auto-correlation values, the delay equalizers 431a and 431b eliminate unwanted waves which are delayed later than the guard interval period from the output signals of the receivers 312a and 312b, respectively. Thereafter, diversity synthesizing is performed on the output signals from the delay equalizers 431a and 431b based on the cross-correlation value. It is thus possible to extract an effective symbol signal with a sufficient signal intensity and without delayed waves (unwanted waves) having a delay period longer than the guard interval period.

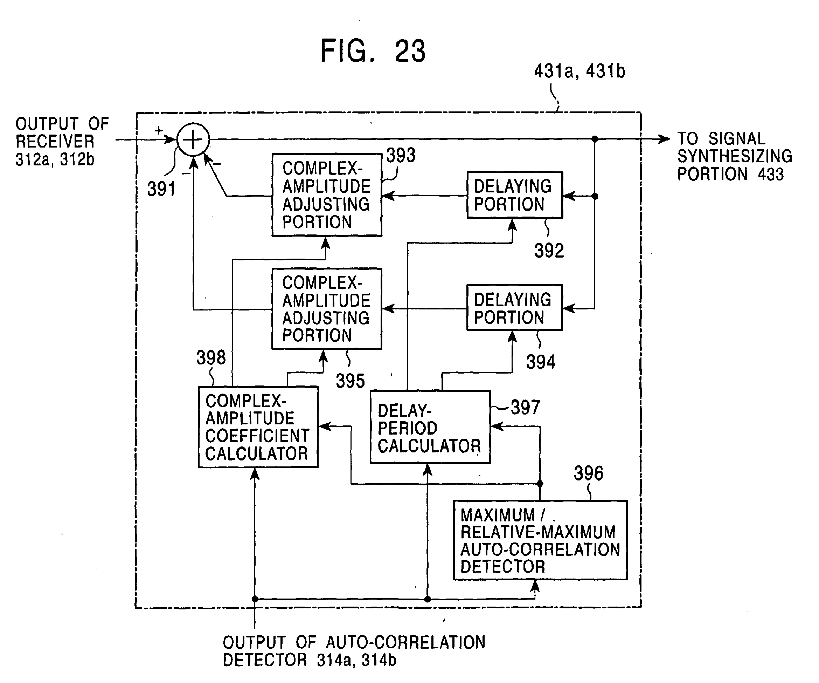

The specific configuration of the delay equalizer 431a (431b) illustrated in Fig. 22 is shown in Fig. 23. The delay equalizer 431a (431b) shown in Fig. 23 is adapted to delay up to two signals. The delay equalizer 431a (431b) is formed of an adder 391, delaying portions 392 and 394 for delaying the output of the adder 391 for a predetermined period, complex-amplitude adjusting portions 393 and 395 for respectively adjusting the complex amplitudes of the output signals from the delaying portions 392 and 394, a delay-period calculator 397 for determining delay periods to be set in the delaying portions 392 and 394, a complex-amplitude coefficient calculator 398 for determining complex-amplitude coefficients, i.e., the amounts of amplitudes to be adjusted, in the complex-amplitude adjusting portions 393 and 395, and a maximum/relative-maximum auto-correlation detector 396 for detecting the maximum value and the relative-maximum value from the supplied auto-correlation values.

In this delay equalizer 431a (431b), a negative feedback device formed of the delaying portion 392 and the complex-amplitude adjusting portion 393 removes one delay signal, while another negative feedback device formed of the delaying portion 394 and the complex-amplitude adjusting portion 395 removes the other delay signal.

Upon receiving the auto-correlation values from the auto-correlation detectors 314a and 314b, the maximum/relative-maximum auto-correlation detector 396 detects the maximum value and the relative-maximum value from the auto-correlation values, and sends a control signal indicating the maximum/relative-maximum auto-correlation values to the delay-period calculator 397 and the complex-amplitude coefficient calculator 398.

In response to the control signal from the maximum/relative-maximum auto-correlation detector 396, the delay-period calculator 397 determines a delay period from when the maximum auto-correlation value is detected to when each of the relative-maximum auto-correlation values corresponding to the two delay signals to be removed is detected, and sends the calculated delay periods to the delaying portions 392 and 394. In this case, if the calculated delay period is shorter than a predetermined period, i.e., the guard interval time contained in the OFDM modulated signal, the delay period is set to be zero.

In response to the control signal from the maximum/relative-maximum auto-correlation detector 396, the complex-amplitude coefficient calculator 398 conducts a calculation to determine the ratio of each of the relative-maximum auto-correlation values corresponding to the two delay signals to be removed to the maximum auto-correlation value, and sends the calculated ratios to the complex-amplitude adjusting portions 393 and 395 as complex-amplitude coefficients.

The delay-period calculator 397 and the complex-amplitude coefficient calculator 398 determine the delay periods and the complex-amplitude coefficients, respectively, by referring to the auto-correlation values supplied from the auto-correlation detectors 314a and 314b.

The delaying portions 392 and 394 delay the input signals based on the delay periods supplied from the delay-period calculator 397. In this case, if the delay periods are zero, that is, if the delay periods of the delay signals are shorter than the guard interval time of the OFDM modulated signal, it is not necessary to remove the delay signals, and the input signals are output without being delayed.

The complex-amplitude adjusting portions 393 and 395 perform amplitude adjustment based on the complex-amplitude coefficients supplied from the complex-amplitude coefficient calculator 398.

In this manner, the output of the adder 391 is fed back to the input of the adder 191 via a negative feedback device consisting of the delaying portion 392 and the amplitude adjusting portion 393 and the other negative feedback device consisting of the delaying portion 394 and the amplitude adjusting portion 395.

In the delay equalizer 431a (431b) shown in Fig. 23, the output of the receiver 312a (312b) is supplied to the adder 391. Then, the delaying portions 392 and 394 adjust the delay periods of the output from the adder 391 based on the delay periods supplied from the delay-period calculator 397, and the complex-amplitude adjusting portions 393 and 395 respectively adjust the amplitudes of the output signals from the delaying portions 392 and 394 based on the amplitude coefficients supplied from the complex-amplitude coefficient calculator 398. Subsequently, the signals having adjusted delay periods and adjusted amplitudes are added in the adder 391 with opposite signs. As a result, signal components delayed later than the guard interval period of the OFDM modulated signal can be eliminated from the output signals from the receivers 312a (312b), and the signal without unwanted waves is output to the signal synthesizing portion 433.

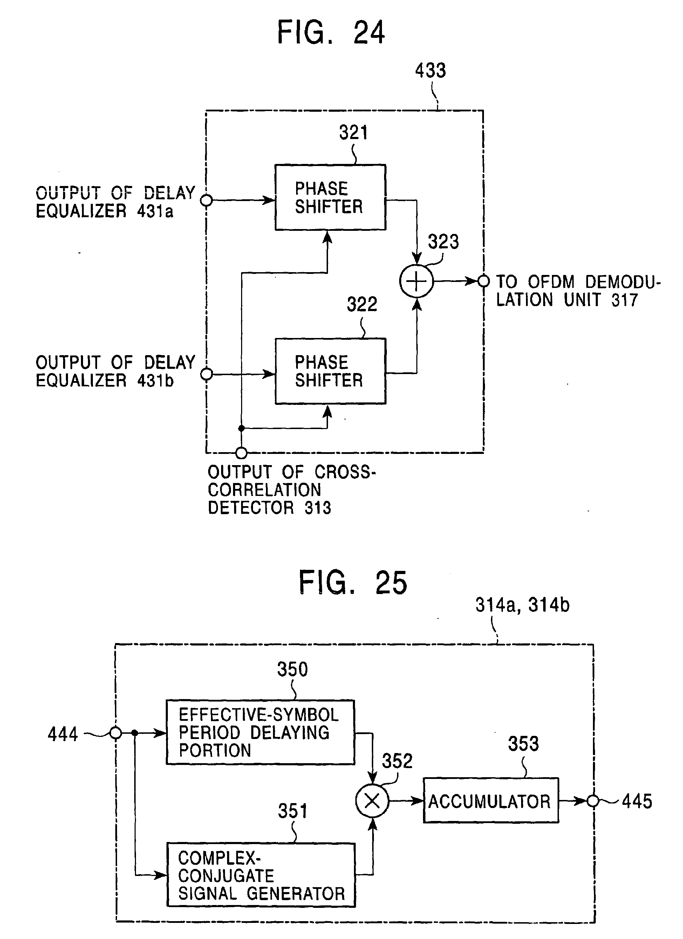

The specific configuration of the signal synthesizing portion 433 illustrated in Fig. 22 is shown in Fig. 24. In Fig. 24, the signal synthesizing portion 433 includes phase shifters 321 and 322, and an adder 323. In the signal synthesizing portion 433, the phase shifters 321 and 322 respectively adjust the output signals from the delay equalizers 431a and 431b to be in phase with each other by referring to the detection result (cross-correlation value) of the cross-correlation detector 313. Then, the resulting signals are added in the adder 323, and the synthesized signal is output to the OFDM demodulation unit 317. In this manner, the signals output from the delay equalizers 431a and 431b are combined after being adjusted to be in phase with each other, thereby making it possible to maximize power of the synthesized signal.

The specific configuration of the auto-correlation detector 314a (314b) illustrated in Fig. 22 is shown in Fig. 25. In Fig. 25, the auto-correlation detector 314a (314b) is formed of an effective-symbol period delaying portion 350 for outputting a delay signal which is delayed later than a signal supplied to the auto-correlation detector 314a (314b) by an effective symbol period, a complex-conjugate signal generator 351 for generating a complex-conjugate signal from the signal supplied to the auto-correlation detector 314a (314b) and for outputting it, a multiplier 352 for multiplying the delay signal output from the effective-symbol period delaying portion 350 with the complex-conjugate signal, and an accumulator 353 for accumulating the multiplication results of the multiplier 352 for a predetermined period.

In the above-configured auto-correlation detector 314a (314b), the effective-symbol period delaying portion 350 outputs a delay signal which is delayed by an effective symbol period later than the signal supplied to the auto-correlation detector 314a (314b) via an input terminal 444. Meanwhile, the complex-conjugate signal generator 351 generates a complex-conjugate signal from the signal supplied via the input terminal 444 and outputs it. Then, the multiplier 352 multiplies the delay signal with the complex-conjugate signal, and the multiplication result of the multiplier 352 is accumulated in the accumulator 353 for a predetermined period. Thus, the accumulated result of the accumulator 353 is output to the delay equalizer 431a (431b) as the auto-correlation value via an output terminal 445.

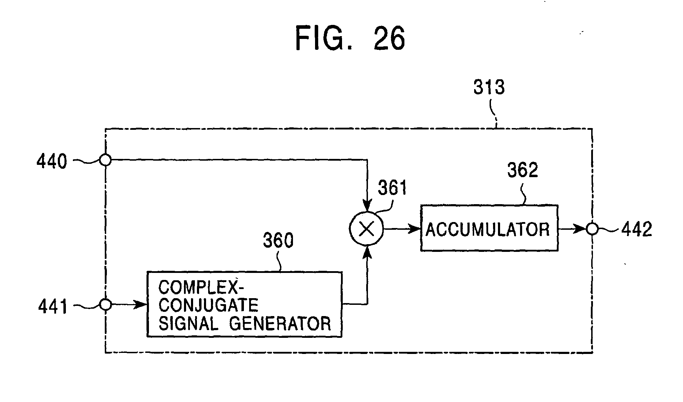

The specific configuration of the cross-correlation detector 313 illustrated in Fig. 22 is shown in Fig. 26. In Fig. 26, the cross-correlation detector 313 includes a complex-conjugate signal generator 360 for generating a complex-conjugate signal from one of the signals supplied to the cross-correlation detector 313 and for outputting it, a multiplier 361 for multiplying the complex-conjugate signal with the other signal supplied to the cross-correlation detector 313, and an accumulator 362 for accumulating the multiplication results of the multiplier 361 for a predetermined period.

In the cross-correlation detector 313 configured as discussed above, one of the signals supplied to the cross-correlation detector 313 via input terminals 440 and 441 (in this example, the signal input via the input terminal 441) is input into the complex-conjugate signal generator 360. The complex-conjugate signal generator 360 then generates a complex-conjugate signal and outputs it to the multiplier 361. Then, the complex-conjugate signal is multiplied with the other signal supplied to the cross-correlation detector 313 via the input terminal 440 in the multiplier 361.

Further, the multiplication results obtained by the multiplier 361 are accumulated for a predetermined period in the accumulator 362. Then, the accumulated result of the accumulator 362 is output to the signal synthesizing portion 433 via an output terminal 442 as the cross-correlation value.

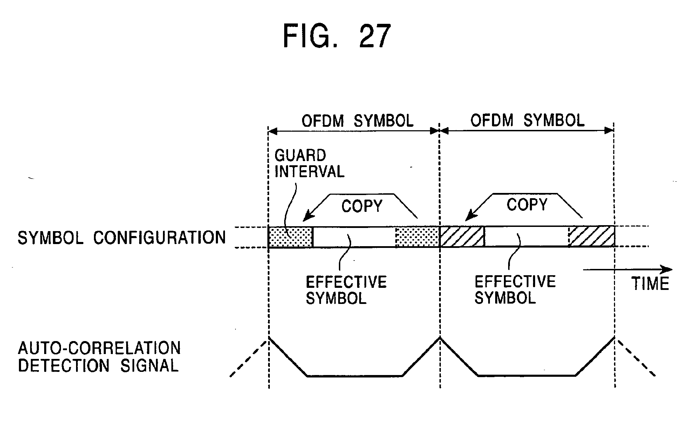

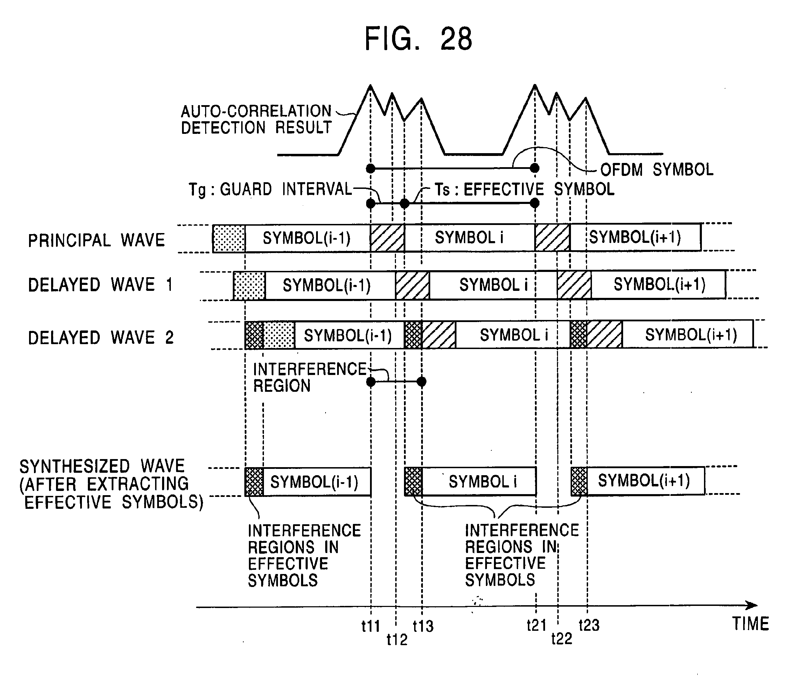

A description is now given, with reference to Figs. 27 and 28, of the data configuration of the OFDM modulated signal and the removing operation of the delayed waves in the above-constructed OFDM receiving apparatus. Fig. 27 illustrates the relationship between the data configuration of the OFDM modulated signal and the auto-correlation detection signal. In performing OFDM modulation, the end of an effective symbol for a predetermined period is copied to the head of the effective symbol as a guard interval. Then, the signal indicating the sum of the guard interval and the effective symbol is sent as an OFDM symbol.

Accordingly, in demodulating the OFDM modulated signal, it is necessary to remove the guard intervals to extract the effective symbol signal. In this case, the auto-correlation value of the received signal is detected by the auto-correlation detector. Then, the auto-correlation value becomes maximum at the start of the guard interval signal. Accordingly, by monitoring the auto-correlation value of the received signal, the output timing of the OFDM symbols can be identified in the OFDM receiving apparatus.

Fig. 28 illustrates the influence of delayed waves of an OFDM modulated signal on effective symbols of a synthesized wave. It is now assumed that a principal wave, delayed wave 1, and delayed wave 2 are received by the OFDM receiving apparatus of this embodiment. By detecting the maximum auto-correlation value, it is seen that the principal wave forms an OFDM symbol i from time t11 to t21 as an OFDM symbol unit. The output period of the OFDM symbol i includes the output period of the effective symbol and the guard interval period copied from the end of the effective symbol.

Similarly, by detecting the relative-maximum auto-correlation value, which is the second greatest value next to the maximum auto-correlation value, it is revealed that delayed wave 1 forms an OFDM symbol i from time t12 to t22 as an OFDM symbol unit. By detecting the second greatest relative-maximum auto-correlation value, it is revealed that that delayed wave 2 forms an OFDM symbol i from time t13 to t23 as an OFDM symbol unit.

Since the OFDM symbol of delayed wave 1 starts at time t12, which is within the guard interval of the principal wave, the occurrence of direct interference can be prevented. However, the OFDM symbol of delayed wave 2, which has a longer delay period than delayed wave 1, starts at time t13, which is outside the guard interval of the principal wave. As a result, the symbol i of the synthesized wave obtained after detecting the effective symbol disadvantageously contains the end of the symbol (i-1) of delayed wave 2, resulting in interference regions.

It is thus necessary to eliminate delayed waves having a delay period longer than the guard interval period of the principal wave. According to the OFDM receiving apparatus shown in Fig. 22 provided with the delay equalizer 431a (431b) shown in Fig. 23, after delayed waves are eliminated by the feedback devices of the delay equalizer 431a (431b), the resulting signal is input into the OFDM demodulation unit 317, thereby obtaining a high-level demodulated signal.

In the OFDM receiving apparatus constructed in accordance with the sixth embodiment of the present invention, the cross-correlation value and the auto-correlation values of the output signals from the receivers 312a and 312b are detected before the output signals undergo diversity synthesizing. Then, after unwanted waves are removed from the synthesized signal by the delay equalizer 431a (431b) based on the auto-correlation detection values, diversity synthesizing is performed on the output signals of the delay equalizer 431a (431b) based on the cross-correlation value. It is thus possible to extract an effective symbol signal with a sufficient signal intensity and without delayed waves (unwanted waves) having a delay period longer than the guard interval time of the OFDM modulated signal.

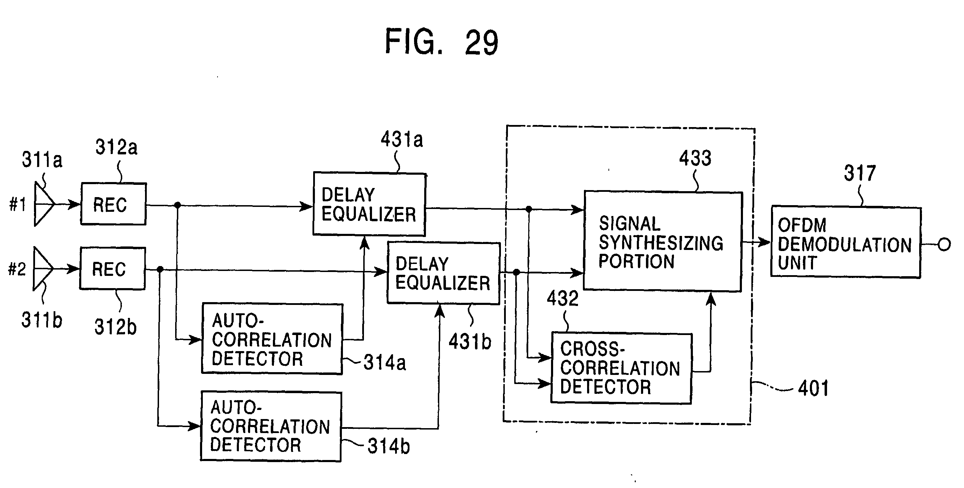

The configuration of the OFDM receiving apparatus according to the seventh embodiment of the present invention is shown in Fig. 29. The OFDM receiving apparatus of this embodiment differs from that of the sixth embodiment in that a cross-correlation value used in a diversity synthesizer is determined between the output signals of delay equalizers 431a and 431b rather than between the output signals of receivers 312a and 312b. The other configurations of the seventh embodiment are similar to those of the sixth embodiment. A cross-correlation detector 432 is configured similarly to the cross-correlation detector 313 shown in Fig. 22.

The OFDM receiving apparatus shown in Fig. 29 is formed of the following elements. Antennas 311a and 311b, which are disposed to separate from each other, receive a #1-type OFDM modulated signal and a #2-type OFDM modulated signal, respectively. Receivers 312a and 312b respectively receive the #1-type OFDM modulated signal and the #2-type OFDM modulated signal from the antennas 311a and 311b. Auto-correlation detectors 314a and 314b respectively detect auto-correlation values of the output signals from the receivers 312a and 312b. Delay equalizers 431a and 431b respectively eliminate signal components which are delayed later than a predetermined period from the output signals of the receivers 312a and 312b based on the detection results of the auto-correlation detectors 314a and 314b. The cross-correlation detector 432 detects a cross-correlation value between the output signals from the delay equalizers 431a and 431b. A signal synthesizing portion 433 combines the output signals of the delay equalizers 431a and 431b based on the detection result of the cross-correlation detector 432 so as to generate a synthesized signal according to a predetermined diversity synthesizing method. An OFDM demodulation unit 317 demodulates the output signal of the signal synthesizing portion 433. The cross-correlation detector 432 and the signal synthesizing portion 433 constitute the diversity synthesizer 401. The cross-correlation detector 432 forms a second cross-correlation detector of this embodiment.

In the OFDM receiving apparatus constructed as described above, signals received by the antennas 311a and 311b are respectively amplified and frequency-converted in the receivers 312a and 312b so as to be converted into baseband signals. The baseband signals are then respectively input into the delay equalizers 431a and 431b as the #1-type signal and the #2-type signal.

Based on the detection results of the auto-correlation detectors 314a and 314b, the delay equalizers 431a and 431b respectively remove signal components which are delayed later than a predetermined period, i.e., signal components delayed later than the guard interval period of the OFDM modulated signal, from the output signals of the receivers 312a and 312b.

The output signals of the delay equalizers 431a and 431b are then adjusted to be in phase with each other in the signal synthesizing portion 433 based on the detection result of the cross-correlation detector 432, and are combined to be a diversity-synthesized signal.

Subsequently, the OFDM demodulation unit 317 removes the guard symbols which were inserted when the signal was modulated from the synthesized signal output from the signal synthesizing portion 433, thereby extracting effective symbols.

As discussed above, in the OFDM receiving apparatus according to the seventh embodiment of the present invention, the auto-correlation values of the output signals from the receivers 312a and 312b are detected before the output signals undergo diversity synthesizing. Then, based on the auto-correlation values, the delay equalizers 431a and 431b eliminate unwanted waves which are delayed later than the guard interval period from the output signals of the receivers 312a and 312b, respectively. Thereafter, diversity synthesizing is performed on the output signals from the delay equalizers 431a and 431b based on the cross-correlation value of the output signals between the delay equalizers 431a and 431b. It is thus possible to extract an effective symbol signal with a sufficient signal intensity and without delayed waves (unwanted waves) having a delay period longer than the guard interval period.

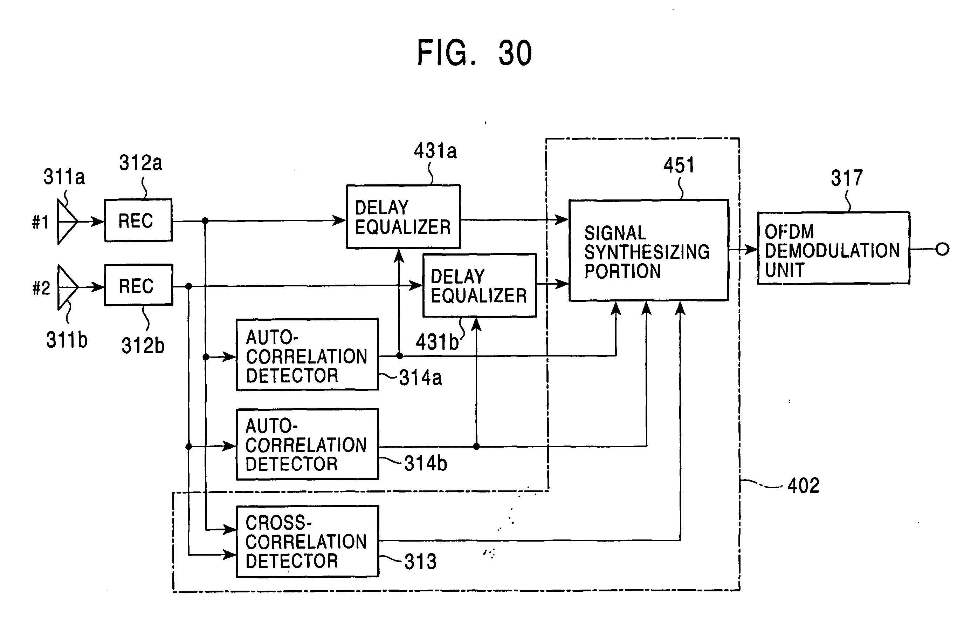

The configuration of the OFDM receiving apparatus according to the eighth embodiment of the present invention is shown in Fig. 30. The OFDM receiving apparatus of the eighth embodiment differs from the counterpart of the sixth embodiment in that a signal synthesizing portion 451 performs diversity synthesizing on output signals of delay equalizers 431a and 431b based on auto-correlation values and a cross-correlation value detected for the output signals from the receivers 312a and 312b. The other configurations of the eighth embodiment are similar to those of the sixth embodiment.

The OFDM receiving apparatus shown in Fig. 30 is formed of the following elements. Antennas 311a and 311b, which are disposed to separate from each other, receive a #1-type OFDM modulated signal and a #2-type OFDM modulated signal, respectively. Receivers 312a and 312b respectively receive the #1-type OFDM modulated signal and the #2-type OFDM modulated signal from the antennas 311a and 311b. A cross-correlation detector 313 detects a cross-correlation value between the output signals from the receivers 312a and 312b. Auto-correlation detectors 314a and 314b respectively detect auto-correlation values of the output signals from the receivers 312a and 312b. Delay equalizers 431a and 431b respectively eliminate signal components which are delayed later than a predetermined period from the output signals of the receivers 312a and 312b based on the detection results of the auto-correlation detectors 314a and 314b. The signal synthesizing portion 451 combines the output signals of the delay equalizers 431a and 431b based on the detection results of the auto-correlation detectors 314a and 314b and the detection result of the cross-correlation detector 313 so as to generate a synthesized signal according to a predetermined diversity synthesizing method. An OFDM demodulation unit 317 demodulates the output signal of the signal synthesizing portion 451. The cross-correlation detector 313 and the signal synthesizing portion 451 form a diversity synthesizer 402.

In the OFDM receiving apparatus constructed as described above, signals received by the antennas 311a and 311b are respectively amplified and frequency-converted in the receivers 312a and 312b so as to be converted into baseband signals. The baseband signals are then respectively input into the delay equalizers 431a and 431b as the #1-type signal and the #2-type signal. Based on the detection results of the auto-correlation detectors 314a and 314b, the delay equalizers 431a and 431b respectively remove signal components which are delayed later than a predetermined period, i.e., signal components delayed later than the guard interval period of the OFDM modulated signal, from the output signals of the receivers 312a and 312b.

The output signals of the delay equalizers 431a and 431b are then adjusted to be predetermined amplitudes in the signal synthesizing portion 451 based on the detection results of the auto-correlation detectors 314a and 314b, and are also adjusted in phase with each other in the signal synthesizing portion 451 based on the detection result of the cross-correlation detector 313, and are combined to be a diversity-synthesized signal.

Subsequently, the OFDM demodulation unit 317 removes the guard symbols which were inserted when the signal was modulated from the synthesized signal output from the signal synthesizing portion 451, thereby extracting effective symbols.

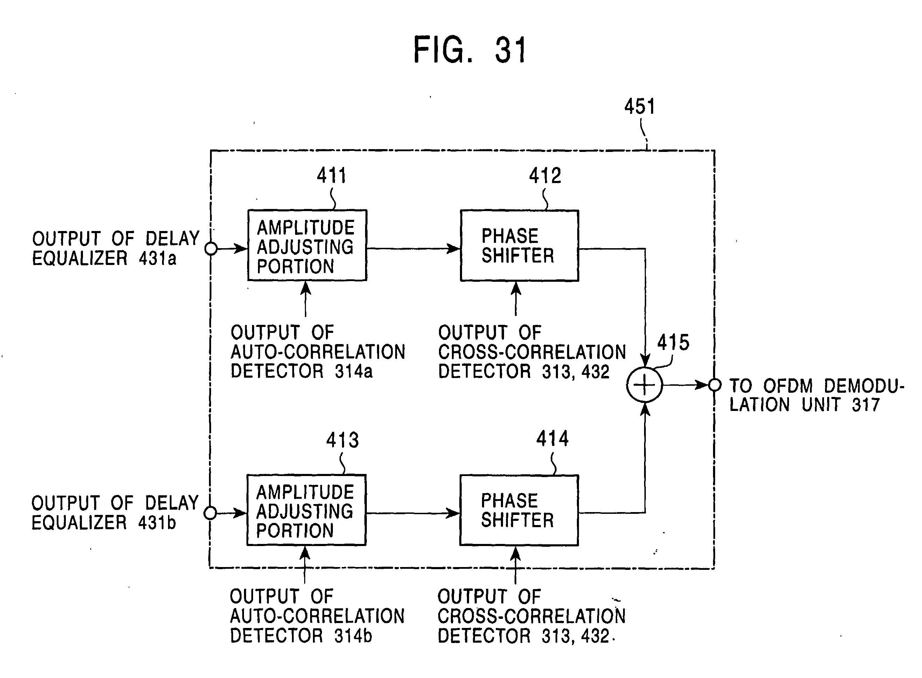

The specific configuration of the signal synthesizing portion 451 illustrated in Fig. 30 is shown in Fig. 31. In Fig. 31, the signal synthesizing portion 451 includes amplitude adjusting portions 411 and 413, phase shifters 412 and 414, and an adder 415. In the signal synthesizing portion 451, the amplitude adjusting portions 411 and 413 respectively adjust the amplitudes of the output signals from the delay equalizers 431a and 431b based on the detection result of the auto-correlation detectors 314a and 314b, and the amplitude-adjusted signals are then adjusted to be in phase with each other by the phase shifters 412 and 414 by referring to the detection result (control signal) of the cross-correlation detector 313. Then, the resulting signals are added in the adder 415, and the synthesized signal is output to the OFDM demodulation unit 317.

In this case, the amplitude adjusting portions 411 and 413 adjust the amplitudes of the output signals proportional to the maximum values of the auto-correlation values detected by the auto-correlation detectors 314a and 314b, thereby making it possible to maximize the C/N ratio of the synthesized signal output from the adder 415.

As discussed above, in the OFDM receiving apparatus according to the eighth embodiment of the present invention, the cross-correlation value and the auto-correlation values of the output signals from the receivers 312a and 312b are detected before the output signals undergo diversity synthesizing. Then, based on the auto-correlation values, the delay equalizers 431a and 431b eliminate unwanted waves which are delayed later than the guard interval period from the output signals of the receivers 312a and 312b, respectively. Thereafter, diversity synthesizing is performed on the output signals from the delay equalizers 431a and 431b based on the auto-correlation values and the cross-correlation value. It is thus possible to extract an effective symbol signal with a sufficient signal intensity and without delayed waves (unwanted waves) having a delay period longer than the guard interval period.

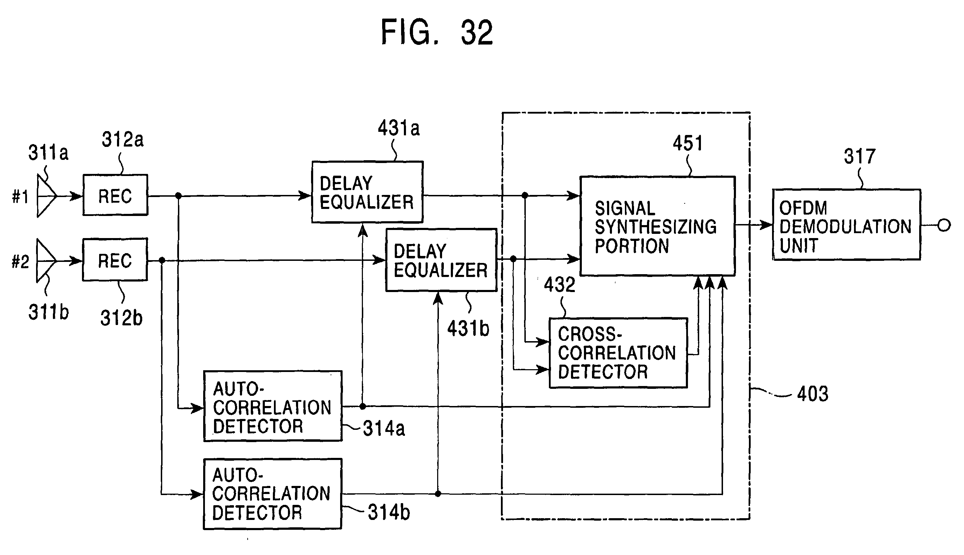

The configuration of the OFDM receiving apparatus according to the ninth embodiment of the present invention is shown in Fig. 32. The OFDM receiving apparatus of the ninth embodiment differs from that of the eighth embodiment in that a cross-correlation detector 432 for detecting a cross-correlation value between the output signals of delay equalizers 431a and 431b is disposed in a diversity synthesizer, which enables the diversity synthesizer to use the detection result of the cross-correlation detector 432. The other configurations of the ninth embodiment are similar to those of the counterparts of the eighth embodiment.

The OFDM receiving apparatus shown in Fig. 32 is formed of the following elements. Antennas 311a and 311b, which are disposed to separate from each other, receive a #1-type OFDM modulated signal and a #2-type OFDM modulated signal, respectively. Receivers 312a and 312b respectively receive the #1-type OFDM modulated signal and the #2-type OFDM modulated signal from the antennas 311a and 311b. Auto-correlation detectors 314a and 314b respectively detect auto-correlation values of the output signals from the receivers 312a and 312b. Delay equalizers 431a and 431b respectively eliminate signal components which are delayed later than a predetermined period from the output signals of the receivers 312a and 312b based on the detection results of the auto-correlation detectors 314a and 314b. The cross-correlation detector 432 detects a cross-correlation value between the output signals from the delay equalizers 431a and 431b. A signal synthesizing portion 451 combines the output signals of the delay equalizers 431a and 431b based on the detection results of the auto-correlation detectors 314a and 314b and the detection result of the cross-correlation detector 432 so as to generate a synthesized signal according to a predetermined diversity synthesizing method. An OFDM demodulation unit 317 demodulates the output signal of the signal synthesizing portion 451. The cross-correlation detector 432 and the signal synthesizing portion 451 form a diversity synthesizer 403.

In the OFDM receiving apparatus constructed as described above, signals received by the antennas 311a and 311b are respectively amplified and frequency-converted in the receivers 312a and 312b so as to be converted into baseband signals. The baseband signals are then respectively input into the delay equalizers 431a and 431b as the #1-type signal and the #2-type signal. Based on the detection results of the auto-correlation detectors 314a and 314b, the delay equalizers 431a and 431b respectively remove signal components which are delayed later than a predetermined period, i.e., signal components delayed later than the guard interval period of the OFDM modulated signal, from the output signals of the receivers 312a and 312b.

The output signals of the delay equalizers 431a and 431b are then adjusted to be predetermined amplitudes in the signal synthesizing portion 451 based on the detection results of the auto-correlation detectors 314a and 314b, and are also adjusted in phase with each other in the signal synthesizing portion 451 based on the detection result of the cross-correlation detector 432, and are combined to be a diversity-synthesized signal.

Subsequently, the OFDM demodulation unit 317 removes the guard symbols which were inserted when the signal was modulated from the synthesized signal output from the signal synthesizing portion 451, thereby extracting effective symbols.

As discussed above, in the OFDM receiving apparatus according to the ninth embodiment of the present invention, the auto-correlation values of the output signals from the receivers 312a and 312b are detected before the output signals undergo diversity synthesizing. Then, based on the auto-correlation values, the delay equalizers 431a and 431b eliminate unwanted waves which are delayed later than the guard interval period from the output signals of the receivers 312a and 312b, respectively. Thereafter, diversity synthesizing is performed on the output signals from the delay equalizers 431a and 431b based on the auto-correlation values and the cross-correlation value detected between the output signals of the delay equalizers 431a and 431b. It is thus possible to extract an effective symbol signal with a sufficient signal intensity and without delayed waves (unwanted waves) having a delay period longer than the guard interval period.

The configuration and the operation of the OFDM receiving apparatuses according to the sixth through ninth embodiments of the present invention have been discussed in detail. However, the present invention is not restricted to these embodiments, and various modifications and equivalent arrangements may be made within the scope of the appended claims.

For example, the number of antennas is not limited to two, and may be three or more. Additionally, although two feedback devices are provided to eliminate two delay signals, more than two feedback devices may be provided to eliminate a corresponding number of delay signals.

A detailed description is now given of an OFDM receiving apparatus according to a tenth embodiment of the present invention. In the OFDM receiving apparatus of this embodiment, at the stage prior to a FFT processor for performing FFT processing on effective symbols of an OFDM. modulated signal, i.e., before an OFDM demodulation unit, there are provided a delay equalizer for eliminating signal components (delayed waves) delayed later than a predetermined period from the received OFDM modulated signal, power detectors for detecting the powers of an input signal and an output signal of the delay equalizer, and a comparator for comparing the magnitude of the input signal and that of the output signal of the delay equalizer. A delay-period adjusting portion is also provided for the delay equalizer so as to adjust a delay period of the output signal of the delay equalizer based on a comparison result of the comparator. With this arrangement, even if a pseudo-peak value is contained in the auto-correlation signal, the delay period can be adjusted in the delay-period adjusting portion, thereby making it possible to stably perform the delay equalizing operation. As a result, the occurrence of bit errors after demodulation can be reduced.

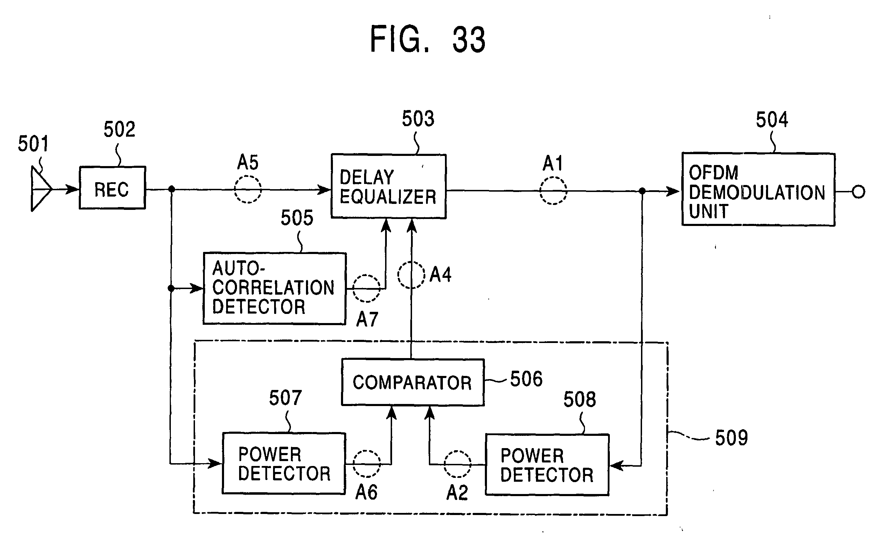

Fig. 33 illustrates the configuration of the OFDM receiving apparatus according to the tenth embodiment of the present invention. The OFDM receiving apparatus shown in Fig. 33 includes an antenna 501 for receiving an OFDM modulated signal, a receiver 502, an auto-correlation detector 505 for detecting an auto-correlation value of the output signal of the receiver 502, a delay equalizer 503 for eliminating signal components delayed later than a predetermined period from the signal output from the receiver 502, power detectors 507 and 508 for respectively detecting power of the input signal and the output signal of the delay equalizer 503, a comparator 506 for comparing the magnitudes of the output signals of the power detectors 507 and 508, and an OFDM demodulation unit 504. The comparator 506 and the power detectors 507 and 508 constitute a power comparator device 509.

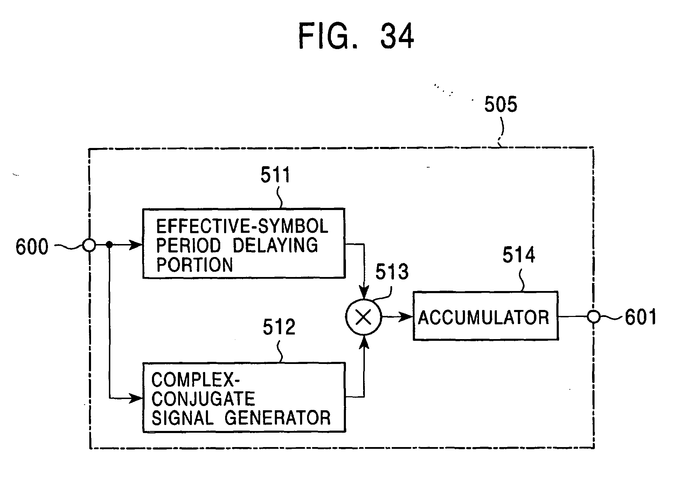

The specific configuration of the auto-correlation detector 505 illustrated in Fig. 33 is shown in Fig. 34. In Fig. 34, the auto-correlation detector 505 is formed of an effective-symbol period delaying portion 511 for receiving a signal from the receiver 502 via an input terminal 600 and for delaying the received signal by an effective symbol period and outputting it as a delay signal, a complex-conjugate signal generator 512 for generating a complex-conjugate signal from the signal supplied from the receiver 502, a multiplier 513 for multiplying the delay signal with the complex-conjugate signal, and an accumulator 514 for accumulating the multiplication results of the multiplier 513 for a predetermined period. Then, the accumulated result is output from an output terminal 601.

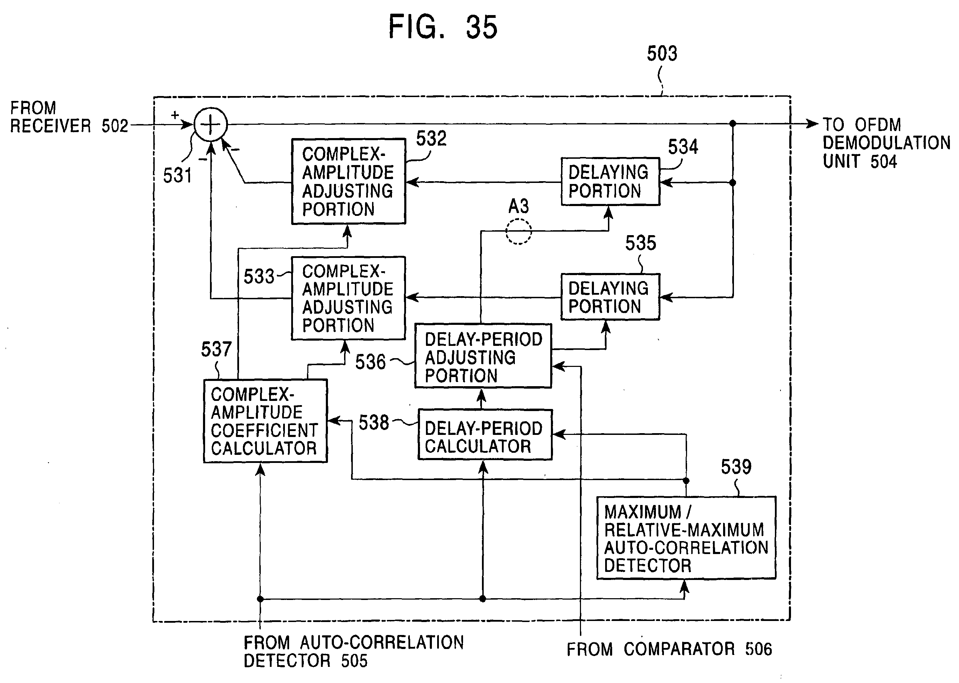

The specific configuration of the delay equalizer 503 illustrated in Fig. 33 is shown in Fig. 35. In Fig. 35, the delay equalizer 503 is formed of an adder 531, delaying portions 534 and 535 for delaying the output of the adder 531 for a predetermined period, complex-amplitude adjusting portions 532 and 533 for respectively adjusting the complex amplitudes of the output signals from the delaying portions 534 and 535, a complex-amplitude coefficient calculator 537 for determining complex-amplitude coefficients, i.e., the amounts of amplitudes to be adjusted, in the complex-amplitude adjusting portions 532 and 533, a delay-period calculator 538 for determining delay periods to be set in the delaying portions 534 and 535, a delay-period adjusting portion 536 for adjusting the delay periods determined in the delay-period calculator 538 based on the detection result of the comparator 506, and a maximum/relative-maximum auto-correlation detector 539 for detecting the maximum value and the relative-maximum value from the supplied auto-correlation values. The delay-period calculator 538 determines the delay periods based on the detection result of the auto-correlation detector 505 and the output result of the maximum/relative-maximum auto-correlation detector 539.

The delay equalizer 503 shown in Fig. 35 is adapted to delay up to two signals. In this delay equalizer 503, one negative feedback device formed of the delaying portion 534 and the complex-amplitude adjusting portion 532 removes delay signal components of one signal, while the other negative feedback device formed of the delaying portion 535 and the complex-amplitude adjusting portion 533 removes delay signal components of the other signal.

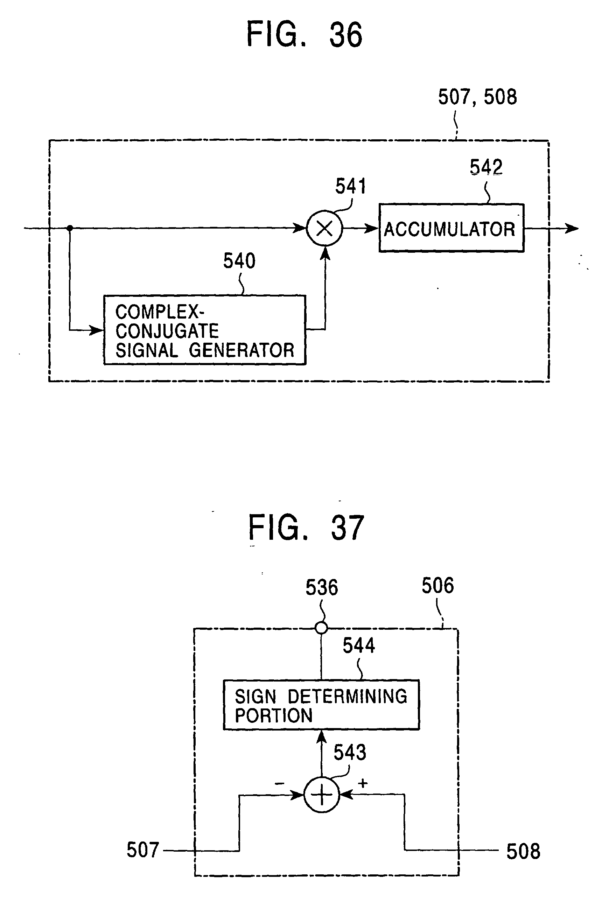

The specific configuration of the power comparator device 509 shown in Fig. 33 is discussed in detail below with reference to Figs. 36 and 37. The power detector 507 (508) of the power comparator device 509 includes, as shown in Fig. 36, a complex-conjugate signal generator 540 for generating a complex-conjugate signal from a signal input into the power detector 507 (508), a multiplier 541 for multiplying the input signal with the complex-conjugate signal, and an accumulator 542 for accumulating the multiplication results of the multiplier 541 for a predetermined period.

The comparator 506 of the power comparator device 509 includes, as shown in Fig. 37, an adder 543 for adding the outputs of the power detectors 507 and 508, and a sign determining portion 544 for determining whether the output of the adder 543 is positive or negative.

The operation of the above-constructed OFDM receiving apparatus is as follows. In Fig. 33, a signal received by the antenna 501 is amplified and frequency-converted in the receiver 502, and is further converted into a digital baseband signal in an A/D converter (not shown). The baseband signal is then input into the delay equalizer 503, the auto-correlation detector 505, and the power detector 507.

In the auto-correlation detector 505, upon receiving the baseband signal from the receiver 502, the effective-symbol period delaying portion 511 generates a delay signal which is delayed later than the baseband signal supplied via the input terminal 600 by an effective symbol period. Meanwhile, the complex-conjugate signal generator 512 generates a complex-conjugate signal from the baseband signal input via the input terminal 600 and outputs it. Then, the delay signal is multiplied with the complex-conjugate signal by the multiplier 513, and the multiplication results of the multiplier 513 are accumulated in the accumulator 514 for a predetermined period. The accumulated result is then output to the delay equalizer 503 from the output terminal 601 as the auto-correlation signal.

In the power detector 507, the baseband signal is received from the receiver 502 and is input into the complex-conjugate signal generator 540. The baseband signal and the complex-conjugate signal are multiplied in the multiplier 541, thereby determining instantaneous signal power in units of samples of the baseband signal converted in the A/D converter (not shown) of the receiver 502. Then, a predetermined number of the instantaneous signal powers is accumulated in the accumulator 542 to obtain the accumulated instantaneous signal power, which is output to one input terminal of the comparator 506 as an input power.

Meanwhile, in the power detector 508, upon receiving the output signal of the delay equalizer 503, the signal output is calculated as in the power detector 507, and is output to the other input terminal of the comparator 506 as the output power of the delay equalizer 503.

The comparator 506 receives the input power and the output power of the delay equalizer 503 from the power detectors 507 and 508, respectively, and determines the difference between the input power and the output power in the adder 543. More specifically, in the adder 543, the input power and the output power of the delay equalizer 503 are added with negative and positive signs, respectively, and the calculation result is then sent to the sign determining portion 544 as the input/output power difference.

In the sign determining portion 544, when the output power of the delay equalizer 503 (signal output detected by the power detector 508) is greater than the input power thereof (signal output detected by the power detector 507), +1 is output to the delay equalizer 503. Conversely, if the output power is equal to or smaller than the input power, -1 is output to the delay equalizer 503.

Subsequently, based on the detection result of the auto-correlation detector 505 and the comparison result of the power comparator device 509, the delay equalizer 503 eliminates signal components delayed later than the guard interval period of the OFDM modulated signal. The output signal of the delay equalizer 503 then undergoes FFT processing in the OFDM demodulation unit 504 so as to remove the guard intervals which were inserted when the signal was modulated. As a result, effective symbols are extracted and demodulated.

The specific configuration of the delay equalizer 503 is as follows. Upon receiving the auto-correlation values from the auto-correlation detector 505, the maximum/relative-maximum auto-correlation detector 539 detects the maximum value and the relative-maximum value from the auto-correlation values, and sends a control signal indicating the maximum/relative-maximum auto-correlation values to the complex-amplitude coefficient calculator 537 and the delay-period calculator 538. For example, if the output of the receiver 502 contains three OFDM modulated signals, one maximum auto-correlation value and two relative-maximum auto-correlation values are detected, and the corresponding control signal is sent for removing delay signals which cause the generation of the relative-maximum auto-correlation values.

In response to the control signal from the maximum/relative-maximum auto-correlation detector 539, the delay-period calculator 538 determines a period from when the maximum auto-correlation value is detected to when each of the relative-maximum auto-correlation values corresponding to the two delay signals to be removed is detected. In this case, if the calculated delay period is shorter than a predetermined period, i.e., the guard interval time contained in the OFDM modulated signal, the delay period is set to be zero.

In response to the control signal from the maximum/relative-maximum auto-correlation detector 539, the complex-amplitude coefficient calculator 537 performs a calculation to determine the ratio of each of the relative-maximum auto-correlation values to the maximum auto-correlation value, and sends the calculated ratios to the complex-amplitude adjusting portions 532 and 533 as complex-amplitude coefficients.

The delay-period calculator 538 and the complex-amplitude coefficient calculator 537 determine the delay periods and the complex-amplitude coefficients, respectively, by referring to the auto-correlation value supplied from the auto-correlation detector 505.

The delay-period adjusting portion 536 receives the comparison result of the power comparator device 509. When the comparison result indicates +1 (when the output power of the delay equalizer 503 is greater than the input power thereof), the delay-period adjusting portion 536 adjusts the delay periods until the output power becomes smaller than the input power. The adjusted delay periods are then output to the delaying portions 534 and 535.

In the complex-amplitude adjusting portions 532 and 533, upon receiving the calculated results of the complex-amplitude coefficient calculator 537, the amplitudes of the output of the adder 531 which are delayed by the delaying portions 534 and 535 are adjusted. In this manner, the output of the adder 531 is fed back to the input of the adder 531 via a negative feedback device consisting of the delaying portion 534 (535) and the complex-amplitude adjusting portion 532 (533).

The principle of the operation for accurately eliminating delayed waves by adjusting the delay periods calculated in the delay-period calculator 538 is described in greater detail below by operating the delay equalizer 503 and the power comparator device 509 shown in Fig. 33.

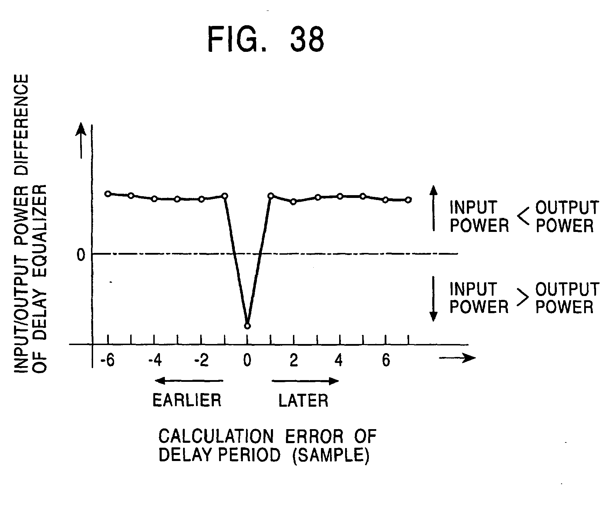

Fig. 38 is a diagram illustrating the relationship between calculation error of the delay period calculated by the delay-period calculator 538 and the input/output power difference (difference between the signal power detected by the power detector 507 and that detected by the power detector 508) of the delay equalizer 503 when the delay equalizer 503 is operated based on the calculated delay period. When the calculation error of the delay period indicates a positive sign, the delay period calculated by the delay-period calculator 538 is longer than a true delay period (i.e., delayed wave arrives later). Conversely, when the calculation error indicates a negative sign, the calculated delay period is shorter than the true delay period (i.e., delayed wave arrives earlier). When the input/output power difference represents a positive value, the output power of the delay equalizer 503 is greater than the input power. Conversely, when the input/output power difference represents a negative value, the output power of the delay equalizer 503 is smaller than the input power. In this example, it is assumed that the amount of delay period to be adjusted in the delay-period adjusting portion 536 is zero, and the delay period calculated in the delay-period calculator 538 is set in the delaying portion 534 (535) without being adjusted.

Even if auto-correlation peaks of the auto-correlation signal detected by the auto-correlation detector 505 include a pseudo-auto-correlation peak, the delay period can be adjusted in the delay-period adjusting portion 536. More specifically, the delay-period calculator 538 determines the delay period based on the true auto-correlation peak (in other words, the calculation error of the delay period is zero). Then, the signal delayed later than the signal input into the delay equalizer 503 for the delay period calculated by the delaying portion 534 (535) is subtracted in the adder 531. Thus, delayed waves are completely canceled and eliminated. In this case, since the output power of the adder 531 is decreased by the signal power equal to the eliminated delayed waves, the output power becomes smaller than the input power of the delay equalizer 503. Accordingly, when the calculation error of the delay period is zero, as shown in Fig. 38, the input/output power difference of the delay equalizer 503 exhibits a negative value.

In contrast, if the delay-period calculator 538 determines the delay period based on the pseudo-auto-correlation peak (if the calculation error of the delay period is not zero), the delayed waves are not eliminated, and what is worse, another delayed wave is added, which increases the power output to the adder 531 by a newly added delayed wave. As a result, the output power of the delay equalizer 503 becomes greater than the input power thereof. Accordingly, when the calculation error of the delay period is not zero, as shown in Fig. 38, the input/output power difference exhibits a positive value.

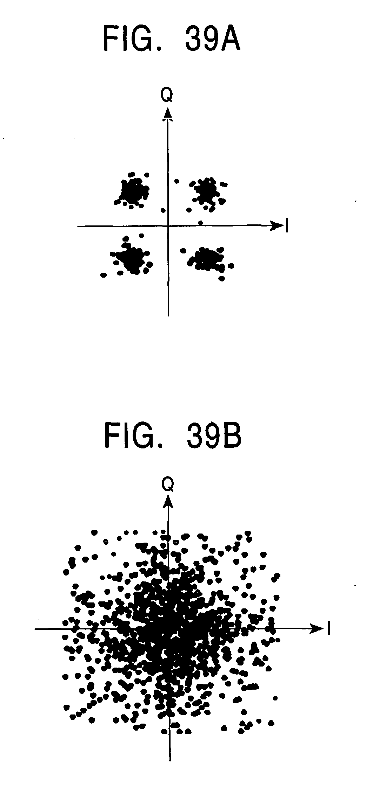

Fig. 39A illustrates the phase locus of demodulated symbols output from the OFDM demodulation unit 504 when the calculated delay period does not contain an error. Fig. 39B illustrates the phase locus of the demodulated symbols when the calculated delay period contains an error. In this example, as the OFDM modulation, the QPSK modulation method is employed. As is seen from Fig. 39A, when the delay equalizer 503 is operated without a calculation error of the delay period, the output power of the delay equalizer 503 is smaller than the input power thereof, thereby decreasing the power of the demodulated symbols. Thus, the symbols converge in predetermined areas on I-Q axes coordinates and are easily identified, thereby decreasing bit errors after demodulation. In contrast, as is seen from Fig. 39B, when the delay equalizer 503 is operated with a calculation error of the delay period, the output power of the delay equalizer 503 is greater than the input power thereof, thereby increasing the power of demodulated symbols. Thus, the symbols are randomly distributed on the I-Q axes coordinates and are difficult to identify, thereby increasing bit errors after demodulation.

That is, if the delay period calculated in the delay-period calculator 538 contains errors, delayed waves cannot be eliminated, and what is worse, bit errors after demodulation are increased. In this case, as discussed above, the output power of the delay equalizer 503 is greater than the input power thereof. Conversely, if there are no calculation errors in the delay period, the output power is smaller than the input power.

Accordingly, in this embodiment, by operating the delay equalizer 503 and the power comparator device 509 shown in Fig. 33, the input power and the output power of the delay equalizer 503 are compared in the power comparator device 509. Upon comparison, if it is detected that delayed waves have not been removed, i.e., if the output power of the delay equalizer 503 is greater than the input power thereof, the delay period is adjusted in the delay-period adjusting portion 536 within the delay equalizer 503. The adjustment of the delay period is repeated until the output power of the delay equalizer 503 becomes smaller than the input power thereof. With the accurately adjusted delayed period, the delayed waves can be completely eliminated, resulting in a smaller number of bit errors.

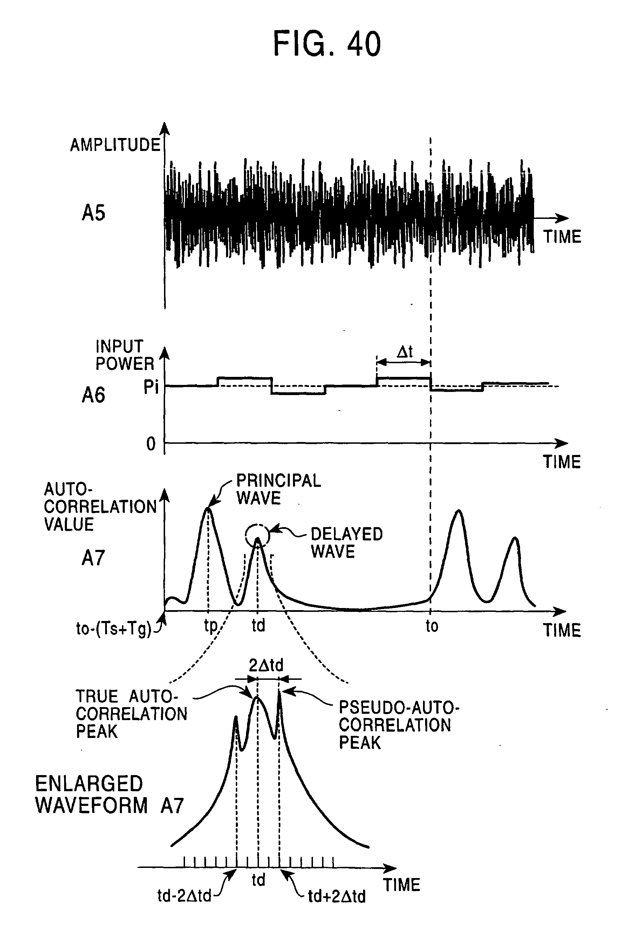

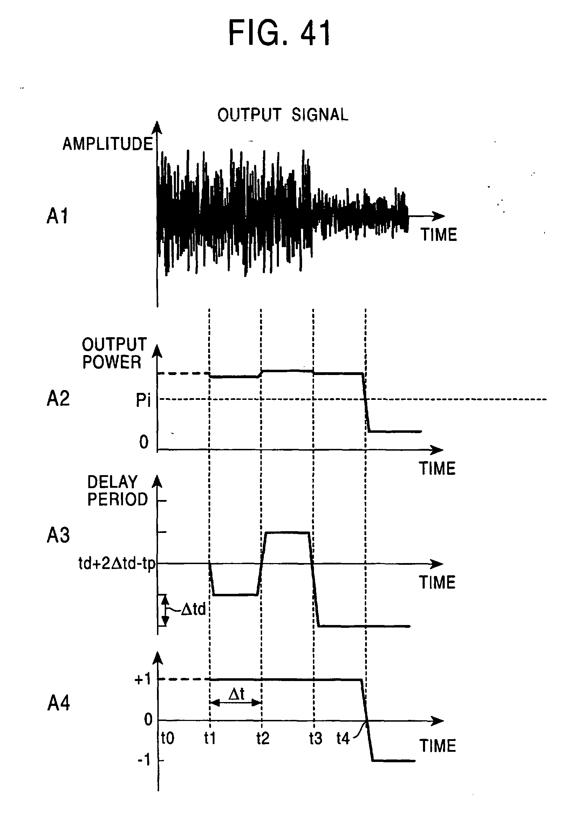

Details of the operations of the delay equalizer 503 and the power comparator device 509 are given below with reference to Figs. 40 and 41.

Fig. 40 illustrates examples of signal waveforms generated in the OFDM receiving apparatus shown in Fig. 33, and more specifically, illustrates the time waveforms of a signal input into the delay equalizer 503 (A5), a signal output from the auto-correlation detector 505 (A7), and a signal output from the power detector 507 (A6). Fig. 41 illustrates examples of signal waveforms of a signal output from the delay equalizer 503 (A1), a signal output from the power detector 508 (A2), and a signal output from the delay-period adjusting portion 536 to the delaying portion 534 (A3). In this example, the OFDM signal output from the receiver 502 is modulated according to the QPSK modulation method and contains one principal wave and one delayed wave.

When the OFDM signal represented by A5 is input into the power detector 507, the multiplier 541 performs a calculation to determine the instantaneous signal power of the baseband OFDM signal. Then, the accumulator 542 accumulates a predetermined number of samples of the instantaneous signal power for a time period Δt to determine the input power of the delay equalizer 503, thereby outputting the signal indicated by A6 every Δt. In this example, the input power does not significantly fluctuate and is thus maintained at substantially constant power Pi.

Upon receiving the OFDM signal represented by A5, the auto-correlation detector 505 outputs the auto-correlation signal indicated by A7. Since the OFDM signal A5 includes one principal wave and one delayed wave, as discussed above, two auto-correlation peaks are detected in one OFDM symbol period (Ts + Tg). In this example, three local peaks are detected as the auto-correlation peak representing the delayed wave. Among the three peaks, the auto-correlation peak at time td represents the true arrival time of the delayed wave, and the auto-correlation peaks at time td-2Δtd (Δtd represents a sampling interval) and at time td+2Δtd designate the pseudo-arrival times of the delayed wave.

The maximum/relative-maximum auto-correlation detector 539 of the delay equalizer 503 receives the auto-correlation signal A7, and detects the maximum peak and the relative-maximum peak of the auto-correlation signal in one OFDM symbol period. For example, in an OFDM symbol period from time t0-(Ts+Tg) to t0, the arrival time tp of the principal wave is detected by referring to the maximum correlation peak. Concerning the delayed wave, however, time td+2Δtd when the relative-maximum peak, which is the second greatest peak next to the maximum peak, is exhibited is determined to be the arrival time of the delayed wave, and the corresponding control information is sent. In this case, since the arrival time of the delayed wave is calculated from the pseudo-auto-correlation peak, the corresponding control information contains errors.

At time t0, the delay-period calculator 538 perform a calculation to determine the delay period of the delayed wave based on the above-described control information. In this case, from the arrival time tp of the principal wave and the arrival time td+2Δtd of the delayed wave, the delay period is determined to be td + 2Δtd - tp. In the subsequent delay-period adjusting portion 536, the amount of delay period to be adjusted is temporarily set to be zero since the delay period has just been calculated, and td + 2Δtd - tp is set in the delaying portion 534 as the delay period. Since only one delayed wave has been detected, the delay period set in the delaying portion 535 is zero.

Thus, according to the delay period set at time t0, the operation of the feedback device in the delay equalizer 503 is started. As a result, as shown in Fig. 41, the signal indicated by A1 is output from the delay equalizer 503.

In the power detector 508, upon receiving the signal from the delay equalizer 503, the output power of the delay equalizer 503 is calculated in a manner similar to the operation of the power detector 507, thereby outputting the signal represented by A2. The output power calculated for Δt from t0 to t1 is output at t1, and thereafter, the output power is updated after the lapse of every Δt.

Subsequently, the comparator 506 compares the output signals from the power detectors 507 and 508, i.e., the input power and the output power of the delay equalizer 503, and outputs the signal indicated by A4 shown in Fig. 41. At time t1, the output power is greater than the input power, as indicated by A2, and accordingly, the comparator 506 outputs +1 to the delay-period adjusting portion 536. As stated above, when the output power is larger than the input power, the delay period set in the delay-period calculator 538 contains errors, which would increase bit errors after the OFDM demodulation operation. Thus, upon receiving the output of the comparator 506, the delay-period adjusting portion 536 starts adjusting the delay period calculated by the delay-period calculator 538.

The delay-period adjusting portion 536 refers to the comparison result of the comparator 506 after the lapse of every Δt. When the comparison result indicates +1, the delay-period adjusting portion 536 sequentially changes the amount by which the delaying portion is adjusted, to -Δtd, +Δtd, -2Δtd, +2Δtd, and so on, by inverting the sign so as to increase the absolute value of the amount of delay period to be adjusted in a zigzag shape. In this embodiment, since the delay period calculated by the delay-period calculator 538 at the initial time t0 is td + 2Δtd - tp, the delay period adjusted by the delay-period adjusting portion 536 is changed to td + Δtd -tp at time t1, td + 3Δtd -tp at time t2, and td - tp at time t3. The adjusted delay period td - tp is then set in the delaying portion 534.

As discussed above, by sequentially operating the delay equalizer 503 and the power comparator device 509, the delay-period adjusting portion 536 adjusts the delay period to td - tp at time t3 and sets it in the delaying portion 534. This brings about the same result as that obtained by the following operation. Among the auto-correlation peaks of the delayed wave of the auto-correlation signal represented by A7, the maximum/relative-maximum auto-correlation detector 539 detects the true auto-correlation peak and sends the control information indicating the arrival time td of the delayed wave. That is, since there is no error in the arrival time td of the delayed wave, the delay period set in the delaying portion 534 is also free of errors. Thus, the delayed wave can be accurately eliminated by the feedback device of the delay equalizer 503, and the OFDM signal only containing the principal wave is output from the delay equalizer 503.

At the subsequent time t3 to t4, the power detector 508 determines the output power of the delay equalizer 503. Then, the output power becomes smaller than the input power at time t4, as indicated by A2 of Fig. 41, and thus, the comparator 506 outputs -1 to the delay-period adjusting portion 536. As discussed above, when the output power is smaller than the input power, there is no error in the delay period set in the delaying portion 534, which does not increase bit errors after the OFDM demodulation operation. As a result, the delay-period adjusting portion 536 stops adjusting the delay period upon receiving the output of the comparator 506.

In this manner, in the delay equalizer 503, the signal components delayed later than the guard interval period can be accurately removed based on the detection result of the auto-correlation detector 505 and the comparison result of the power comparator device 509, and the OFDM signal containing only the principal wave can be generated. Then, the OFDM demodulation unit 504 removes the guard intervals from the received OFDM signal so as to extract effective symbols free of interference. FFT processing is then executed on the effective symbols, and the data is demodulated.

In this case, the guard intervals can be removed based on the auto-correlation signal output from the auto-correlation detector 505. This eliminates the need for determining an auto-correlation signal in the OFDM demodulation unit 504, which is required in a conventional OFDM receiving apparatus.

By operating the delay equalizer 503 and the power detector 509, the OFDM modulated signal without delay waves is obtained and is demodulated in the OFDM demodulation unit 504. Then, the demodulated symbols output from the OFDM demodulation unit 504 until time t3 are randomly distributed, as illustrated in Fig. 39B, and cannot be identified. However, the delayed wave is completely eliminated based on the delay period free of errors in the delaying portion 534, and the demodulated symbols at time t4 can be easily identified, as illustrated in Fig. 39A, thereby reducing bit errors.

In this embodiment, only one delay equalizer is provided, and the delay period is adjusted to alternately increase and decrease by one delay-period adjusting portion. However, in the present invention, a plurality of delay equalizers may be disposed, and the delay period may be adjusted only to increase or to decrease in one delay equalizer.

Although in this embodiment two feedback devices are provided for the delay equalizer so as to eliminate up to two delayed waves, only one feedback device or three or more feedback devices may be provided.

Additionally, this embodiment has been discussed when there are a plurality of local auto-correlation peaks for the delayed wave. However, the delay equalizer 503 and the power comparator device 509 are similarly operated when there are a plurality of local auto-correlation peaks for the principal wave.

An OFDM receiving apparatus constructed in accordance with an eleventh embodiment is discussed in detail below with reference to the drawings. Prior to a detailed discussion of this embodiment, the control operation of a delay equalizer for eliminating delayed waves causing intersymbol interference, which is the main feature of this embodiment, is described below.

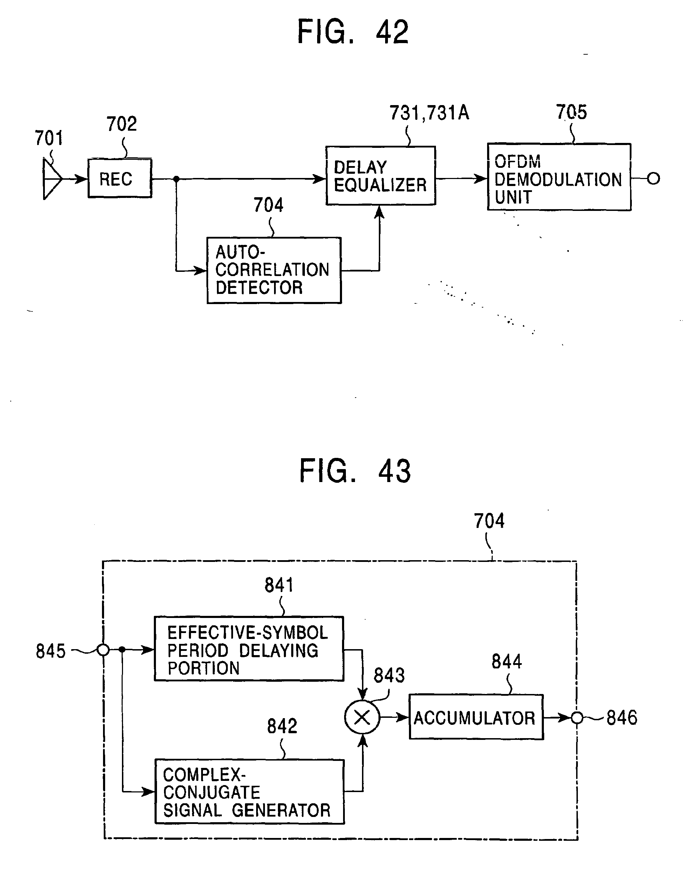

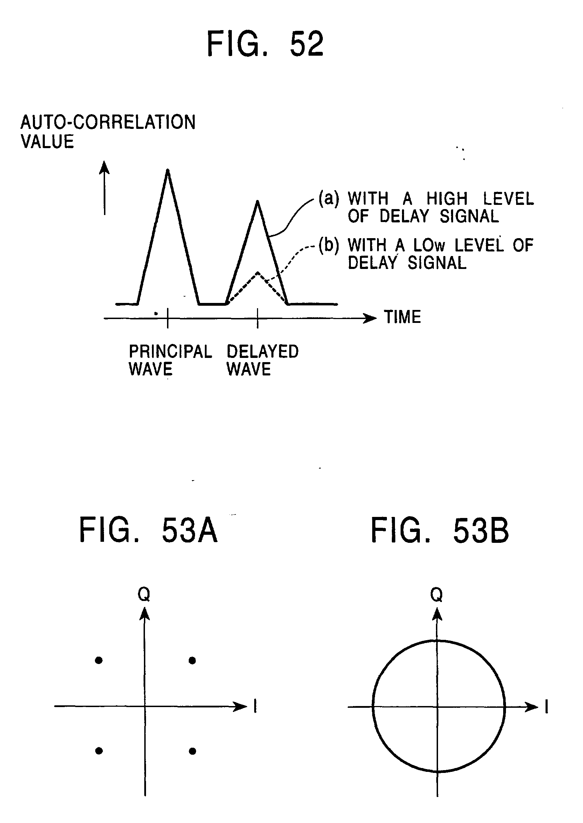

Fig. 52 is a waveform diagram illustrating an example of an auto-correlation detection signal output from an auto-correlation detector 704 (Fig. 42), and the waveform indicates two delay signal levels. The auto-correlation value of the auto-correlation signal includes the maximum auto-correlation value and the relative-maximum auto-correlation value. Relative to the level of the principal wave, the waveform indicated by (a) in Fig. 52 has a high level of a delayed wave, while the waveform indicated by (b) of Fig. 52 has a considerably low level of a delayed wave.

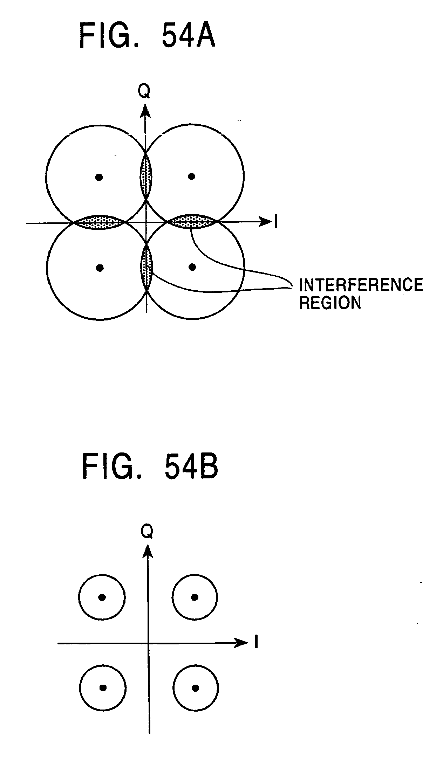

Figs. 53A and 53B are waveform diagrams illustrating examples of the data output from an OFDM demodulation unit 705 (Fig. 42) when OFDM modulated signals corresponding to a principal wave and a delayed wave are individually received. Figs. 54A and 54B are waveform diagrams illustrating examples of the data output from the OFDM demodulation unit 705 when the synthesized wave of the principal wave and the delayed wave is received. In this case, the waveforms are obtained from the signals bypassing the input/output terminals of a delay equalizer 731 (Fig. 42). In Figs. 54A and 54B, as well as in Fig. 52, the waveforms corresponding to the two levels of delay signals are shown. In this case, the QPSK modulation method is used as the OFDM modulation.

The phase loci of the output data symbols associated with the principal wave and the delayed wave are explained below with reference to Figs. 53A and 53B. The OFDM modulated signal containing only the principal wave is demodulated by the OFDM demodulation unit 705 based on the peak value of the auto-correlation detection signal corresponding to the principal wave. Then, the demodulated symbols are distributed at four lattice points on the I-Q plane, as shown in Fig. 53A. On the other hand, based on the peak value of the auto-correlation detection signal corresponding to the principal wave, the OFDM modulated signal containing only the delayed wave is demodulated. Then, the demodulated symbols are distributed such that they rotate around the origin of the I-Q plane, as shown in Fig. 53B. The distance from the lattice points to the origin (Fig. 53A) and the radius of rotation (Fig. 53B) are proportional to the level of the principal wave and the delayed wave, respectively.

When the OFDM modulated signal containing both the principal wave and the delayed wave is demodulated, the demodulated symbols output from the OFDM demodulation unit 705 are distributed, as shown in Figs. 54A and 54B, such that the delayed-wave symbols are rotated around the corresponding four lattice points of the principal wave. In this case, if the auto-correlation detection signal with a high level of the delay signal indicated by (a) of Fig. 52 is obtained, the radius of rotation of the delayed-wave symbols becomes large, as shown in Fig. 54A, which encourages the occurrence of intersymbol interference, thereby increasing bit errors. It is thus necessary to equalize and remove the delay signal by using the delay equalizer 731 (Fig. 42).

In contrast, if the auto-correlation detection signal with a low level of the delay signal represented by (b) of Fig. 52 is obtained, intersymbol interference does not occur, as shown in Fig. 54B, and symbols can be accurately identified without the need to eliminate the delayed wave, thereby inhibiting the occurrence of bit errors. In this case, therefore, the use of the delay equalizer 731 can be obviated.

By utilizing the above-described characteristics of the OFDM modulated signal, when the level of the delay signal is low, the delay equalizing operation of the delay equalizer 731 is interrupted, thereby decreasing power consumption of the delay equalizer 731 without generating bit errors.

The configuration of the OFDM receiving apparatus according to the eleventh embodiment of the present invention is shown in Fig. 42. In Fig. 42, the OFDM receiving apparatus is formed of an antenna 701 for receiving an OFDM modulated signal, a receiver 702, an auto-correlation detector 704 for detecting an auto-correlation value of an output signal from the receiver 702, the delay equalizer 731 for eliminating signal components delayed later than a predetermined period from the output signal of the receiver 702 based on the detection result of the auto-correlation detector 704, and the OFDM demodulation unit 705.

In the above-configured OFDM receiving apparatus, a signal received by the antenna 701 is amplified and frequency-converted in the receiver 702 so as to be converted into a baseband signal. The baseband signal is then input into the delay equalizer 731 and the auto-correlation detector 704.

Subsequently, based on the detection result of the auto-correlation detector 704, the delay equalizer 731 eliminates signal components later than a predetermined period, i.e., the guard interval period of the OFDM modulated signal, from the output signal of the receiver 702. Then, the OFDM demodulation unit 705 performs FFT processing on the output signal from the delay equalizer 731 so as to remove the guard intervals which were inserted when the signal was modulated. Thus, the effective symbols are extracted and demodulated.

The specific configuration of the auto-correlation detector 704 illustrated in Fig. 42 is shown in Fig. 43.

In Fig. 43, the auto-correlation detector 704 is formed of an effective-symbol period delaying portion 841 for outputting a delay signal which is delayed later than a signal supplied to the auto-correlation detector 704 by an effective symbol period, a complex-conjugate signal generator 842 for generating a complex-conjugate signal from the signal supplied to the auto-correlation detector 704 and for outputting it, a multiplier 843 for multiplying the delay signal output from the effective-symbol period delaying portion 841 with the complex-conjugate signal, and an accumulator 844 for accumulating the multiplication results of the multiplier 843 for a predetermined period.

In the above-configured auto-correlation detector 704, the effective-symbol period delaying portion 841 outputs a delay signal which is delayed by an effective symbol period later than the signal supplied to the auto-correlation detector 704 via an input terminal 845. Meanwhile, the complex-conjugate signal generator 842 generates a complex-conjugate signal from the signal supplied via the input terminal 845 and outputs it. Then, the multiplier 843 multiplies the delay signal with the complex-conjugate signal, and the multiplication result of the multiplier 843 is accumulated in the accumulator 844 for a predetermined period (guard interval time). Thus, the accumulated result of the accumulator 844 is output to the delay equalizer 731 as the auto-correlation value via an output terminal 846.

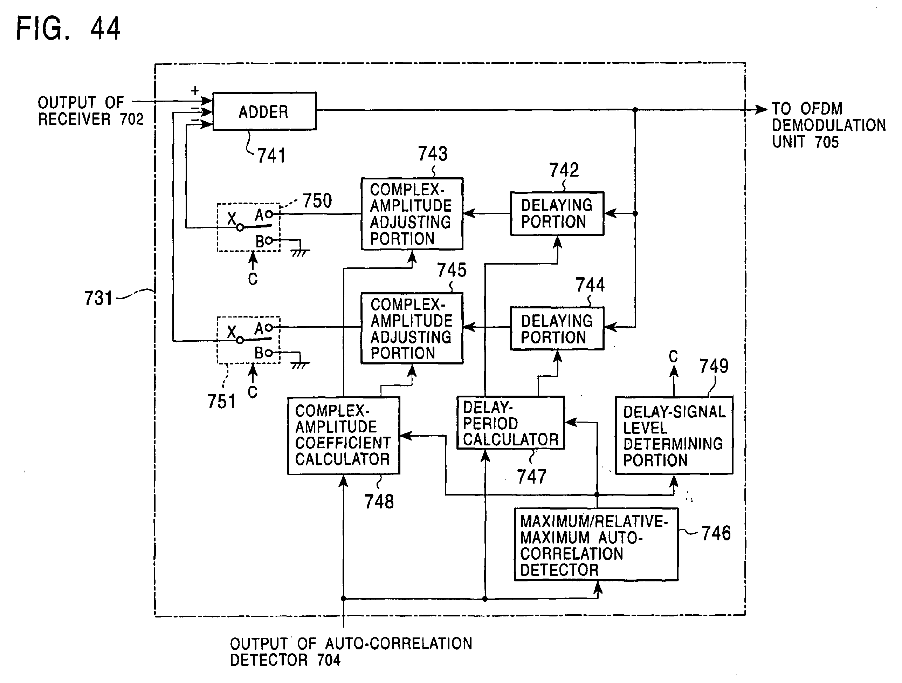

The specific configuration of the delay equalizer 731 illustrated in Fig. 42 is shown in Fig. 44. In Fig. 44, the delay equalizer 731 is formed of an adder 741, delaying portions 742 and 744 for delaying the output of the adder 741 for a predetermined period, complex-amplitude adjusting portions 743 and 745 for respectively adjusting the complex amplitudes of the output signals from the delaying portions 742 and 744, a delay-period calculator 747 for determining delay periods to be set in the delaying portions 742 and 744, a complex-amplitude coefficient calculator 748 for determining complex-amplitude coefficients, i.e., the amounts of amplitudes to be adjusted, in the complex-amplitude adjusting portions 743 and 745, and a maximum/relative-maximum auto-correlation detector 746 for detecting the maximum value and the relative-maximum value from the supplied auto-correlation signal.

The delay equalizer 731 also includes switching devices 750 and 751 respectively disposed between the output terminals of the complex-amplitude adjusting portions 743 and 745 and the input terminals of the adder 741, and a delay-signal level determining portion 749 for determining the signal level of the delayed wave and for outputting a control signal C to the switching devices 750 and 751. The control signal C is output for fixing the inputs into the negative input terminals of the adder 741 to a constant value when the signal level of the delayed wave is small enough to inhibit intersymbol interference.

The delay equalizer 731 shown in Fig. 44 has two negative feedback devices. One negative feedback device formed of the delaying portion 742 and the complex-amplitude adjusting portion 743 removes one delay signal, while another negative feedback device formed of the delaying portion 744 and the complex-amplitude adjusting portion 745 removes the other delay signal. In the adder 741, the outputs of the two feedback devices are subtracted from the input OFDM modulated signal so as to remove two delayed waves, thereby outputting the delay equalized OFDM modulated signal.

Upon receiving the auto-correlation signal from the auto-correlation detector 704, the maximum/relative-maximum auto-correlation detector 746 detects the maximum value, the relative-maximum value, and the time difference between the maximum value and the relative-maximum value from the auto-correlation signal, and sends them to the delay-period calculator 747 and the complex-amplitude coefficient calculator 748. Then, the delay-period calculator 747 determines the delay periods to be set in the delaying portions 742 and 744, and the complex-amplitude coefficient calculator 748 determines the complex-amplitude coefficients used in the complex-amplitude adjusting portions 743 and 745.

If the calculated delay period is shorter than the guard interval period, the delay-period calculator 747 sets the delay period in the delaying portion 742 or 744 to be zero, and accordingly, the delaying portion 742 or 744 outputs a zero signal without delaying the input signal.

As discussed above, the delay-signal level determining portion 749 is connected to the output terminal of the maximum/relative-maximum auto-correlation detector 746. Moreover, the switching devices 750 and 751 which are controlled by the control signal C output from the delay-signal level determining portion 749 are connected to the output terminals of the complex-amplitude adjusting portions 743 and 745, respectively, which enables the complex-amplitude adjusting portions 743 and 745 to be connected to the input terminals of the adder 741 via the switching devices 750 and 751, respectively.

In this embodiment, in the switching devices 750 and 751, the output terminals X are connected to the input terminals A under normal conditions, i.e., unless the control signal C is input from the delay-signal level determining portion 749. As stated above, one negative feedback device consisting of the delaying portion 742 and the complex-amplitude adjusting portion 743 removes one delay signal, while the other negative feedback device consisting of the delaying portion 744 and the complex-amplitude adjusting portion 745 removes the other delay signal.

A description is now given of the operation of the delay equalizer 731 when the signal level of the delayed wave input into the adder 741 from the receiver 702 is small enough to suppress intersymbol interference, in other words, when the control signal C is not output from the delay-signal level determining portion 749 to the switching devices 750 and 751.

Upon receiving the auto-correlation detection signal from the auto-correlation detector 704, the maximum/relative-maximum auto-correlation detector 746 detects the maximum value and the relative-maximum value from the auto-correlation detection signal, and sends a control signal indicating the maximum/relative-maximum auto-correlation values to the delay-period calculator 747 and the complex-amplitude coefficient calculator 748.

In response to the control signal from the maximum/relative-maximum auto-correlation detector 746, the delay-period calculator 747 determines the period from when the maximum auto-correlation value is detected to when each of the relative-maximum auto-correlation values corresponding to the two delay signals to be removed is detected, and sends the calculated delay periods to the delaying portions 742 and 744. In this case, if the calculated delay period is shorter than a predetermined period, i.e., the guard interval period contained in the OFDM modulated signal, the delay period is set to be zero.

In response to the control signal from the maximum/relative-maximum auto-correlation detector 746, the complex-amplitude coefficient calculator 748 performs a calculation to determine the ratio of each of the relative-maximum auto-correlation values corresponding to the two delay signals to be removed to the maximum auto-correlation value, and sends the calculated ratios to the complex-amplitude adjusting portions 743 and 745 as complex-amplitude coefficients.

The delay-period calculator 747 and the complex-amplitude coefficient calculator 748 determine the delay periods and the complex-amplitude coefficients, respectively, by referring to the auto-correlation detection signal supplied from the auto-correlation detector 704.

The delaying portions 742 and 744 delay the input signals based on the delay periods supplied from the delay-period calculator 747. In this case, if the delay periods are zero, that is, if the delay periods of the delay signals are shorter than the guard interval period of the OFDM modulated signal, it is not necessary to remove the delay signals, and the input signals are output without being delayed.

The complex-amplitude adjusting portions 743 and 745 perform amplitude adjustment based on the complex-amplitude coefficients supplied from the complex-amplitude coefficient calculator 748.

In this manner, the output of the adder 741 is negatively fed back to the input of the adder 741 via the feedback device consisting of the delaying portion 742 (744) and the complex-amplitude adjusting portion 743 (745).

Accordingly, in the delay equalizer 731 shown in Fig. 44, the output signal of the receiver 702 is supplied to the adder 741 of the delay equalizer 731. Then, the output of the adder 741 is supplied to the delaying portions 742 and 744 in which the signals are delayed based on the delay periods supplied from the delay-period calculator 747, and are further sent to the complex-amplitude adjusting portions 743 and 745, respectively, in which the amplitudes of the signals are adjusted based on the complex-amplitude coefficients supplied from the complex-amplitude coefficient calculator 748. Thus, the signals having adjusted delay periods and adjusted amplitudes are added in the adder 741 with opposite signs. As a result, signal components which are delayed later than the guard interval time of the OFDM modulated signal are eliminated from the output signal of the receiver 702, and the signals without unwanted waves are output to the OFDM demodulation unit 705.

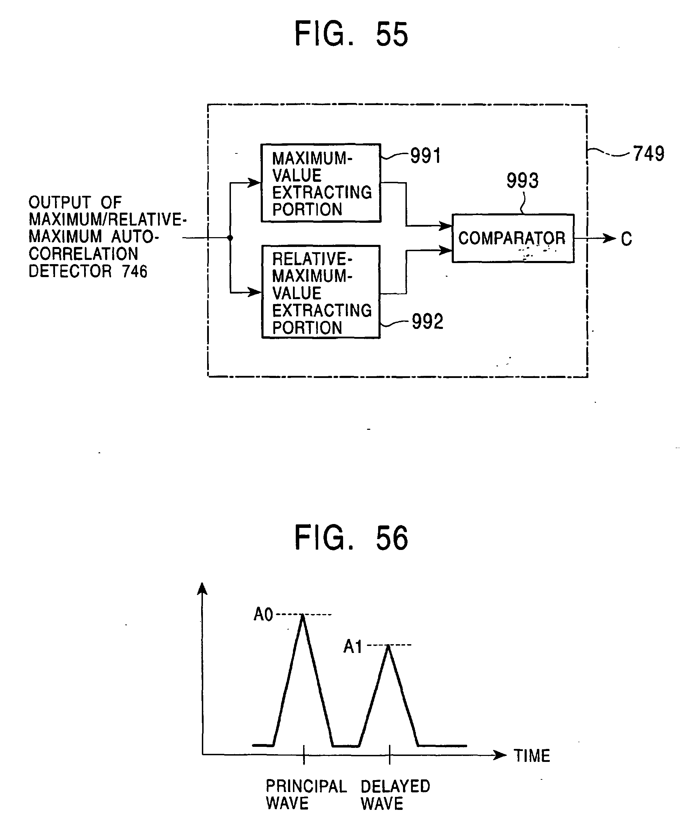

The specific configuration of the delay-signal level determining portion 749 is shown in Fig. 55. The delay-signal level determining portion 749 includes a maximum-value extracting portion 991 for extracting a maximum auto-correlation value from the output of the maximum/relative-maximum auto-correlation detector 746, a relative-maximum-value extracting portion 992 for extracting a relative-maximum auto-correlation value from the output of the maximum/relative-maximum auto-correlation detector 746, and a comparator 993 for comparing the maximum auto-correlation value and the relative-maximum auto-correlation value and outputting the corresponding control signal C.

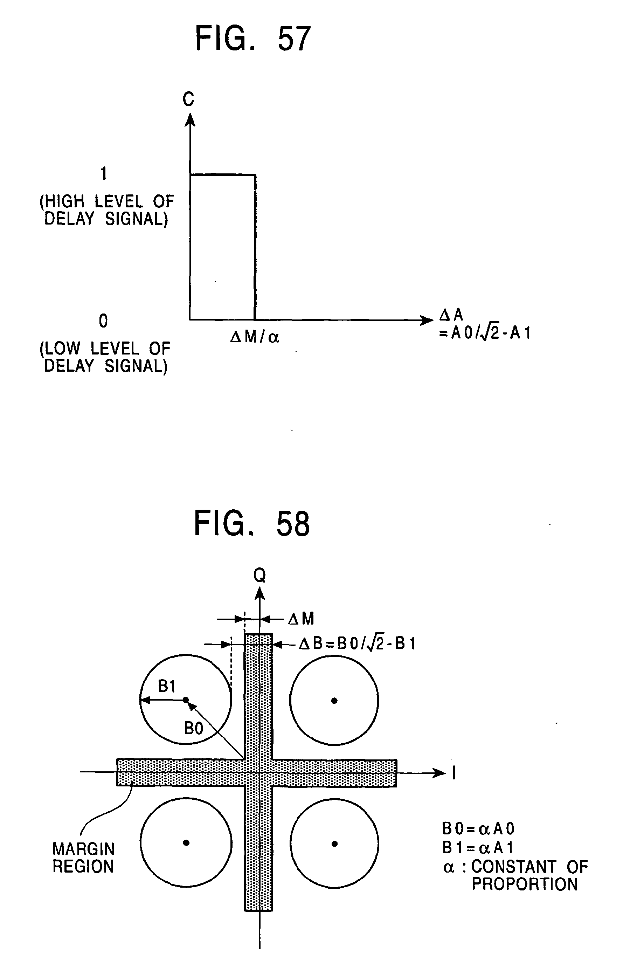

The process for outputting the control signal C by the delay-signal level determining portion 749 is explained below with reference to Figs. 56, 57, and 58. Fig. 56 illustrates an example of the auto-correlation signal output from the auto-correlation detector 704. Fig. 57 illustrates the relationship between the level difference of the auto-correlation value detected by the comparator 993 and the control signal C. Fig. 58 illustrates the relationship between the margin level used in Fig. 57 and the OFDM demodulated symbols. In this case, it is assumed that there is only one delayed wave and the QPSK modulation method is employed.

Upon receiving the auto-correlation detection signal shown in Fig. 56, the maximum/relative-maximum auto-correlation detector 746 detects the maximum value (in this case, the principal wave) and the relative-maximum value (the delayed wave), and outputs them as A0 and A1, respectively. The delay period from the principal wave to the delayed wave is also output. If the delay period is less than the guard interval period, the delay period is set to be zero, and A1 is not output.

In this manner, the delay-signal level determining portion 749 receives the signal output from the maximum/relative-maximum auto-correlation detector 746, and the maximum-value extracting portion 991 extracts A0, and the relative-maximum-value extracting portion 992 extracts A1.

The comparator 993 then performs a calculation to determine the level difference (ΔA = A0/√2-A1) between A0 and A1, and compares ΔA with a predetermined margin level (M/α: α indicates a comparison constant). When ΔA < ΔM/α, the interference allowance ΔB = B0/√2-B1 between adjacent QPSK demodulated symbols shown in Fig. 58 is smaller than a predetermined margin ΔM. That is, since the delayed wave has the same level as the principal wave, or is slightly greater than the principal wave, the demodulated symbols output from the OFDM demodulation unit 705 may slightly interfere with each other. In this case, the comparator 993 outputs the control signal C "1" indicating a high level of the delayed wave.

Conversely, when ΔA > ΔM/α, the interference allowance ΔB between adjacent QPSK demodulated symbols shown in Fig. 58 is greater than a predetermined margin ΔM. That is, since the delayed wave is smaller than the principal wave, the demodulated symbols output from the OFDM demodulation unit 705 do not interfere with each other. In this case, the comparator 993 outputs the control signal C "0" indicating a low level of the delayed wave. The predetermined margin ΔM is a known margin value for preventing the occurrence of interference in the demodulated symbols output from the demodulation unit 705, as shown in Fig. 58.

When the control signal C is output as discussed above, the switching devices 750 and 751 are operated as follows. By referring to the control signal C, if the level of the delayed wave is found to be high, the signal from the input terminal A is output to the output terminal X. Conversely, if the level of the delayed wave is found to be low, the signal from the input terminal B is output to the output terminal X. That is, upon the occurrence of intersymbol interference with a high level of the delayed wave, the outputs of the two feedback devices in the delay equalizer 731 are output to the adder 741, and the delay equalizing operation is performed.

On the other hand, when intersymbol interference is suppressed because of a low level of the delayed wave, the delay signal indicating zero is output to the adder 741, with the result that the signal input into the delay equalizer 731 is directly output to the OFDM demodulation unit 705 without performing the delay equalizing operation.

In this embodiment, when the delayed wave has a low level, the two signals output to the two negative input terminals of the adder 741 are fixed to zero, and the power consumed in the adder 741 can be reduced accordingly.

As is seen from the foregoing description, according to the OFDM receiving apparatus of the eleventh embodiment of the present invention, the delay equalizer interrupts the delay equalizing operation according to the level of the delay signal component. Thus, power consumption of the delay equalizer 731 can be reduced.

That is, in this embodiment, when the occurrence of intersymbol interference is inhibited because of the low level of the delay signal, the control signal C is output to the switching devices 750 and 751 from the delay-signal level determining portion 749 so as to fix the signals input into the negative input terminals of the adder 741 to zero. This is equivalent to the state in which the adder 741 does not perform the adding operation, thereby reducing power consumption in the adder 741.

An OFDM receiving apparatus constructed in accordance with a twelfth embodiment of the present invention is discussed below with reference to the drawings. The overall configuration of the OFDM receiving apparatus of this embodiment is similar to that of the eleventh embodiment shown in Fig. 42, except for the specific configuration of the delay equalizer, and a detailed explanation of the other configurations will thus be omitted. OFDM receiving apparatuses constructed in accordance with thirteenth through eighteenth embodiments of the present invention, which will be discussed later, are also similar to that of the eleventh embodiment, except for the specific configuration of the delay equalizer, and only a description of the delay equalizer will thus be given.

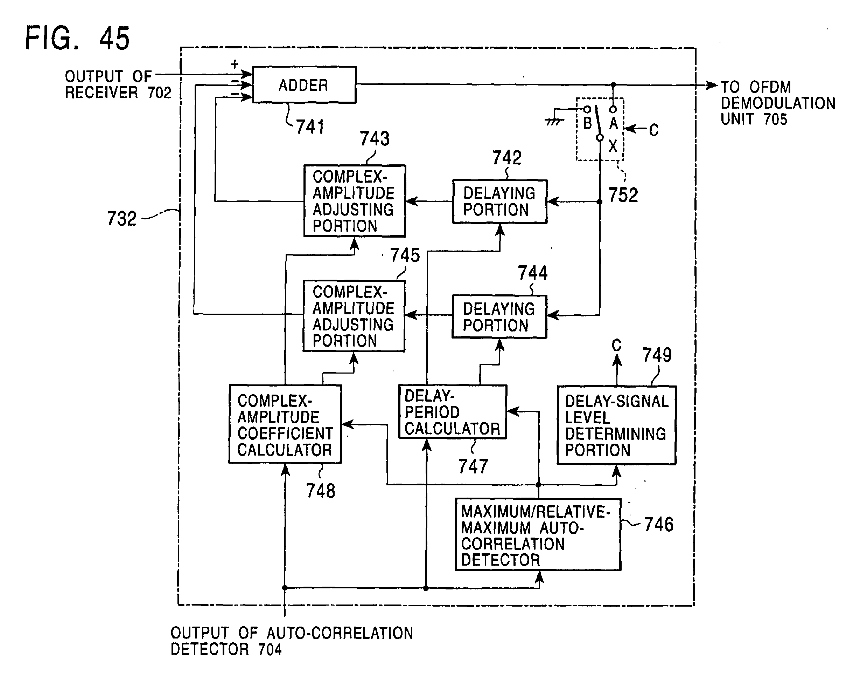

The configuration of a delay equalizer 732 of the OFDM receiving apparatus according to the twelfth embodiment of the present invention is shown in Fig. 45. The delay equalizer 732 of this embodiment differs from that of the eleventh embodiment (Fig. 44) in that the switching devices 750 and 751 connected to the output terminals of the complex-amplitude adjusting portions 743 and 745, respectively, are eliminated, and a switching device 752 is disposed between the output terminal of the adder 741 and the input terminals of the delaying portions 742 and 744. The other configurations of the delay equalizer 732 of this embodiment are similar to those of the eleventh embodiment, and a detailed explanation thereof will thus be omitted by designating the same elements as those shown in Fig. 44 with like reference numerals.

In Fig. 45, the delay equalizer 732 is formed of an adder 741, delaying portions 742 and 744 for delaying the output of the adder 741 for a predetermined period, complex-amplitude adjusting portions 743 and 745 for respectively adjusting the complex amplitudes of the output signals from the delaying portions 742 and 744, a delay-period calculator 747 for determining delay periods to be set in the delaying portions 742 and 744, a complex-amplitude coefficient calculator 748 for determining complex-amplitude coefficients, i.e., the amounts of amplitudes to be adjusted, in the complex-amplitude adjusting portions 743 and 745, and a maximum/relative-maximum auto-correlation detector 746 for detecting the maximum value and the relative-maximum value from the supplied auto-correlation signal.

The delay equalizer 732 also includes the switching device 752 disposed between the output terminal of the adder 741 and the input terminals of the delaying portions 742 and 744, and a delay-signal level determining portion 749 for determining the signal level of the delayed wave and for outputting a control signal C to the switching device 752 when the signal level of the delayed wave is small enough to inhibit intersymbol interference.

The switching device 752 is operated as follows. When the control signal C is not input into the switching device 752 from the delay-signal level determining portion 749, namely, when intersymbol interference occurs because of a high level of the delayed wave, the input terminal A is connected to the output terminal X. When the control signal C is input into the switching device 752, i.e., when the occurrence of intersymbol interference is inhibited because of the low level of a delayed wave, the input terminal B is connected to the output terminal X so as to fix the input signal to the delaying portion 742 and 744 to zero.

In the above-configured delay equalizer 732, when the delay-signal level determining portion 749 determines based on the output signal from the maximum/relative-maximum auto-correlation detector 746 that the occurrence of intersymbol interference is suppressed because of the low level of the delayed wave, the control signal C is output to the switching device 752. In the switching device 752, the input terminal B is connected to the output terminal X so as to fix the input signal into the delaying portions 742 and 744 to zero. Accordingly, the signal having a zero level is output to the delaying portions 742 and 744.

As a result, since the outputs of the two feedback devices become zero, the output signal of the receiver 702 is directly output to the OFDM demodulation unit 705 without performing the delay equalizing operation in the delay equalizer 732.

In this embodiment, since the signal is not delayed in the delaying portions 742 and 744, power consumption in the delaying portions 742 and 744, the complex-amplitude adjusting portions 743 and 745, and the adder 741 can be reduced.

According to the OFDM receiving apparatus of the twelfth embodiment of the present invention, when the delay equalizer 732 determines that the level of the delay signal is lower than that of the principal signal, the outputs of the feedback devices are controlled to be zero, thereby reducing overall power consumption.

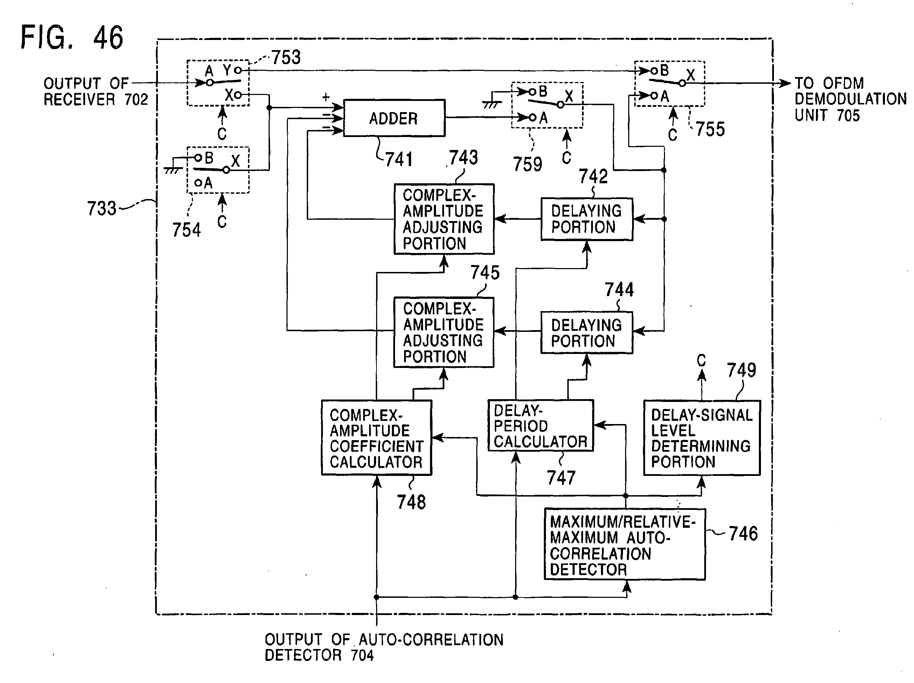

The specific configuration of a delay equalizer 733 of an OFDM receiving apparatus according to the thirteenth embodiment of the present invention is shown in Fig. 46. The configuration of the delay equalizer 733 of the thirteenth embodiment is different from that of the eleventh embodiment shown Fig. 44 in the following points. The switching devices 750 and 751 connected to the output terminals of the complex-amplitude adjusting portions 743 and 745, respectively, are eliminated, and switching devices 753 and 754 are connected to the input terminal of the adder 741, and switching devices 755 and 759 are connected to the output terminal of the adder 741. The switching devices 753, 754, 755, and 759 are controlled to be switched by the control signal C from the delay-signal level determining portion 749. More specifically, the switching devices 753 and 755 switch the output signal from the receiver 702 to be output to the OFDM demodulation unit 705 or to the delay equalizer 733. When the output signal from the receiver 702 bypasses the delay equalizer 733, the switching device 754 fixes the level of the signal input into the positive input terminal of the adder 741 to zero, and the switching device 759 fixes the level of the signal output from the adder 741 to zero.

In the above-constructed delay equalizer 733, upon the occurrence of intersymbol interference because of the high level of the delayed wave, the control signal C is not output from the delay-signal level determining portion 749 to the switching devices 753, 754, 755, and 759, and in each of the switching devices 753, 754, 755, and 759, the terminal A is connected to the terminal X. As a result, in the delay equalizer 733, as in the delay equalizers 731 and 732 of the eleventh and twelfth embodiments, the delay equalizing operation is performed.

On the other hand, when the occurrence of intersymbol interference is suppressed because of the low level of the delayed wave, the control signal C is output from the delay-signal level determining portion 749 to the switches 753, 754, 755, and 759. Then, in the switching device 753, the terminal A is connected to the terminal Y, and in the switching devices 754, 755, and 759, the terminal B is connected to the terminal X. As a consequence, the input signal from the receiver 702 is directly output to the OFDM demodulation unit 705 by bypassing the delay equalizer 733, thereby preventing the execution of the delay equalizing operation.

In this embodiment, when the occurrence of intersymbol is inhibited, a signal having a zero level is input into the positive input terminal of the adder 741 via the switching device 754, and the output signal from the adder 741 becomes zero via the switching device 759. Thus, the signals in the subsequent delaying portions 742 and 744 and the complex-amplitude adjusting portions 743 and 745 also become zero. As a result, power consumption in the delaying portions 742 and 744, the complex-amplitude adjusting portions 743 and 745, and the adder 741 can be reduced.

According to the OFDM receiving apparatus of the thirteenth embodiment of the present invention, in the delay equalizer 733, when the delay-signal level determining portion 749 determines that the level of the delay signal is lower than that of the principal signal, the input signal from the receiver 702 is directly output to the OFDM demodulation unit 705 by bypassing the delay equalizer 733. Thus, the delay equalizing operation is prevented, and the signals are not input into the feedback devices, thereby reducing the overall power consumption accordingly.

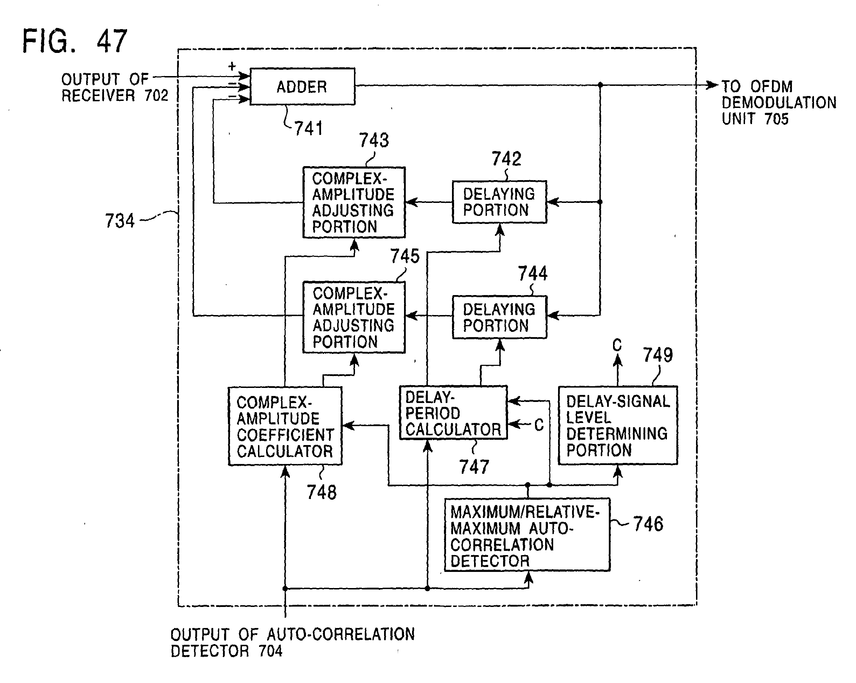

The specific configuration of a delay equalizer 734 of the OFDM receiving apparatus according to the fourteenth embodiment of the present invention is shown in Fig. 47. The configuration of the delay equalizer 734 of this embodiment differs from that of the eleventh embodiment shown in Fig. 44 in that the switching devices 750 and 751 are eliminated, and the delay-period calculator 747 is controlled by the control signal C output from the delay-signal level determining portion 749. The other configurations of the delay equalizer 734 are similar to those of the delay equalizer 731.

In the above-constructed delay equalizer 734, upon the occurrence of intersymbol interference because of the high level of the delayed wave, the control signal C is not output to the delay-period calculator 747 from the delay-signal level determining portion 749, and the delay equalizing operation is performed in the delay equalizer 734.

In contrast, when the occurrence of intersymbol interference is inhibited due to the low level of the delayed wave, the control signal C is output to the delay-period calculator 747 from the delay-signal level determining portion 749. Upon receiving the control signal C, the delay-period calculator 747 sets the delay periods in the delaying portions 742 and 744 to zero. The delaying portions 742 and 744 then output signals having a zero level to the complex-amplitude adjusting portions 743 and 745, respectively. As a consequence, signals having a zero level are input into the adder 741 from the feedback devices, thereby interrupting the execution of the delay equalizing operation. In this embodiment, the signals input into the delaying portions and the subsequent circuits are not changed, and thus, power consumption in the complex-amplitude adjusting portions 743 and 745 and the adder 741 are lowered.

According to the OFDM receiving apparatus of the fourteenth embodiment of the present invention, in the delay equalizer 734, when the delay-signal level determining portion 749 determines that the level of the delay signal is lower than that of the principal signal, the output of the feedback devices are controlled to be zero. As a result, in the subsequent circuits, power consumption is reduced.

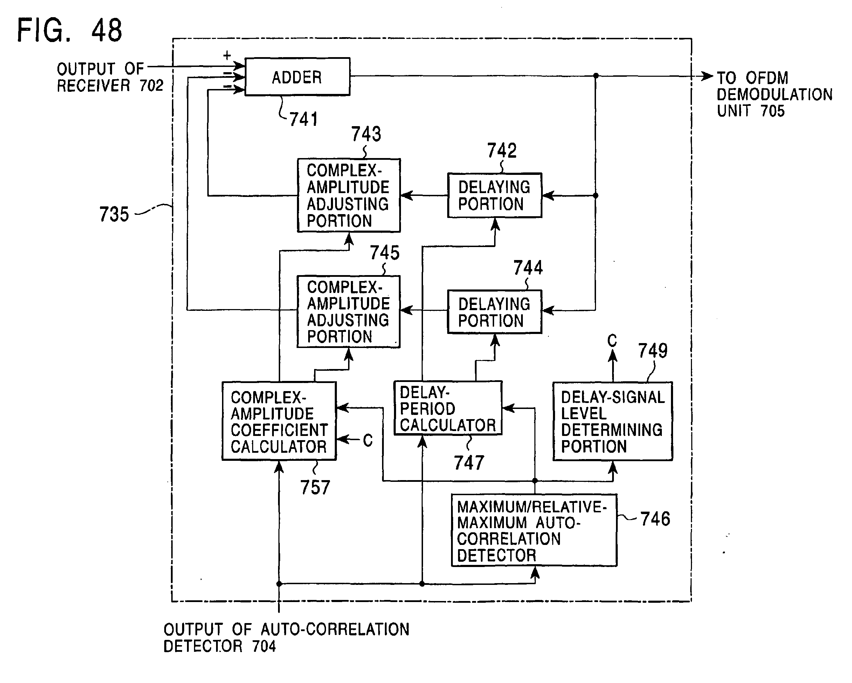

A discussion is now given, with reference to Fig. 48, of the specific configuration of a delay equalizer 735 in an OFDM receiving apparatus according to the fifteenth embodiment of the present invention. The configuration of the delay equalizer 735 of this embodiment differs from the counterpart of the fourteenth embodiment shown in Fig. 47 in that a complex-amplitude coefficient calculator 757 rather than the delay-period calculator 747 is controlled by the control signal C output from the delay-signal level determining portion 749. The other configurations of the delay equalizer 735 are similar to those of the delay equalizer 734.

In the above-configured delay equalizer 735, upon the occurrence of intersymbol interference because of the high level of the delayed wave, the control signal C is not output to the complex-amplitude coefficient calculator 757 from the delay-signal level determining portion 749, and the delay equalizing operation is performed in the delay equalizer 735.

In contrast, when the occurrence of intersymbol interference is inhibited due to the low level of the delayed wave, the control signal C is output to the complex-amplitude coefficient calculator 757 from the delay-signal level determining portion 749. Upon receiving the control signal C, the complex-amplitude coefficient calculator 757 sets the delay periods in the complex-amplitude adjusting portions 743 and 745 to zero. The complex-amplitude adjusting portions 743 and 745 then output signals having a zero level to the negative input terminals of the adder 741 from the feedback devices, thereby interrupting the execution of the delay equalizing operation. In this embodiment, the signals input into the input terminals of the adder 741 from the feedback devices are zero, and thus, power consumption in the adder 741 is lowered.

According to the OFDM receiving apparatus of the fifteenth embodiment of the present invention, when the delay-signal level determining portion 749 determines that the level of the delay signal is lower than that of the principal signal, the delay equalizer 735 controls the outputs of the feedback devices to be zero. As a result, in the subsequent circuits, power consumption is reduced.

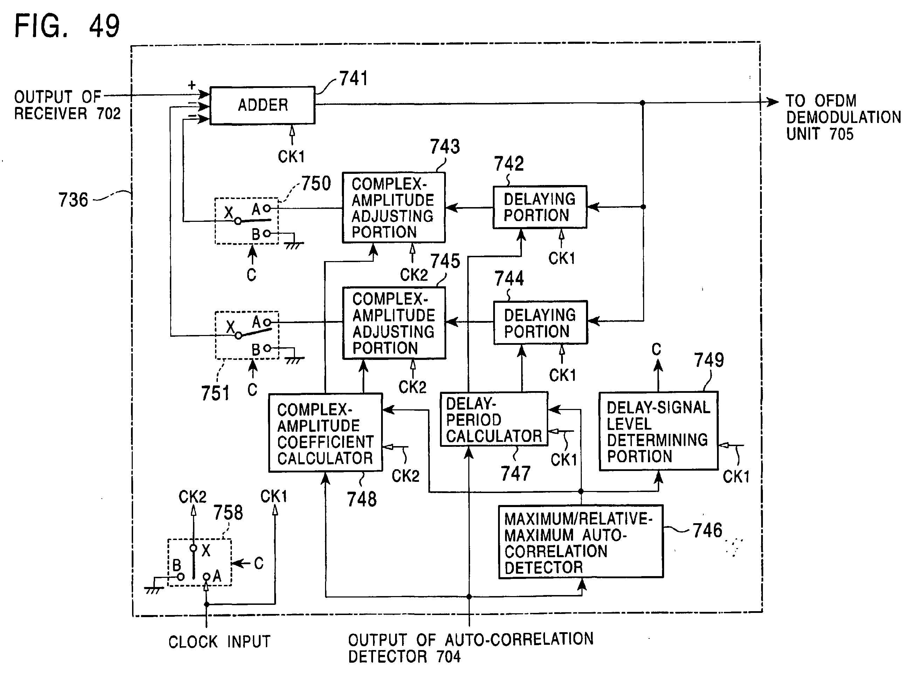

The specific configuration of a delay equalizer 736 of an OFDM receiving apparatus according to the sixteenth embodiment of the present invention is shown in Fig. 49. The delay equalizer 736 of this embodiment is a modification made to the delay equalizer 731 of the eleventh embodiment shown in Fig. 44. In this delay equalizer 736, there is provided a switching device 758 for supplying or interrupting the clocks by the control signal C output from the delay-signal level determining portion 749. The other configurations of the delay equalizer 736 are similar to those of the delay equalizer 731.

In the delay equalizer 731 shown in Fig. 44, since the overall circuit is operated by the single clock, the clock and the input/output terminals are not shown. In Fig. 49, however, for clarifying the operation of the switching device 758, the flows of the clocks are indicated by the white arrows in Fig. 49, and the input/output terminals of the individual elements for the clocks are also shown.

A clock CK1 is constantly supplied to the circuit, while a clock CK2 is a signal which is switched between an input level and a fixed level (for example, zero) by the control signal C output from the delay-signal level determining portion 749. In this embodiment, the clock CK2 is supplied to the clock input terminals of the complex-amplitude adjusting portions 743 and 745, and the complex-amplitude coefficient calculator 748, while the clock CK1 is supplied to the other elements.

In the above-constructed delay equalizer 736, upon the occurrence of intersymbol interference because of the high level of the delayed wave, the control signal C is not output to the switching devices 750, 751, and 758 from the delay-signal level determining portion 749. Accordingly, in the switching devices 750 and 751, the terminal A is connected to the terminal X, and the outputs of the complex-amplitude adjusting portions 743 and 745 are supplied to the two negative input terminals of the adder 741 from the feedback devices.

Also in the switching device 758, the terminal A is connected to the terminal X, and the input clock is supplied to the clock CK2. In this state, the delay equalizing operation is performed in the delay equalizer 736, as in the delay equalizer 731 of the eleventh embodiment.

Conversely, when the occurrence of intersymbol interference is suppressed due to the low level of the delayed wave, the control signal C is output to the switching devices 750, 751, and 758 from the delay-signal level determining portion 749. As in the delay equalizer 731 (Fig. 44), in the switching devices 750 and 751, the terminal B is connected to the terminal X, and the two negative input terminals of the adder 741 are fixed at the zero level. In this embodiment, in the switching device 758, the terminal B is connected to the terminal X, and the clock CK2 is fixed at the zero level. This prevents the supply of the clock CK2 to the complex-amplitude adjusting portions 743 and 745 and the complex-amplitude coefficient calculator 748.

As a consequence, as in the delay equalizer 731 shown in Fig. 44, the delay equalizing operation is not performed. This also prevents the operations of the complex-amplitude adjusting portions 743 and 734 and the complex-amplitude coefficient calculator 748, thereby reducing power consumption.

According to the OFDM receiving apparatus of the sixteenth embodiment of the present invention, when the delay-signal level determining portion 749 determines that the level of the delay signal is lower than that of the principal signal, the delay equalizer 736 interrupts the operation of the feedback devices. As a result, power consumption is further reduced.

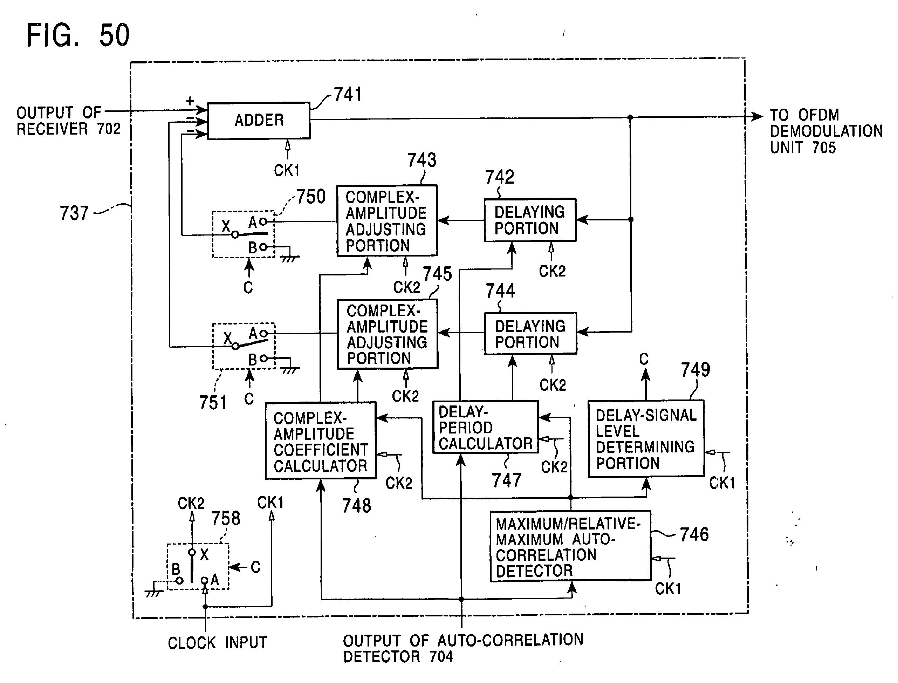

The specific configuration of a delay equalizer 737 of the OFDM receiving apparatus according to the seventeenth embodiment of the present invention is shown in Fig. 50. The delay equalizer 737 of this embodiment differs from that of the sixteenth embodiment (Fig. 49) in that the clock CK2 is supplied not only to the complex-amplitude adjusting portions 743 and 745 and the complex-amplitude coefficient calculator 748, but also to the delaying portions 742 and 744 and the delay-period calculator 747. Th other configurations of the delay equalizer 737 are similar to those of the delay equalizer 736.

In the above-configured delay equalizer 737, when the occurrence of intersymbol interference is suppressed due to the low level of the delayed wave, as in the delay equalizer 736, the operations of the complex-amplitude adjusting portions 743 and 745 and the complex-amplitude coefficient calculator 748 are interrupted, and what is more, the operations of the delaying portions 742 and 744 and the delay-period calculator 747 are stopped.

As a consequence, as in the delay equalizer 736, the delay equalizing operation is not performed. In this embodiment, not only the operations of the complex-amplitude adjusting portions 743 and 745 and the complex-amplitude coefficient calculator 748 are interrupted, but also the operations of the delaying portions 742 and 744 and the delay-period calculator 747 are discontinued. Thus, lower power consumption can be achieved in the delay equalizer 737 over the delay equalizer 736 of the sixteenth embodiment.

According to the OFDM receiving apparatus of the seventeenth embodiment of the present invention, when the delay-signal level determining portion 749 determines that the level of the delay signal is lower than that of the principal signal, the delay equalizer 737 interrupts the operation of the feedback devices. As a result, reduced power consumption can be achieved.

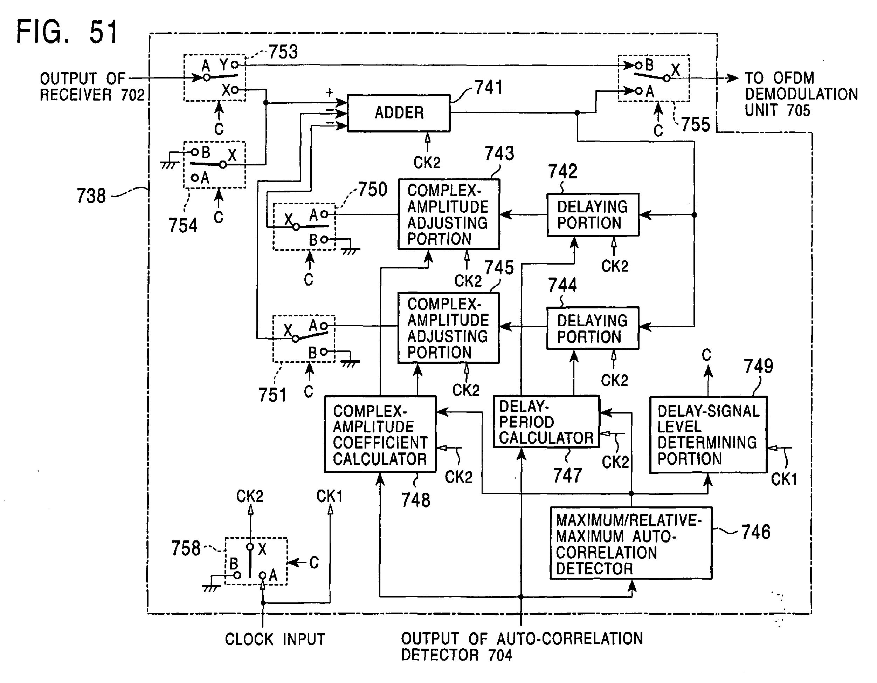

The specific configuration of a delay equalizer 738 of the OFDM receiving apparatus according to the eighteenth embodiment of the present invention is shown in Fig. 51. The delay equalizer 738 of this embodiment is a modification made to the delay equalizer 731 (Fig. 44) or the delay equalizer 733 (Fig. 46). A switching device 758 for supplying or interrupting the clocks is provided, and the switching device 759 (Fig. 46) is eliminated. Additionally, the clock CK2 which is switched between the input clock and the fixed level (in this embodiment, zero) according to the level of the delay signal is supplied to the clock input terminals of the adder 741, the delaying portions 742 and 744, the delay-period calculator 747, the complex-amplitude adjusting portions 743 and 745, and the complex-amplitude coefficient calculator 748. The clock CK1 is constantly supplied to the clock input terminals of the maximum/relative-maximum auto-correlation detector 746 and the delay-signal level determining portion 749.

In the above-constructed delay equalizer 738, when the occurrence of intersymbol interference is suppressed because of the low level of the delayed wave, the control signal C is output to the switching devices 750, 751, 753, 754, 755, and 758 from the delay-signal level determining portion 749. Accordingly, in the switching device 753, the terminal A is connected to the terminal Y, and in the switching devices 754 and 755, the terminal B is connected to the terminal X. Thus, the output signal from the receiver 702 is directly output to the OFDM demodulation unit 705 by bypassing the delay equalizer 738, thereby preventing the execution of the delay equalizing operation.

In the switching device 758, the terminal B is connected to the terminal X, and the clock CK2 is fixed at the zero level. This stops the supply of the clock CK2 to the adder 741, the delaying portions 742 and 744, the delay-period calculator 747, the complex-amplitude adjusting portions 743 and 745, and the complex-amplitude coefficient calculator 748, thereby reducing power consumption accordingly.

In the delay equalizer 738 of this embodiment, power consumption can be reduced to the lowest level over the other embodiments.

According to the OFDM receiving apparatus of the eighteenth embodiment of the present invention, when the delay-signal level determining portion 749 determines that the level of the delay signal is lower than that of the principal signal, the delay equalizer 738 interrupts the operation of the feedback devices. As a result, the effect of reducing power consumption can be exhibited.

As is seen from the foregoing description, the present invention offers the following advantages.

In an OFDM receiving apparatus of the present invention, diversity synthesizing is performed before the extraction of effective symbols from an OFDM modulated signal. Thus, even when the level of received signals fluctuates in an OFDM receiving apparatus in mobile environment, such as in an automobile, effective OFDM symbols can be accurately extracted, thereby achieving the demodulation operation with less bit errors.

Additionally, it is sufficient that only one receiving system, consisting of an effective-symbol extracting portion, a S/P converter, and a FFT processor, is provided, which is conventionally required as the same number of antennas, thereby enhancing the simplicity of an OFDM receiving apparatus.

In an OFDM receiving apparatus of the present invention, a delay equalizer is disposed at the output side of a diversity synthesizer so as to eliminate delayed waves, resulting in an output signal having a sufficiently high C/N ratio. It is thus possible to decrease bit errors after demodulation.

In another OFDM receiving apparatus of the present invention, a diversity synthesizer for performing antenna diversity and a delay equalizer for removing signal components which are delayed later than a predetermined period from a received OFDM modulated signal are disposed before a FFT processor for performing FFT processing on effective symbols. Moreover, by providing the delay equalizer prior to the diversity synthesizer, the delayed waves are eliminated. Accordingly, the output signal having a sufficiently high C/N ratio can be obtained, thereby decreasing bit errors after demodulation.

In still another OFDM receiving apparatus of the present invention, a power comparator device is provided for a delay equalizer so as to compare the input power and the output power of the delay equalizer, thereby more stably eliminating delayed waves. Accordingly, the output signal having a sufficiently high C/N ratio can be obtained, thereby decreasing bit errors after demodulation.

Additionally, when the level of a delay signal is low, the delay equalizer interrupts the delay equalizing operation, thereby reducing power consumption in the delay equalizer.

## Claims

1. An OFDM receiving apparatus comprising:
a plurality of separately disposed antennas (11a, 11b) for receiving OFDM modulated signals;
a plurality of receiving means (12a, 12b), each of said receiving means being connected to the corresponding antenna;
diversity synthesizing means (13) for combining output signals from said plurality of receiving means to a synthesized signal; and
OFDM demodulation means (14), **characterised in that**:
each receiving means is provided for processing the signals supplied from said plurality of antennas to convert them into baseband signals; the OFDM demodulation means is provided for extracting an effective symbol signal by removing a guard interval signal inserted when the signal is modulated from the synthesized signal output from said diversity synthesizing means; the diversity synthesising means comprises cross-correlation detection means (20), phase shifting means (21, 22) and signal synthesizing means (23); and wherein the cross-correlation detection means is adapted to detect a cross-correlation value between output signals from said plurality of receiving means, the phase shifting means is disposed at an output terminal of each of said plurality of receiving means for adjusting the phase of the output signal from each of said plurality of receiving means by a predetermined amount of phase based on a detection result of said cross-correlation detection means, and the signal synthesizing means is adapted to combine the signals that have been phase-adjusted by said phase shifting means.

2. An OFDM receiving apparatus comprising:
a plurality of separately disposed antennas (11a, 11b) for receiving OFDM modulated signals;
a plurality of receiving means (12a, 12b), each of said receiving means being connected to the corresponding antenna;
diversity synthesizing means (13A) for combining output signals from said plurality of receiving means to a synthesized signal; and
OFDM demodulation means (14), **characterised in that**:
each receiving means is provided for processing the signals supplied from said plurality of antennas to convert them into baseband signals; the OFDM demodulation means is provided for extracting an effective symbol signal by removing a guard interval signal inserted when the signal is modulated from the synthesized signal output from said diversity synthesizing means; the diversity synthesising means comprises auto-correlation detection means (30, 31), amplitude adjusting means (32, 33), cross-correlation detection means (20), phase shifting means (21, 22) and signal synthesizing means (23); and wherein the auto-correlation detection means is connected to the output terminal of each of said plurality of receiving means for detecting an auto-correlation value of an output signal from each of said plurality of receiving means;
the amplitude adjusting means is disposed at the output terminal of each of said receiving means for adjusting the amplitude of the output signal from each of said receiving means to a predetermined amplitude based on a detection result of said auto-correlation detection means;
the cross-correlation detection means is adapted to detect a cross-correlation value between the output signals from said plurality of receiving means;
the phase shifting means is disposed at the output terminal of each of said amplitude adjusting means for adjusting the phase of the output signal from each of said amplitude adjusting means by a predetermined phase based on a detection result of said cross-correlation detection means; and
the signal synthesizing means is adapted to combine the signals having the amplitudes adjusted by said amplitude adjusting means and the phases adjusted by said phase shifting means to a synthesized signal.

3. An OFDM receiving apparatus comprising:
a plurality of separately disposed antennas (11a, 11b) for receiving OFDM modulated signals;
a plurality of receiving means (12a, 12b), each of said receiving means being connected to the corresponding antenna;
diversity synthesizing means (13B) for combining output signals from said plurality of receiving means to a synthesized signal; and
OFDM demodulation means (14), **characterised in that**:
each receiving means is provided for processing the signals supplied from said plurality of antennas to convert them into baseband signals; the OFDM demodulation means is provided for extracting an effective symbol signal by removing a guard interval signal inserted when the signal is modulated from the synthesized signal output from said diversity synthesizing means; the diversity synthesising means comprises auto-correlation detection means (30, 31), amplitude adjusting means (32, 33), cross-correlation detection means (20), phase shifting means (21, 22) and signal synthesizing means (23); and wherein the auto-correlation detection means is connected to the output terminal of each of said plurality of receiving means for detecting an auto-correlation value of an output signal from each of said plurality of receiving means;
the amplitude adjusting means is disposed at the output terminal of each of said receiving means for adjusting the amplitude of the output signal from each of said receiving means to a predetermined amplitude based on a detection result of said auto-correlation detection means;
the cross-correlation detection means is adapted to detect a cross-correlation value between output signals from said amplitude adjusting means;
the phase shifting means is disposed at the output terminal of each of said amplitude adjusting means for adjusting the phase of the output signal from each of said amplitude adjusting means by a predetermined phase based on a detection result of said cross-correlation detection means; and
the signal synthesizing means is adapted to combine the signals having the amplitudes adjusted by said amplitude adjusting means and the phases adjusted by said phase shifting means to a synthesized signal.

4. An OFDM receiving apparatus comprising:
a plurality of separately disposed antennas (11a, 11b) for receiving OFDM modulated signals;
a plurality of receiving means (12a, 12b), each of said receiving means being connected to the corresponding antenna;
diversity synthesizing means (13C) for combining output signals from said plurality of receiving means to a synthesized signal; and
OFDM demodulation means (14), **characterised in that**:
each receiving means is provided for processing the signals supplied from said plurality of antennas to convert them into baseband signals; the OFDM demodulation means is provided for extracting an effective symbol signal by removing a guard interval signal inserted when the signal is modulated from the synthesized signal output from said diversity synthesizing means; the diversity synthesising means comprises auto-correlation detection means (30, 31), amplitude adjusting means (32, 33), cross-correlation detection means (20), phase shifting means (21,22) and signal synthesizing means (23); and wherein the auto correlation detection means is connected to the output terminal of each of said plurality of receiving means for detecting an auto-correlation value of an output signal from each of said plurality of receiving means;
the cross-correlation detection means is adapted to detect a cross-correlation value between the output signals from said plurality of receiving means;
the phase shifting means is disposed at the output terminal of each of said plurality of receiving means for adjusting the phase of the output signal from each of said plurality of receiving means by a predetermined phase based on a detection result of said cross-correlation detection means;
the amplitude adjusting means is disposed at the output terminal of each of said phase shifting means for adjusting the amplitude of an output signal from each of said phase shifting means to a predetermined amplitude based on a detection result of said auto-correlation detection means; and
the signal synthesizing means is adapted to combine the signals having the phases adjusted by said phase shifting means and the amplitudes adjusted by said amplitude adjusting means to a synthesized signal.

5. An OFDM receiving apparatus comprising:
a plurality of separately disposed antennas (11a, 11b) for receiving OFDM modulated signals;
a plurality of receiving means (12a, 12b), each of said receiving means being connected to the corresponding antenna;
diversity synthesizing means (13D) for combining output signals from said plurality of receiving means to a synthesized signal; and
OFDM demodulation means (14), **characterised in that**:
each receiving means is provided for processing the signals supplied from said plurality of antennas to convert them into baseband signals; the OFDM demodulation means is provided for extracting an effective symbol signal by removing a guard interval signal inserted when the signal is modulated from the synthesized signal output from said diversity synthesizing means; the diversity synthesising means comprises auto-correlation detection means (30, 31), amplitude adjusting means (32, 33) cross-correlation detection means (20), phase shifting means (21, 22) and synthesizing means (23); and wherein the cross-correlation detection means is adapted to detect a cross-correlation value between the output signals from said plurality of receiving means;
the phase shifting means is disposed at the output terminal of each of said plurality of receiving means for adjusting the phase of the output signal from each of said plurality of receiving means by a predetermined phase based on a detection result of said cross-correlation detection means;
the auto-correlation detection means is connected to the output terminal of each of said phase shifting means for detecting an auto-correlation value of an output signal from each of said phase shifting means;
the amplitude adjusting means is disposed at the output terminal of each of said phase shifting means for adjusting the amplitude of the output signal from each of said phase shifting means to a predetermined amplitude based on a detection result of said auto-correlation detection means; and
the signal synthesizing means is adapted to combine the signals having the phases adjusted by said phase shifting means and the amplitudes adjusted by said amplitude adjusting means to a synthesized signal.

6. An OFDM receiving apparatus according to any one of Claims 1 to 5, wherein said cross-correlation detection means comprises:
complex-conjugate signal generation means (160) for generating a complex-conjugate signal from one of the signals supplied to said cross-correlation detection means and for outputting the complex-conjugate signal;
multiplication means (161) for multiplying the complex-conjugate signal with the other signal supplied to said cross-correlation detection means;
accumulation means (162) for accumulating multiplication results of said multiplication means for a predetermined period;
phase calculation means for performing a phase calculation from an accumulation result of said accumulation means; and
phase-coefficient calculation means (141) for determining phase coefficients from a phase calculation result of said phase calculation means.

7. An OFDM receiving apparatus according to any one of Claims 2 to 5, wherein said auto-correlation detection means comprises:
effective-symbol period delaying means (40) for outputting a delay signal which is delayed later than the signal supplied to said auto-correlation detection means by an effective symbol period;
complex-conjugate signal generation means (41) for generating a complex-conjugate signal from the signal supplied to said auto-correlation detection means and for outputting the complex-conjugate signal;
multiplication means (42) for multiplying the delay signal output from said effective-symbol period delaying means with the complex-conjugate signal output from said complex-conjugate signal generation means;
accumulation means (43) for accumulating multiplication results of said multiplication means for a predetermined period;
maximum auto-correlation detection means (44) for detecting the maximum auto-correlation value from an accumulation result of said accumulation means; and
amplitude-coefficient calculation means (45) for determining an amplitude coefficient of said amplitude adjusting means from a detection result of said maximum auto-correlation detection means.

8. An OFDM receiving apparatus according to Claim 7, wherein said OFDM demodulation means is adapted to extract the effective symbol signal by removing the guard interval signal from the synthesized signal of said diversity synthesizing means based on the point at which the maximum auto-correlation value is detected among the maximum auto-correlation values detected in said plurality of auto-correlation detection means.

## Patentansprüche

1. OFDM-Empfangsvorrichtung, aufweisend:
eine Mehrzahl von getrennt angeordneten Antennen (11a, 11b) für das Empfangen von OFDM-modulierten Signalen;
eine Mehrzahl von Empfangseinrichtungen (12a, 12b), wobei jede der Empfangseinrichtungen mit der entsprechenden Antenne verbunden ist;
eine Diversitätssynthetisiereinrichtung (13) für das Kombinieren von Ausgangssignalen von der Mehrzahl von Empfangseinrichtungen zu einem synthetisierten Signal; und
eine OFDM-Demodulationseinrichtung (14), **dadurch gekennzeichnet, dass**:
jede Empfangseinrichtung dafür vorgesehen ist, die von der Mehrzahl von Antennen zugeführten Signale zu verarbeiten, um sie in Basisbandsignale umzuwandeln; die OFDM-Demodulationseinrichtung dafür vorgesehen ist, ein Signal mit einem effektiven Symbol durch das Entfernen eines bei der Modulation des Signals eingeführten Intervallüberwachungssignals von dem von der Diversitätssynthetisiereinrichtung ausgegebenen synthetisierten Signal zu extrahieren; die Diversitätssynthetisiereinrichtung eine Kreuzkorrelationsdetektierungseinrichtung (20), eine Phasenschiebeeinrichtung (21, 22) und eine Signalsynthetisiereinrichtung (23) aufweist; und wobei die Kreuzkorrelationsdetektierungseinrichtung dafür ausgebildet ist, einen Kreuzkorrelationswert zwischen Ausgangssignalen von der Mehrzahl von Empfangseinrichtungen zu detektieren, die Phasenschiebeeinrichtung an einem Ausgangsanschluss jeder der Mehrzahl von Empfangseinrichtungen angeordnet ist, um die Phase des Ausgangssignals von jeder der Mehrzahl von Empfangseinrichtungen um einen vorherbestimmten Phasenbetrag auf der Basis eines Detektierungsergebnisses der Kreuzkorrelationsdetektierungseinrichtung anzupassen, und die Signalsynthetisiereinrichtung dafür ausgebildet ist, die von der Phasenschiebeeinrichtung phasen-angepassten Signale zu kombinieren.

2. OFDM-Empfangsvorrichtung, aufweisend:
eine Mehrzahl von getrennt angeordneten Antennen (11a, 11b) für das Empfangen von OFDM-modulierten Signalen;
eine Mehrzahl von Empfangseinrichtungen (12a, 12b), wobei jede der Empfangseinrichtungen mit der entsprechenden Antenne verbunden ist;
eine Diversitätssynthetisiereinrichtung (13A) für das Kombinieren von Ausgangssignalen von der Mehrzahl von Empfangseinrichtungen zu einem synthetisierten Signal; und
eine OFDM-Demodulationseinrichtung (14), **dadurch gekennzeichnet, dass**:
jede Empfangseinrichtung dafür vorgesehen ist, die von der Mehrzahl von Antennen zugeführten Signale zu verarbeiten, um sie in Basisbandsignale umzuwandeln; die OFDM-Demodulationseinrichtung dafür vorgesehen ist, ein Signal mit einem effektiven Symbol durch das Entfernen eines bei der Modulation des Signals eingeführten Intervallüberwachungssignals von dem von der Diversitätssynthetisiereinrichtung ausgegebenen synthetisierten Signal zu extrahieren; die Diversitätssynthetisiereinrichtung, eine Autokorrelationsdetektierungseinrichtung (30, 31), eine Amplitudenanpasseinrichtung (32, 33), eine Kreuzkorrelationsdetektierungseinrichtung (20), eine Phasenschiebeeinrichtung (21, 22) und eine Signalsynthetisiereinrichtung (23) aufweist; und wobei die Autokorrelationsdetektierungseinrichtung mit dem Ausgangsanschluss jeder der Mehrzahl von Empfangseinrichtungen verbunden ist, um einen Autokorrelationswert eines Ausgangssignals von jeder der Mehrzahl von Empfangseinrichtungen zu detektieren; die Amplitudenanpasseinrichtung an dem Ausgangsanschluss jeder der Empfangseinrichtungen angeordnet ist, um die Amplitude des Ausgangssignals jeder der Empfangseinrichtungen an eine vorherbestimmte Amplitude auf der Basis eines Detektierungsergebnisses der Autokorrelationsdetektierungseinrichtung anzupassen; die Kreuzkorrelationsdetektierungseinrichtung dafür ausgebildet ist, einen Kreuzkorrelationswert zwischen den Ausgangssignalen von der Mehrzahl von Empfangseinrichtungen zu detektieren;
die Phasenschiebeeinrichtung an dem Ausgangsanschluss jeder der Amplitudenanpasseinrichtungen angeordnet ist, um die Phase des Ausgangssignals von jeder der Amplitudenanpasseinrichtungen um eine vorherbestimmte Phase auf der Basis eines Detektierungsergebnisses der Kreuzkorrelationsdetektierungseinrichtung anzupassen; und
die Signalsynthetisiereinrichtung dafür ausgebildet ist, die Signale mit den von der Amplitudenanpasseinrichtung angepassten Amplituden mit den von der Phasenschiebeeinrichtung angepassten Phasen zu einem synthetisierten Signal zu kombinieren.

3. OFDM-Empfangsvorrichtung, aufweisend:
eine Mehrzahl von getrennt angeordneten Antennen (11a, 11b) für das Empfangen von OFDM-modulierten Signalen;
eine Mehrzahl von Empfangseinrichtungen (12a, 12b), wobei jede der Empfangseinrichtungen mit der entsprechenden Antenne verbunden ist;
eine Diversitätssynthetisiereinrichtung (13B) für das Kombinieren von Ausgangssignalen von der Mehrzahl von Empfangseinrichtungen zu einem synthetisierten Signal; und
eine OFDM-Demodulationseinrichtung (14), **dadurch gekennzeichnet, dass**:
jede Empfangseinrichtung dafür vorgesehen ist, die von der Mehrzahl von Antennen zugeführten Signale zu verarbeiten, um sie in Basisbandsignale umzuwandeln; die OFDM-Demodulationseinrichtung dafür vorgesehen ist, ein Signal mit einem effektiven Symbol durch das Entfernen eines bei der Modulation des Signals eingeführten Intervallüberwachungssignals von dem von der Diversitätssynthetisiereinrichtung ausgegebenen synthetisierten Signal zu extrahieren; die Diversitätssynthetisiereinrichtung, eine Autokorrelationsdetektierungseinrichtung (30, 31), eine Amplitudenanpasseinrichtung (32, 33), eine Kreuzkorrelationsdetektierungseinrichtung (20), eine Phasenschiebeeinrichtung (21, 22) und eine Signalsynthetisiereinrichtung (23) aufweist; und wobei die Autokorrelationsdetektierungseinrichtung mit dem Ausgangsanschluss jeder der Mehrzahl von Empfangseinrichtungen verbunden ist, um einen Autokorrelationswert eines Ausgangssignals von jeder der Mehrzahl von Empfangseinrichtungen zu detektieren;
die Amplitudenanpasseinrichtung an dem Ausgangsanschluss von jeder der Empfangseinrichtungen angeordnet ist, um die Amplitude des Ausgangssignals von jeder der Empfangseinrichtungen auf eine vorherbestimmte Amplitude auf der Basis eines Detektierungsergebnisses der Autokorrelationsdetektierungseinrichtung anzupassen;
die Kreuzkorrelationsdetektierungseinrichtung dafür ausgebildet ist, einen Kreuzkorrelationswert zwischen den Ausgangssignalen von der Amplitudenanpassseinrichtung zu detektieren;
die Phasenschiebeeinrichtung an einem Ausgangsanschluss jeder der Amplitudenanpasseinrichtungen angeordnet ist, um die Phase des Ausgangssignals von jeder der Amplitudenanpasseinrichtungen um eine vorherbestimmte Phase auf der Basis eines Detektierungsergebnisses der Kreuzkorrelationsdetektierungseinrichtung anzupassen; und
die Signalsynthetisiereinrichtung dafür ausgebildet ist, die Signale mit der von der Amplitudenanpasseinrichtung angepassten Amplitude mit den von der Phasenschiebeeinrichtung angepassten Phasen zu einem synthetisierten Signal zu kombinieren.

4. OFDM-Empfangsvorrichtung, aufweisend:
eine Mehrzahl von getrennt angeordneten Antennen (11a, 11b) für das Empfangen von OFDM-modulierten Signalen;
eine Mehrzahl von Empfangseinrichtungen (12a, 12b), wobei jede der Empfangseinrichtungen mit der entsprechenden Antenne verbunden ist;
eine Diversitätssynthetisiereinrichtung (13C) für das Kombinieren von Ausgangssignalen von der Mehrzahl von Empfangseinrichtungen zu einem synthetisierten Signal; und
eine OFDM-Demodulationseinrichtung (14), **dadurch gekennzeichnet, dass**:
jede Empfangseinrichtung dafür vorgesehen ist, die von der Mehrzahl von Antennen zugeführten Signale zu verarbeiten, um sie in Basisbandsignale umzuwandeln; die OFDM-Demodulationseinrichtung dafür vorgesehen ist, ein Signal mit einem effektiven Symbol durch das Entfernen eines bei der Modulation des Signals eingeführten Intervallüberwachungssignals von dem von der Diversitätssynthetisiereinrichtung ausgegebenen synthetisierten Signal zu extrahieren; wobei die Diversitätssynthetisiereinrichtung eine Autokorrelationsdetektierungseinrichtung (30, 31), eine Amplitudenanpasseinrichtung (32, 33), eine Kreuzkorrelationsdetektierungseinrichtung (20), eine Phasenschiebeeinrichtung (21, 22) und eine Signalsynthetisiereinrichtung (23) aufweist; und wobei die Autokorrelationsdetektierungseinrichtung mit dem Ausgangsanschluss jeder der Mehrzahl von Empfangseinrichtungen verbunden ist, um einen Autokorrelationswert eines Ausgangssignals von jeder der Mehrzahl von Empfangseinrichtungen zu detektieren;
die Kreuzkorrelationsdetektierungseinrichtung dafür ausgebildet ist, einen Kreuzkorrelationswert zwischen den Ausgangssignalen von der Mehrzahl von Empfangseinrichtungen zu detektieren;
die Phasenschiebeeinrichtung an einem Ausgangsanschluss jeder der Mehrzahl von Empfangseinrichtungen angeordnet ist, um die Phase des Ausgangssignals von jeder der Mehrzahl von Empfangseinrichtungen um eine vorherbestimmte Phase auf der Basis eines Detektierungsergebnisses der Kreuzkorrelationsdetektierungseinrichtung anzupassen;
die Amplitudenanpasseinrichtung an dem Ausgangsanschluss jeder der Phasenschiebeeinrichtungen angeordnet ist, um die Amplitude des Ausgangssig-nals von jeder der Phasenschiebeeinrichtungen an eine vorherbestimmte Amplitude auf der Basis eines Detektierungsergebnisses der Autokorrelationsdetektierungseinrichtung anzupassen; und
die Signalsynthetisiereinrichtung dafür ausgebildet ist, die Signale mit den von der Phasenschiebeeinrichtung angepassten Phasen mit den von der Amplitudenanpasseinrichtung angepassten Amplituden zu einem synthetisierten Signal zu kombinieren.

5. OFDM-Empfangsvorrichtung, aufweisend:
eine Mehrzahl von getrennt angeordneten Antennen (11a, 11b) für das Empfangen von OFDM-modulierten Signalen;
eine Mehrzahl von Empfangseinrichtungen (12a, 12b), wobei jede der Empfangseinrichtungen mit der entsprechenden Antenne verbunden ist;
eine Diversitätssynthetisiereinrichtung (13D) für das Kombinieren von Ausgangssignalen von der Mehrzahl von Empfangseinrichtungen zu einem synthetisierten Signal; und
eine OFDM-Demodulationseinrichtung (14), **dadurch gekennzeichnet, dass**:
jede Empfangseinrichtung dafür vorgesehen ist, die von der Mehrzahl von Antennen zugeführten Signale zu verarbeiten, um sie in Basisbandsignale umzuwandeln; die OFDM-Demodulationseinrichtung dafür vorgesehen ist, ein Signal mit einem effektiven Symbol durch das Entfernen eines bei der Modulation des Signals eingeführten Intervallüberwachungssignals von dem von der Diversitätssynthetisiereinrichtung ausgegebenen synthetisierten Signal zu extrahieren; die Diversitätssynthetisiereinrichtung, eine Autokorrelationsdetektierungseinrichtung (30, 31), eine Amplitudenanpasseinrichtung (32, 33), eine Kreuzkorrelationsdetektierungseinrichtung (20), eine Phasenschiebeeinrichtung (21, 22) und eine Synthetisiereinrichtung (23) aufweist; und wobei die Kreuzkorrelationsdetektierungseinrichtung dafür ausgebildet ist, einen Kreuzkorrelationswert zwischen den Ausgangssignalen von der Mehrzahl von Empfangseinrichtungen zu detektieren;
die Phasenschiebeeinrichtung an dem Ausgangsanschluss jeder der Mehrzahl von Empfangseinrichtungen angeordnet ist, um die Phase des Ausgangssignals von jeder der Mehrzahl von Empfangseinrichtungen um eine vorherbestimmte Phase auf der Basis eines Detektierungsergebnisses der Kreuzkorrelationsdetektierungseinrichtung anzupassen;
die Autokorrelationsdetektierungseinrichtung mit dem Ausgangsanschluss jeder der Phasenschiebeeinrichtung verbunden ist, um einen Autokorrelationswert eines Ausgangssignals von jeder der Phasenschiebeeinrichtungen zu detektieren;
die Amplitudenanpasseinrichtung an dem Ausgangsanschluss jeder der Phasenschiebeeinrichtung angeordnet ist, um die Amplitude des Ausgangssignals von jeder der Phasenschiebeeinrichtungen an eine vorherbestimmte Amplitude auf der Basis eines Detektierungsergebnisses der Autokorrelationsdetektierungseinrichtung anzupassen; und
die Signalsynthetisiereinrichtung dafür ausgebildet ist, die Signale mit den von der Phasenschiebeeinrichtung angepassten Phasen mit den von der Amplitudenanpasseinrichtung angepassten Amplituden zu einem synthetisierten Sig-nal zu kombinieren.

6. OFDM-Empfangsvorrichtung nach einem der Ansprüche 1 bis 5, wobei die Kreuzkorrelationsdetektierungseinrichtung aufweist:
eine Einrichtung (160) zur Erzeugung von komplexkonjugierten Signalen für das Erzeugen eines komplexkonjugierten Signals aus einem von den der Kreuzkorrelationsdetektierungseinrichtung zugeführten Signalen und für das Ausgeben des komplexkonjugierten Signals;
eine Multiplikationseinrichtung (161) für das Multiplizieren des komplexkonjugierten Signals mit dem anderen der Kreuzkorrelationsdetektierungseinrichtung zugeführten Signal;
eine Akkumulationseinrichtung (162) für das Akkumulieren von Multiplikationsergebnissen der Multiplikationseinrichtung für eine vorherbestimmte Periode;
eine Phasenberechnungseinrichtung für das Ausführen einer Phasenberechnung von einem Akkumulationsergebnis der Akkumulationseinrichtung; und
eine Phasenkoeffizientenberechnungseinrichtung (141) für das Bestimmen von Phasenkoeffizienten von einem Phasenberechnungsergebnis der Phasenberechnungseinrichtung.

7. OFDM-Empfangsvorrichtung nach einem der Ansprüche 2 bis 5, wobei die Autokorrelationsdetektierungseinrichtung aufweist:
eine Einrichtung (40) zur Verzögerung einer Periode eines effektiven Symbols für das Ausgeben eines Verzögerungssignals, das um die Periode eines effektiven Signals später verzögert wird als das der Autokorrelationsdetektierungseinrichtung zugeführte Signal;
eine Einrichtung (41) zur Erzeugung von komplexkonjugierten Signalen für das Erzeugen eines komplexkonjugierten Signals aus dem der Autokorrelationsdetektierungseinrichtung zugeführten Signal und für das Ausgeben des komplexkonjugierten Signals;
eine Multiplikationseinrichtung (42) für das Multiplizieren des von der Einrichtung zur Verzögerung einer Periode eines effektiven Symbols ausgegeben Verzögerungssignals mit dem von der Einrichtung zur Erzeugung von komplexkonjugierten Signalen ausgegebenen komplexkonjugierten Signal;
eine Akkumulationseinrichtung (43) für das Akkumulieren von Multiplikationsergebnissen der Multiplikationseinrichtung für eine vorherbestimmte Periode;
eine Maximalautokorrelationsdetektierungseinrichtung (44) für das Detektieren des Maximalautokorrelationswerts von einem Akkumulationsergebnis der Akkumulationseinrichtung; und
eine Amplitudenkoeffizientenberechnungseinrichtung (45) für das Bestimmen eines Amplitudenkoeffizienten der Amplitudenanpasseinrichtung von einem Detektierungsergebnis der Maximalautokorrelationsdetektierungseinrichtung.

8. OFDM-Empfangsvorrichtung nach Anspruch 7,
wobei die OFDM-Demodulationseinrichtung dafür ausgebildet ist, das Signal mit dem effektiven Symbol durch das Entfernen des Intervallüberwachungssignals von dem synthetisierten Signal der Diversitätssynthetisiereinrichtung auf der Basis des Punktes zu extrahieren, an dem der Maximalautokorrelationswert unter den von der Mehrzahl von Autokorrelationsdetektierungseinrichtungen detektierten Maximalautokorrelationswerten detektiert wird.

## Revendications

1. Appareil de réception OFDM, comprenant :
une pluralité d'antennes (11a, 11b) disposées séparément, permettant de recevoir des signaux modulés OFDM ;
une pluralité de moyens récepteurs (12a, 12b), chacun desdits moyens récepteurs étant connecté à l'antenne correspondante ;
des moyens synthétiseurs de diversité (13), permettant de combiner les signaux de sortie provenant de ladite pluralité de moyens récepteurs afin d'obtenir un signal synthétisé ; et
des moyens démodulateurs OFDM (14),
**caractérisé en ce que** :
chaque moyen récepteur est agencé pour traiter les signaux délivrés par ladite pluralité d'antennes afin de les convertir en signaux de bande de base ; les moyens démodulateurs OFDM sont agencés pour extraire un signal symbole effectif en éliminant un signal d'intervalle de garde inséré lorsque le signal est modulé à partir du signal synthétisé délivré par lesdits moyens synthétiseurs de diversité ; les moyens synthétiseurs de diversité comprennent des moyens détecteurs de corrélation croisée (20), des moyens de décalage de phase (21, 22) et des moyens synthétiseurs de signaux (23) ; et dans lequel les moyens détecteurs de corrélation croisée sont conçus pour détecter une valeur de corrélation croisée entre les signaux de sortie provenant de ladite pluralité de moyens récepteurs, les moyens de décalage de phase sont disposés à une borne de sortie de chacun de ladite pluralité de moyens récepteurs pour ajuster la phase du signal de sortie provenant de chacun de ladite pluralité de moyens récepteurs par une quantité prédéterminée de phase sur la base du résultat de détection desdits moyens détecteurs de corrélation croisée, et les moyens synthétiseurs de signaux sont conçus pour combiner les signaux qui ont été ajustés en phase par lesdits moyens de décalage de phase.

2. Appareil de réception OFDM, comprenant :
une pluralité d'antennes (11a, 11b) disposées séparément, permettant de recevoir des signaux modulés OFDM ;
une pluralité de moyens récepteurs (12a, 12b), chacun desdits moyens récepteurs étant connecté à l'antenne correspondante ;
des moyens synthétiseurs de diversité (13A), permettant de combiner les signaux de sortie provenant de ladite pluralité de moyens récepteurs en un signal synthétisé ; et
des moyens démodulateurs OFDM (14),
**caractérisé en ce que** :
chaque moyen récepteur est agencé pour traiter les signaux délivrés à partir de ladite pluralité d'antennes afin de les convertir en signaux de bande de base ; les moyens démodulateurs OFDM sont agencés pour extraire un signal symbole effectif en éliminant un signal d'intervalle de garde inséré lorsque le signal est modulé à partir du signal synthétisé délivré par lesdits moyens synthétiseurs de diversité ; les moyens synthétiseurs de diversité comprennent des moyens détecteurs d'autocorrélation (30, 31), des moyens d'ajustement d'amplitude (32, 33), des moyens détecteurs de corrélation croisée (20), des moyens de décalage de phase (21, 22) et des moyens synthétiseurs de signaux (23) ; et dans lequel les moyens détecteurs d'autocorrélation sont connectés à la borne de sortie de chacun de ladite pluralité de moyens récepteurs pour détecter une valeur d'autocorrélation d'un signal de sortie provenant de chacun de ladite pluralité de moyens récepteurs ;
les moyens d'ajustement d'amplitude sont disposés au niveau de la borne de sortie de chacun desdits moyens récepteurs pour ajuster l'amplitude du signal de sortie provenant de chacun desdits moyens récepteurs à une amplitude prédéterminée sur la base du résultat de détection desdits moyens détecteurs d'autocorrélation ;
les moyens détecteurs de corrélation croisée sont conçus pour détecter une valeur de corrélation croisée entre les signaux de sortie provenant de ladite pluralité de moyens récepteurs ;
les moyens de décalage de phase sont disposés au niveau de la borne de sortie de chacun desdits moyens d'ajustement d'amplitude permettant d'ajuster la phase du signal de sortie provenant de chacun desdits moyens d'ajustement d'amplitude par une phase prédéterminée sur la base du résultat de détection desdits moyens détecteurs de corrélation croisée ; et
les moyens synthétiseurs de signaux sont conçus pour combiner les signaux ayant les amplitudes ajustées par lesdits moyens d'ajustement d'amplitude et les phases ajustées par lesdits moyens de décalage de phase afin d'obtenir un signal synthétisé.

3. Appareil de réception OFDM, comprenant :
une pluralité d'antennes (11a, 11b) disposées séparément pour recevoir des signaux modulés OFDM ;
une pluralité de moyens récepteurs (12a, 12b), chacun desdits moyens récepteurs étant connecté à l'antenne correspondante ;
des moyens synthétiseurs de diversité (13B) permettant de combiner les signaux de sortie provenant de ladite pluralité de moyens récepteurs en un signal synthétisé ; et
des moyens démodulateurs OFDM (14),
**caractérisé en ce que** :
chaque moyen récepteur est agencé pour traiter les signaux délivrés à partir de ladite pluralité d'antennes afin de les convertir en signaux de bande de base ; les moyens démodulateurs OFDM sont agencés pour extraire un signal symbole effectif en éliminant un signal d'intervalle de garde inséré lorsque le signal est modulé à partir de la sortie de signaux synthétisés provenant desdits moyens synthétiseurs de diversité ; les moyens synthétiseurs de diversité comprennent des moyens détecteurs d'autocorrélation (30, 31), des moyens d'ajustement d'amplitude (32, 33), des moyens détecteurs de corrélation croisée (20), des moyens de décalage de phase (21, 22) et des moyens synthétiseurs de signaux (23) ; et dans lequel les moyens détecteurs d'autocorrélation sont connectés à la borne de sortie de chacun de ladite pluralité de moyens récepteurs afin de détecter une valeur d'autocorrélation d'un signal de sortie provenant de chacun de ladite pluralité de moyens récepteurs ;
les moyens d'ajustement d'amplitude sont disposés au niveau de la borne de sortie de chacun desdits moyens récepteurs afin d'ajuster l'amplitude du signal de sortie provenant de chacun desdits moyens récepteurs à une amplitude prédéterminée sur la base du résultat de détection desdits moyens détecteurs d'autocorrélation ;
les moyens détecteurs de corrélation croisée sont conçus pour détecter une valeur de corrélation croisée entre les signaux de sortie provenant desdits moyens d'ajustement d'amplitude ;
les moyens de décalage de phase sont disposés au niveau de la borne de sortie de chacun desdits moyens d'ajustement d'amplitude pour ajuster la phase du signal de sortie provenant de chacun desdits moyens d'ajustement d'amplitude par une phase prédéterminée sur la base du résultat de détection desdits moyens détecteurs de corrélation croisée ; et
les moyens synthétiseurs de signaux sont conçus pour combiner les signaux ayant les amplitudes ajustées par lesdits moyens d'ajustement d'amplitude et les phases ajustées par lesdits moyens de décalage de phase afin d'obtenir un signal synthétisé.

4. Appareil de réception OFDM, comprenant :
une pluralité d'antennes (11a, 11b) disposées séparément afin de recevoir les signaux modulés OFDM ;
une pluralité de moyens récepteurs (12a, 12b), chacun desdits moyens récepteurs étant connecté à l'antenne correspondante ;
des moyens synthétiseurs de diversité (13C), permettant de combiner les signaux de sortie provenant de ladite pluralité de moyens récepteurs en un signal synthétisé ; et
des moyens démodulateurs OFDM (14),
**caractérisé en ce que** :
chaque moyen récepteur est agencé pour traiter les signaux délivrés par ladite pluralité d'antennes afin de les convertir en signaux de bande de base ; les moyens démodulateurs OFDM sont agencés pour extraire un signal symbole effectif en éliminant un signal d'intervalle de garde inséré lorsque le signal est modulé à partir du signal synthétisé délivré par lesdits moyens synthétiseurs de diversité ; les moyens synthétiseurs de diversité comprennent des moyens détecteurs d'autocorrélation (30, 31), des moyens d'ajustement d'amplitude (32, 33), des moyens détecteurs de corrélation croisée (20), des moyens de décalage de phase (21, 22) et des moyens synthétiseurs de signaux (23) ; et dans lequel les moyens détecteurs d'autocorrélation sont connectés à la borne de sortie de chacun de ladite pluralité de moyens récepteurs afin de détecter une valeur d'autocorrélation d'un signal de sortie provenant de chacun de ladite pluralité de moyens récepteurs ;
les moyens détecteurs de corrélation croisée sont conçus pour détecter une valeur de corrélation croisée entre les signaux de sortie provenant de ladite pluralité de moyens récepteurs ;
les moyens de décalage de phase sont disposés au niveau de la borne de sortie de chacun de ladite pluralité de moyens récepteurs pour ajuster la phase du signal de sortie provenant de chacun de la pluralité de moyens récepteurs par une phase prédéterminée sur la base d'un résultat de détection desdits moyens détecteurs de corrélation croisée ;
les moyens d'ajustement d'amplitude sont disposés au niveau de la borne de sortie de chacun desdits moyens de décalage de phase pour ajuster l'amplitude d'un signal de sortie provenant de chacun desdits moyens de décalage de phase à une amplitude prédéterminée sur la base de résultat de détection desdits moyens détecteurs d'autocorrélation ; et
les moyens synthétiseurs de signaux sont conçus pour combiner les signaux ayant des phases ajustées par lesdits moyens de décalage de phase et des amplitudes ajustées par lesdits moyen d'ajustement d'amplitude pour obtenir un signal synthétisé.

5. Appareil de réception OFDM, comprenant :
une pluralité d'antennes (11a, 11b) disposées séparément, permettant de recevoir des signaux modulés OFDM ;
une pluralité de moyens récepteurs (12a, 12b), chacun desdits moyens récepteurs étant connecté à l'antenne correspondante ;
des moyens synthétiseurs de diversité (13D) permettant de combiner les signaux de sortie provenant de ladite pluralité de moyens récepteurs en un signal synthétisé ; et
des moyens démodulateurs OFDM (14),
**caractérisé en ce que** :
chaque moyen récepteur est agencé pour traiter les signaux délivrés par ladite pluralité d'antennes afin de les convertir en signaux de bande de base ; les moyens démodulateurs OFDM sont agencés pour extraire un signal symbole effectif en éliminant un signal d'intervalle de garde inséré lorsque le signal est modulé à partir du signal synthétisé délivré par lesdits moyens synthétiseurs de diversité ; les moyens synthétiseurs de diversité comprennent des moyens détecteurs d'autocorrélation (30, 31), des moyens d'ajustement d'amplitude (32, 33), des moyens détecteurs de corrélation croisée (20), des moyens de décalage de phase (21, 22) et des moyens synthétiseurs (23) ; et dans lequel les moyens détecteurs de corrélation croisée sont conçus pour détecter une valeur de corrélation croisée entre les signaux de sortie provenant de ladite pluralité de moyens récepteurs ;
les moyens de décalage de phase sont disposés au niveau de la borne de sortie de chacun de ladite pluralité des moyens récepteurs pour ajuster la phase du signal de sortie provenant de chacun de ladite pluralité de moyens récepteurs par une phase prédéterminée sur la base des résultats de détection desdits moyens détecteurs de corrélation croisée ;
les moyens détecteurs d'autocorrélation sont connectés à la borne de sortie de chacun desdits moyens de décalage de phase afin de détecter une valeur d'autocorrélation d'un signal de sortie provenant de chacun des moyens de décalage de phase ;
les moyens d'ajustement d'amplitude sont disposés au niveau de la borne de sortie de chacun desdits moyens de décalage de phase afin d'ajuster l'amplitude du signal de sortie provenant de chacun desdits moyens de décalage de phase à une amplitude prédéterminée sur la base d'un résultat de détection desdits moyens détecteurs d'autocorrélation ; et
les moyens synthétiseurs de signaux sont conçus pour combiner les signaux ayant des phases ajustées par lesdits moyens de décalage de phase et des amplitudes ajustées par lesdits moyens d'ajustement d'amplitude afin d'obtenir un signal synthétisé.

6. Appareil de réception OFDM selon l'une quelconque des revendications 1 à 5, dans lequel lesdits moyens détecteurs de corrélation croisée comprennent :
des moyens générateurs de signaux complexes/conjugués (160) permettant de générer un signal complexe/conjugué à partir de l'un des signaux délivrés auxdits moyens détecteurs de corrélation croisée et de délivrer le signal complexe/conjugué ;
des moyens multiplicateurs (161) permettant de multiplier le signal complexe/conjugué par l'autre signal délivré auxdits moyens détecteurs de corrélation croisée ;
des moyens cumulateurs (162) permettant de cumuler les résultats de multiplication desdits moyens multiplicateurs durant une période prédéterminée ;
des moyens calculateurs de phase permettant de réaliser un calcul de phase à partir d'un résultat cumulé desdits moyens cumulateurs ; et
des moyens calculateurs de coefficient de phase (141), permettant de déterminer les coefficients de phase à partir d'un résultat de calcul de phase desdits moyens calculateurs de phase.

7. Appareil de réception OFDM selon l'une quelconque des revendications 2 à 5, dans lequel lesdits moyens détecteurs d'autocorrélation comprennent :
des moyens de retard de période de symbole effectif (40), permettant de délivrer un signal de retard qui est délivré plus tard que le signal délivré auxdits moyens détecteurs d'autocorrélation, d'une période de symbole effectif ;
des moyens générateurs de signaux complexes/conjugués (41), permettant de générer un signal complexe/conjugué à partir du signal délivré auxdits moyens détecteurs d'autocorrélation et de délivrer le signal complexe/conjugué ;
des moyens multiplicateurs (42), permettant de multiplier le signal de retard délivré par lesdits moyens de retard de période de symbole effectif par le signal complexe/conjugué provenant desdits moyens générateurs de signaux complexes/conjugués ;
des moyens cumulateurs (43), permettant de cumuler les résultats de multiplication desdits moyens multiplicateurs sur une période prédéterminée ;
des moyens détecteurs d'autocorrélation maximale (44) permettant de détecter la valeur d'autocorrélation maximale à partir d'un résultat cumulé desdits moyens cumulateurs ; et
des moyens calculateurs de coefficient d'amplitude (45), permettant de déterminer un coefficient d'amplitude desdits moyens d'ajustement d'amplitude à partir d'un résultat de détection desdits moyens détecteurs d'autocorrélation maximale.

8. Appareil de réception OFDM selon la revendication 7, dans lequel lesdits moyens démodulateurs OFDM sont agencés pour extraire le signal symbole effectif en éliminant le signal d'intervalle de garde du signal synthétisé desdits moyens synthétiseurs de diversité sur la base du moment auquel la valeur d'autocorrélation maximale est détectée parmi les valeurs d'autocorrélation maximales détectées dans ladite pluralité de moyens détecteurs d'autocorrélation.
